(19) **Europäisches Patentamt / European Patent Office / Office européen des brevets**

(11) **EP 4 783 415 A1**

(12) **EUROPEAN PATENT APPLICATION**
published in accordance with Art. 153(4) EPC

(43) Date of publication:
**29.07.2026 Bulletin 2026/31**

(21) Application number: **24868034.0**

(22) Date of filing: **26.08.2024**

(51) International Patent Classification (IPC):
**H02J 50/20** (2016.01)    **H02J 7/00** (2026.01)
**H02M 7/06** (2006.01)

(52) Cooperative Patent Classification (CPC):
**H02J 7/00; H02J 50/20; H02M 7/06**

(86) International application number:
**PCT/JP2024/030220**

(87) International publication number:
**WO 2025/062954 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.09.2023  JP 2023157478
30.01.2024  JP 2024012149**

(71) Applicant: **Sony Semiconductor Solutions
Corporation
Atsugi-shi, Kanagawa 243-0014 (JP)**

(72) Inventors:
• **YOSHINO, Yoshitaka
  Atsugi-shi, Kanagawa 243-0014 (JP)**
• **YOSHIDA, Toshikazu
  Atsugi-shi, Kanagawa 243-0014 (JP)**

(74) Representative: **D Young & Co LLP
3 Noble Street
London EC2V 7BQ (GB)**

(54) **POWER GENERATION DEVICE AND ELECTRICAL APPARATUS**

(57) A power generation apparatus according to an embodiment of the present technology includes a transmission unit and a rectification circuit. The transmission unit is connected to at least one heat dissipation plate directly or via capacitive coupling, the at least one heat dissipation plate being provided in electrical equipment and having a potential different from a potential of a GND of the electrical equipment, the transmission unit being used to transmit AC power of electromagnetic noise generated in the at least one heat dissipation plate. The rectification circuit rectifies the AC power transmitted using the transmission unit and outputs DC power.

FIG.1

EP 4 783 415 A1

## Description

Technical Field

The present disclosure relates to a power generation apparatus and electrical equipment applicable to energy harvesting or the like.

Background Art

In recent years, apparatuses that perform energy harvesting to harvest power from personal belongings have been developed. For example, Patent Literature 1 describes an antenna device that harvests power from metal parts of industrial products. This antenna device harvests electric-field energy induced in metal parts as power, using the metal parts provided in industrial products such as various electrical equipment or metal racks as antennas. According to this method, it is possible to harvest electric-field energy including low-frequency components referred to as quasi-electrostatic fields and high-frequency components such as electromagnetic waves propagating through space (paragraphs [0011], [0014], [0032], and [0033], Figs. 1 and 13, and the like in Patent Literature 1)).

Citation List

Patent Literature

Patent Literature 1: WO 2021/261076

Disclosure of Invention

Technical Problem

Because electrical equipment operates using power supplied from a power supply and generates electric-field energy such as electromagnetic noise by itself, it is expected to serve as a power source that realizes highly efficient energy harvesting. Therefore, technologies capable of efficiently harvesting power from electrical equipment have been demanded.

In view of the above circumstances, the present technology has an object of providing a power generation apparatus and electrical equipment capable of efficiently harvesting power from electrical equipment.

Solution to Problem

In order to achieve the above object, a power generation apparatus according to an embodiment of the present technology includes a transmission unit and a rectification circuit.

The transmission unit is connected to at least one heat dissipation plate directly or via capacitive coupling, the at least one heat dissipation plate being provided in electrical equipment and having a potential different from a potential of a GND of the electrical equipment, the transmission unit being used to transmit AC power of electromagnetic noise generated in the at least one heat dissipation plate.

The rectification circuit rectifies the AC power transmitted using the transmission unit and outputs DC power.

In this power generation apparatus, AC power of electromagnetic noise generated in the heat dissipation plate having a potential different from the potential of the GND of the electrical equipment is transmitted to the rectification circuit by the transmission unit and output as DC power. By utilizing the heat dissipation plate in the manner described above, power can be efficiently harvested from the electrical equipment.

The power generation apparatus may further include a high-pass filter provided between the heat dissipation plate connected to the transmission unit and the GND of the electrical equipment.

The high-pass filter may allow an AC component in a frequency band to pass through the high-pass filter, the frequency band being higher than a frequency band rectified by the rectification circuit.

The rectification circuit may have a pair of input terminals. In this case, the transmission unit may connect the heat dissipation plates different from each other to respective input terminals of the pair of input terminals, or may connect the heat dissipation plate to one of the pair of input terminals.

The transmission unit may electrically connect the input terminal and the heat dissipation plate.

The power generation apparatus may further include a high-pass filter provided between the heat dissipation plate connected to the transmission unit and the GND of the electrical equipment. In this case, the transmission unit may connect the heat dissipation plates different from each other to the respective input terminals of the pair of input terminals. Furthermore, the high-pass filter may be provided on at least one of the heat dissipation plates connected to the input terminals of the pair of input terminals.

The transmission unit may connect the heat dissipation plate to the one of the pair of input terminals, and may connect the GND of the electrical equipment to another of the pair of input terminals directly or via a capacitor.

The electrical equipment may have a primary-side circuit to which power is supplied from a specified power supply and a secondary-side circuit electrically isolated from the primary-side circuit. In this case, the at least one heat dissipation plate may be provided in the primary-side circuit. Furthermore, the rectification circuit may be provided in the secondary-side circuit.

The transmission unit may have a transformer and may connect the input terminal and the heat dissipation plate via the transformer.

The power generation apparatus may further include a high-pass filter provided between the heat dissipation plates connected to the transmission unit and the GND of the electrical equipment. In this case, the transmission unit may connect the heat dissipation plates different from each other to the respective input terminals of the pair of input terminals. Furthermore, the high-pass filter may be provided on one of the heat dissipation plates connected to the input terminals of the pair of input terminals.

The transmission unit may connect the heat dissipation plate to the one of the pair of input terminals, and may connect the GND of the electrical equipment to another of the pair of input terminals via a capacitor.

The transmission unit may have an insulating sheet arranged in contact with the heat dissipation plate and a conductive sheet connected to the heat dissipation plate via capacitive coupling through the insulating sheet. In this case, the input terminal may be connected to the conductive sheet.

The at least one heat dissipation plate may include a plurality of the heat dissipation plates. In this case, the transmission unit may have a conductive member that electrically connects two or more of the plurality of the heat dissipation plates, and may connect, to the input terminals, the two or more of the plurality of the heat dissipation plates that are connected by the conductive member.

The power generation apparatus may further include a storage unit that has a storage element that stores therein the DC power output from the rectification circuit, the storage unit controlling charging or discharging of the storage element depending on a state of charging of the storage element.

The storage element may be a battery. In this case, the storage unit may have a charging control unit that is provided between the battery and the rectification circuit, the charging control unit charging the battery depending on a state of charging of the battery.

The storage element may be a battery. In this case, the storage unit may have a first switch element provided between the battery and the rectification circuit, and a first switching control unit that turns off the first switch element when a voltage of the battery reaches a first threshold voltage or higher.

The storage element may be a capacitor. In this case, the storage unit may have a second switch element provided between the capacitor and a load to which power is supplied from the capacitor, and a second switching control unit that turns on the second switch element when a voltage of the capacitor reaches a second threshold voltage or higher.

The power generation apparatus may further include the at least one heat dissipation plate.

The electrical equipment may be industrial equipment.

Electrical equipment according to an embodiment of the present technology includes at least one heat dissipation plate and a power generation apparatus.

The at least one heat dissipation plate has a potential different from a potential of a GND.

The power generation apparatus includes a transmission unit that is connected to the at least one heat dissipation plate directly or via capacitive coupling, the transmission unit being used to transmit AC power of electromagnetic noise generated in the at least one heat dissipation plate, and a rectification circuit that rectifies the AC power transmitted using the transmission unit and that outputs DC power.

A power generation apparatus according to an embodiment of the present technology includes a transmission unit and a rectification circuit.

The transmission unit is connected to at least one metal body directly or via capacitive coupling, the at least one metal body being provided in electrical equipment and having a potential different from a potential of an earth GND, the transmission unit being used to transmit AC power of electromagnetic noise generated in the at least one metal body.

The rectification circuit rectifies the AC power transmitted using the transmission unit and outputs DC power.

The rectification circuit may have a pair of input terminals. In this case, the at least one metal body may include at least one of a first metal body provided in first electrical equipment, or a second metal body provided in second equipment different from the first equipment. Furthermore, the transmission unit may connect the first metal body to one of the pair of input terminals, and may connect the second metal body to another of the pair of input terminals.

Each of the first electrical equipment and the second electrical equipment may include a noise source that generates the electromagnetic noise.

The transmission unit may connect the first metal body and the second metal body to the respective input terminals of the pair of input terminals via a signal cable that connects the first electrical equipment and the second electrical equipment.

The transmission unit may connect the first metal body and the second metal body to the respective input terminals of the pair of input terminals via a GND line of the signal cable.

The power generation apparatus may be one of a cable unit including the signal cable, a relay unit that relays the signal cable, and a connector unit to which the signal cable is connected in the electrical equipment.

The power generation apparatus may be provided in third electrical equipment to which the first electrical equipment is connected via a first signal cable and to which the second electrical equipment is connected via a second signal cable. In this case, the transmission unit may connect the first metal body to the one of the pair of input terminals via the first signal cable, and may connect the second metal body to the other of the pair of input terminals via the second signal cable.

The transmission unit may have a first transmission line connected to the first metal body, a second transmission line connected to the second metal body, and an inductor element provided between the first and second transmission lines.

A Q-value of the inductor element in a frequency band serving as a harvesting target may be set to 10 or more.

The at least one metal body may include a heat dissipation plate being provided in the electrical equipment and having a potential different from a potential of a GND of the electrical equipment.

The power generation apparatus may further include a storage element that stores therein the DC power output from the rectification circuit; and a selection switch that performs switching on the storage element and a power supply unit provided in the electrical equipment to connect one of the storage element and the power supply unit to a load.

The selection switch may connect the storage element to the load when a voltage of the storage element reaches a specified voltage or when a specified signal is output from the electrical equipment.

Brief Description of Drawings

[Fig. 1] Fig. 1 is a schematic diagram showing a configuration example of a power generation apparatus according to a first embodiment of the present technology.

[Fig. 2] Fig. 2 is a block diagram showing a functional configuration example of the power generation apparatus 100 shown in Fig. 1.

[Fig. 3] Fig. 3 is a schematic diagram showing, as a comparative example, an example of measures against noise in a heat dissipation plate.

[Fig. 4] Fig. 4 is a schematic diagram showing, as a comparative example, another example of measures against noise in a heat dissipation plate.

[Fig. 5] Fig. 5 is a schematic diagram showing connection examples of a heat dissipation plate used in the power generation apparatus.

[Fig. 6] Fig. 6 is a schematic diagram showing an example of a high-pass filter.

[Fig. 7] Fig. 7 is a graph showing the frequency characteristics of a transmission line with the high-pass filter shown in Fig. 6.

[Fig. 8] Fig. 8 is a schematic diagram showing another example of the high-pass filter.

[Fig. 9] Fig. 9 is a schematic diagram showing another configuration example of the power generation apparatus according to the present embodiment.

[Fig. 10] Fig. 10 is a schematic diagram showing another configuration example of the power generation apparatus according to the present embodiment.

[Fig. 11] Fig. 11 is a schematic diagram showing another configuration example of the power generation apparatus according to the present embodiment.

[Fig. 12] Fig. 12 is a schematic diagram showing another configuration example of the power generation apparatus according to the present embodiment.

[Fig. 13] Fig. 13 is a circuit diagram showing a configuration example of a rectification circuit.

[Fig. 14] Fig. 14 is a graph illustrating the characteristics of the diodes in the rectification circuit.

[Fig. 15] Fig. 15 is a table illustrating the characteristics of the diodes in the rectification circuit.

[Fig. 16] Fig. 16 is a schematic circuit diagram showing a configuration example of a storage unit.

[Fig. 17] Fig. 17 is a schematic circuit diagram showing another configuration example of the storage unit.

[Fig. 18] Fig. 18 is a schematic circuit diagram showing another configuration example of the storage unit.

[Fig. 19] Fig. 19 is a schematic diagram showing a configuration example of a power generation apparatus according to a second embodiment.

[Fig. 20] Fig. 20 is a block diagram showing a functional configuration example of the power generation apparatus shown in Fig. 19.

[Fig. 21] Fig. 21 is a schematic diagram showing a configuration example of a power supply substrate including a primary-side circuit and a secondary-side circuit.

[Fig. 22] Fig. 22 is a schematic diagram showing another configuration example of the power generation apparatus according to the present embodiment.

[Fig. 23] Fig. 23 is a schematic diagram showing another configuration example of the power generation apparatus according to the present embodiment.

[Fig. 24] Fig. 24 is a graph showing the charging characteristics of a battery according to the power generation apparatus.

[Fig. 25] Fig. 25 is a graph showing the discharging characteristics of the battery according to the power generation apparatus.

[Fig. 26] Fig. 26 is a schematic diagram showing an application example of the power generation apparatus.

[Fig. 27] Fig. 27 is a schematic diagram showing a configuration example of a power generation apparatus according to a third embodiment.

[Fig. 28] Fig. 28 is a set of graphs showing the noise characteristics of heat dissipation plates provided in the primary-side circuit.

[Fig. 29] Fig. 29 is a schematic diagram showing the circuit configuration of a power generation apparatus that uses the heat dissipation plate in the primary-side circuit.

[Fig. 30] Fig. 30 is a graph showing the discharging characteristics of a battery charged using the power generation apparatus shown in Fig. 29.

[Fig. 31] Fig. 31 is a schematic diagram showing the circuit configuration of a power generation apparatus in which the impedance matching is adjusted.

[Fig. 32] Fig. 32 is a graph showing the discharging characteristics of the battery charged using the power generation apparatus shown in Fig. 31.

[Fig. 33] Fig. 33 is a schematic diagram showing the circuit configuration of a power generation apparatus that harvests power from two heat dissipation plates.

[Fig. 34] Fig. 34 is a graph showing the discharging characteristics of the battery charged using the power generation apparatus shown in Fig. 33.

[Fig. 35] Fig. 35 is a schematic diagram showing a configuration example of a power generation apparatus that utilizes metal bodies provided in electrical equipment.

[Fig. 36] Fig. 36 is a schematic diagram showing a configuration example of a power generation apparatus that utilizes a signal cable.

[Fig. 37] Fig. 37 is a schematic diagram showing another configuration example of a power generation apparatus that utilizes a signal cable.

[Fig. 38] Fig. 38 is a schematic diagram showing another configuration example of a power generation apparatus that utilizes a signal cable.

[Fig. 39] Fig. 39 is a schematic diagram showing a configuration example of a power generation apparatus in which an inductor element is provided between transmission lines.

[Fig. 40] Fig. 40 is a schematic diagram showing a measurement example of the amount of harvested power corresponding to the Q-value of the inductor element.

[Fig. 41] Fig. 41 is a table showing an example of the frequency characteristics of the Q-value of the inductor.

[Fig. 42] Fig. 42 shows the measurement results of the amount of harvested power corresponding to the Q-value of the inductor element.

[Fig. 43] Fig. 43 is a schematic diagram showing a configuration example of a power generation apparatus that utilizes a power cable.

[Fig. 44] Fig. 44 is a schematic diagram showing a configuration example of a power cable unit including the power generation apparatus.

[Fig. 45] Fig. 45 is a block diagram showing another configuration example of a power generation apparatus.

[Fig. 46] Fig. 46 is a flowchart showing an example of a power supply operation using the storage element of the power generation apparatus.

[Fig. 47] Fig. 47 is a flowchart showing another example of the power supply operation using the storage element of the power generation apparatus.

Mode(s) for Carrying Out the Invention

Hereinafter, embodiments of the present technology will be described with reference to the drawings.

[Power Generation Apparatus]

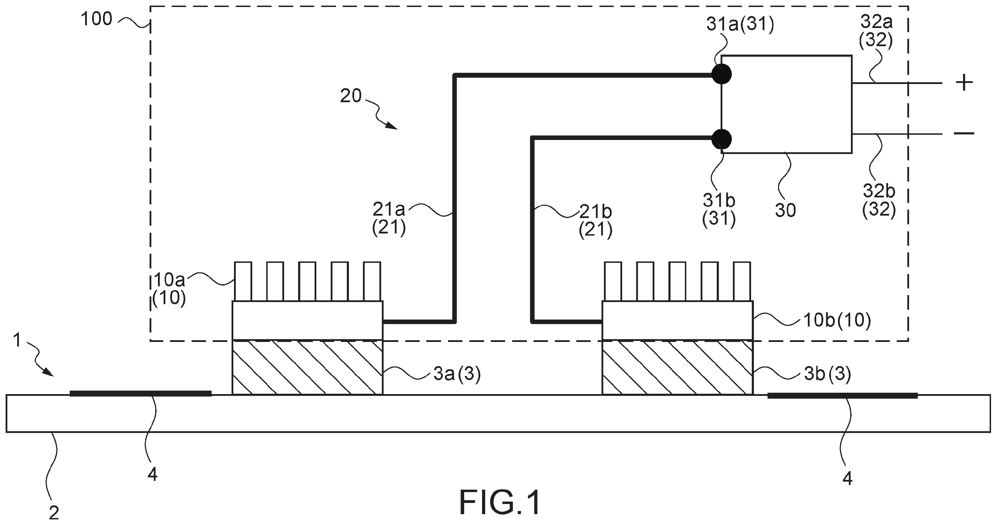

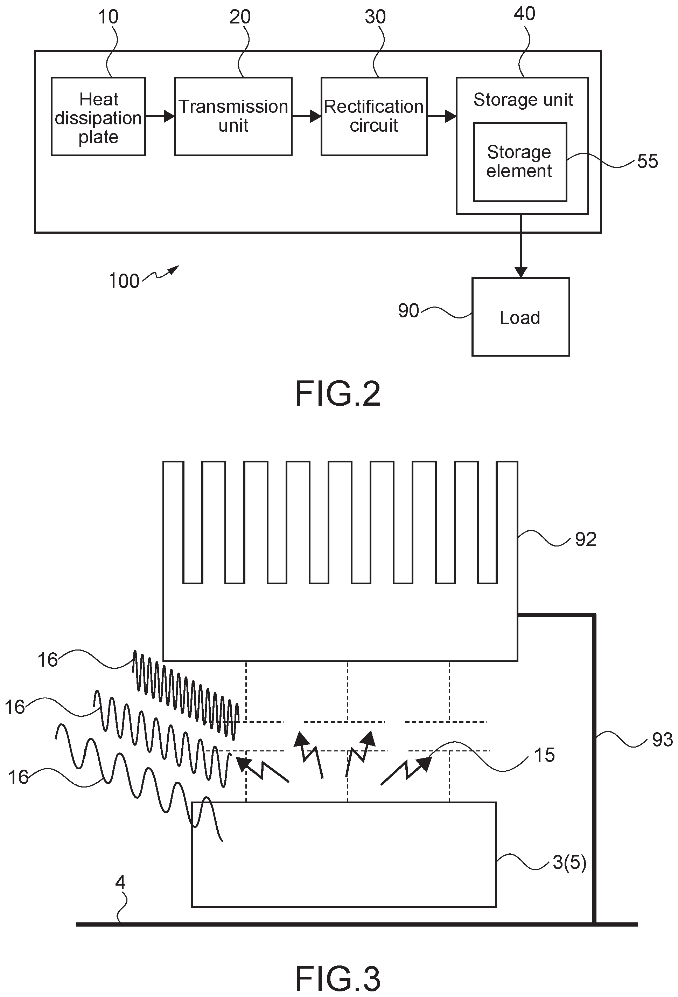

Fig. 1 is a schematic diagram showing a configuration example of a power generation apparatus according to a first embodiment of the present technology. Fig. 2 is a block diagram showing a functional configuration example of the power generation apparatus 100 shown in Fig. 1. The power generation apparatus 100 is an apparatus that harvests power from a heat dissipation plate 10 provided in electrical equipment 1.

The electrical equipment 1 refers, for example, to equipment that operates using power supplied from an external power supply, a battery, or the like. In Fig. 1, a circuit substrate 2 included in the electrical equipment 1 is schematically shown. Various semiconductor elements 3 are mounted on the circuit substrate 2. Furthermore, a ground pattern 4 serving as the GND of the electrical equipment 1 is also formed on the circuit substrate 2.

The semiconductor element 3, such as a transistor or a CPU used in the electrical equipment 1, may be damaged by its heat if it is not cooled during operation. Therefore, heat dissipation of the semiconductor element 3 is performed using the heat dissipation plate 10 (heat sink) inside the electrical equipment 1. The semiconductor element 3 generates various electromagnetic noise while generating heat during operation (see Fig. 3).

Therefore, the heat dissipation plate 10 receives the electromagnetic noise released from the semiconductor element 3. The power generation apparatus 100 according to the present disclosure efficiently converts such electromagnetic noise generated in the heat dissipation plate 10 into electricity. That is, the power generation apparatus 100 can be regarded as an apparatus that realizes energy harvesting mainly targeting electromagnetic noise.

As shown in Figs. 1 and 2, the power generation apparatus 100 has the heat dissipation plate 10, a transmission unit 20, a rectification circuit 30, and a storage unit 40. Furthermore, the power generation apparatus 100 is configured to supply power to a load 90 provided on the output side. Note that the storage unit 40 is not shown in Fig. 1.

The heat dissipation plate 10 is a member that is provided in close contact or in contact with the semiconductor element 3 inside the electrical equipment 1 and releases the heat generated from the semiconductor element 3 into the surrounding space to cool the semiconductor element 3. The heat dissipation plate 10 is typically made of a material having high conductivity, such as a metallic material.

The heat dissipation plate 10 and the semiconductor element 3 are in close contact or in contact with each other while being basically insulated. As a method for bringing the heat dissipation plate 10 in close contact with the semiconductor element 3, bonding, screwing, spring fixing, or the like can be, for example, used. Furthermore, using the circuit substrate 2 of the electrical equipment 1 as a support member, the heat dissipation plate 10 and the semiconductor element 3 may be fixed so as to be brought into close contact with each other. In addition, the method for bringing the heat dissipation plate 10 and the semiconductor element 3 into close contact with or in contact with each other is not limited.

In the present embodiment, the material of the heat dissipation plate 10 includes at least one of aluminum, copper, iron, or tin. For example, by using aluminum, it is possible to reduce the weight of the heat dissipation plate 10. Furthermore, by using copper, it is possible to increase the thermal conductivity of the heat dissipation plate 10 and to improve cooling efficiency. Furthermore, by using the heat dissipation plate 10 formed by plating an iron material with tin, it is possible to easily perform soldering or the like on the heat dissipation plate 10. In addition, the material of the heat dissipation plate 10 is not limited.

In the power generation apparatus 100 according to the present disclosure, at least one heat dissipation plate 10 having a potential different from a potential of the GND (ground pattern 4) of the electrical equipment 1 is used. That is, the heat dissipation plate 10 used in the power generation apparatus 100 is not short-circuited to the ground pattern 4 and is configured not to have substantially the same potential as the GND potential of the ground pattern 4.

In the power generation apparatus 100 shown in Fig. 1, two semiconductor elements 3 are mounted on the circuit substrate 2 of the electrical equipment 1, and the metal heat dissipation plate 10 is provided in each semiconductor element 3 in close contact with the semiconductor element 3. Note that each heat dissipation plate 10 is not short-circuited to the GND of the electrical equipment (such as the ground pattern 4 of the circuit substrate 2) and is configured to be provided in an electrically floating state. Hereinafter, the semiconductor element 3 on the left side of the figure will be described as a first semiconductor element 3a, and the heat dissipation plate 10 provided in the first semiconductor element 3a will be referred to as a first heat dissipation plate 10a. Furthermore, the semiconductor element 3 on the right side of the figure will be referred to as a second semiconductor element 3b, and the heat dissipation plate 10 provided in the second semiconductor element 3b will be referred to as a second heat dissipation plate 10b.

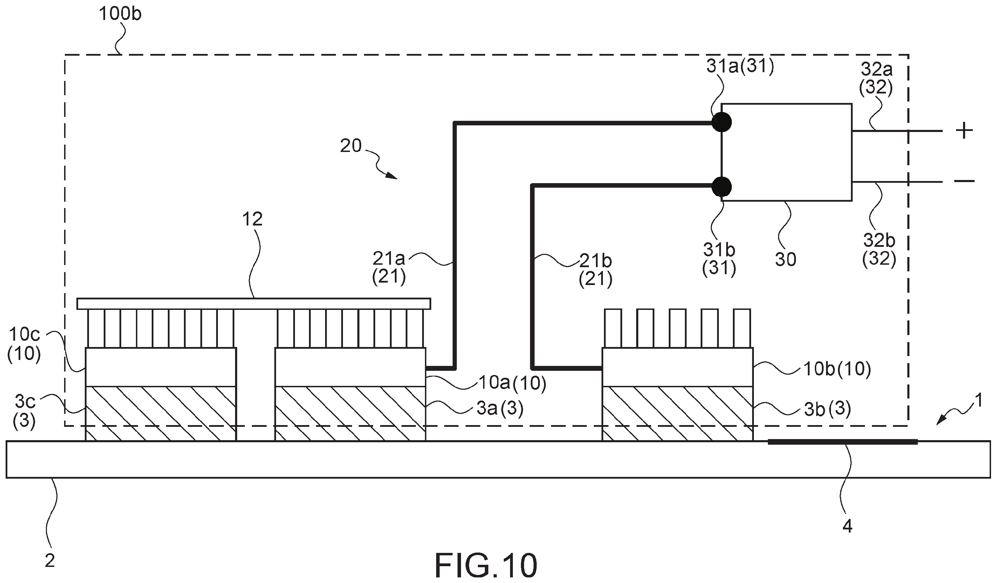

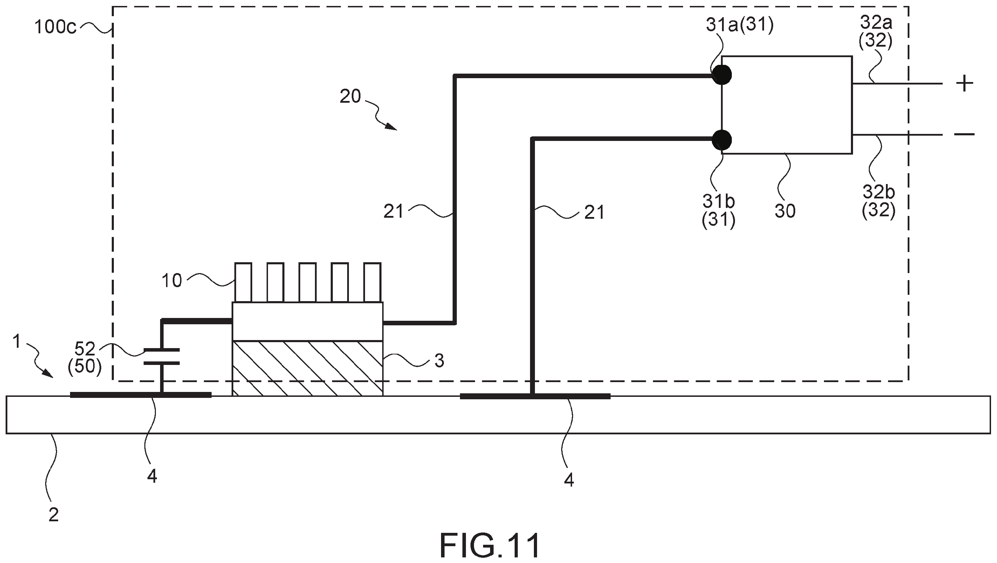

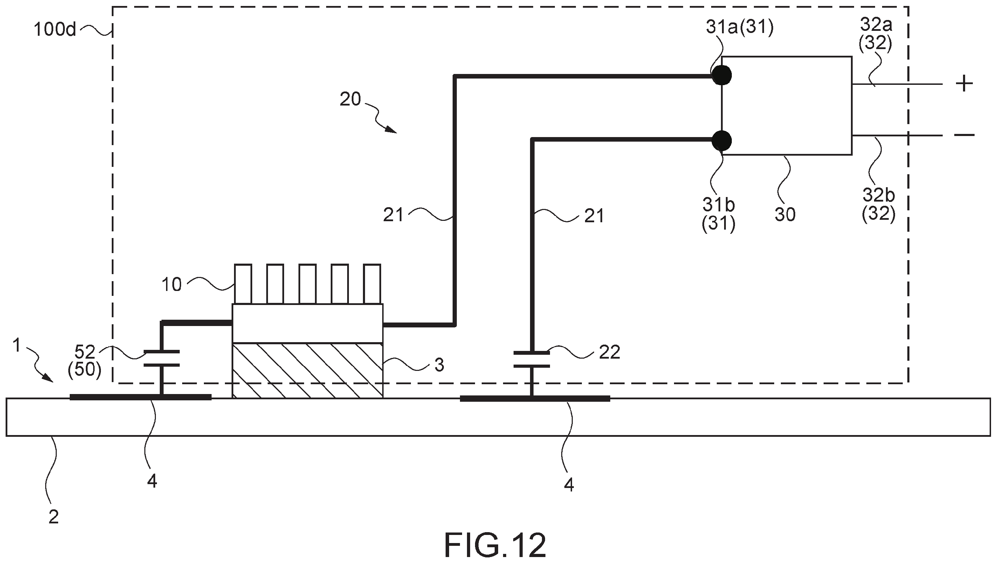

Note that the number of heat dissipation plates 10 used in the power generation apparatus 100 is not limited. For example, the power generation apparatus 100 may be configured using a single heat dissipation plate 10 (see Figs. 11 and 12 and the like). Furthermore, the power generation apparatus 100 may be configured using three or more heat dissipation plates 10 (see Fig. 10). In any case, the heat dissipation plates 10 included in the power generation apparatus 100 are configured to have potentials different from the potential of the ground pattern 4. Note that heat dissipation plates 10 short-circuited to the ground pattern 4 may be provided in the electrical equipment 1, provided that they are not used as the power generation apparatus 100.

The transmission unit 20 is directly connected to at least one heat dissipation plate 10 and is used to transmit AC power of the electromagnetic noise generated in the at least one heat dissipation plate 10. In the present embodiment, the transmission unit 20 is configured to have a transmission line 21 used to transmit AC power of the electromagnetic noise, one end of the transmission line 21 being electrically connected to the heat dissipation plate 10. Furthermore, the other end of the transmission line 21 is connected to an input terminal 31 of the rectification circuit 30.

The transmission line 21 may be, for example, a wiring pattern formed on the circuit substrate 2 of the electrical equipment 1, or a connection cable formed separately from the circuit substrate 2. Furthermore, the transmission line 21 may be configured using both a wiring pattern and a connection cable in combination. A method for directly connecting the transmission line 21 to the heat dissipation plate 10 is not limited. For example, a wiring pattern or a connection cable is connected to the heat dissipation plate 10 by soldering. Furthermore, when a connection cable is connected, a terminal for screwing, a terminal using a plate spring or the like, a pressure terminal, or the like is used. Furthermore, a conductive pin protruding from the heat dissipation plate 10 may be directly connected to a wiring pattern formed on the circuit substrate 2.

As will be described later, the rectification circuit 30 is provided with a pair of input terminals 31 (a first input terminal 31a and a second input terminal 31b). The input terminals 31 and the heat dissipation plates 10 are electrically connected to each other via the transmission lines 21. In the present embodiment, the transmission unit 20 connects different heat dissipation plates 10 to the respective input terminals 31 of the pair of input terminals 31. That is, the heat dissipation plate 10 connected to one input terminal 31 differs from the heat dissipation plate 10 connected to the other input terminal 31. This enables the AC power separately generated in each heat dissipation plate 10 to be supplied to the rectification circuit 30, thereby enabling a sufficient increase in power harvesting efficiency.

In Fig. 1, the pair of input terminals 31 of the rectification circuit 30 is connected, via the transmission lines 21, to the two heat dissipation plates 10 that float from the GND of the electrical equipment 1. Specifically, the first input terminal 31a is connected to the first heat dissipation plate 10a via a first transmission line 21a, and the second input terminal 31b is connected to the second heat dissipation plate 10b via a second transmission line 21b. Of these, the first transmission line 21a and the second transmission line 21b are included in the transmission unit 20. Note that the configuration is not limited to connecting the heat dissipation plate 10 to each of the pair of input terminals 31, but it is also possible to connect the heat dissipation plate 10 to one of the pair of input terminals 31 (see Figs. 11, 12, and the like).

The rectification circuit 30 rectifies the AC power transmitted using the transmission unit 20 and outputs DC power. As shown in Fig. 1, the rectification circuit 30 has the pair of input terminals 31 and a pair of output terminals 32. The pair of input terminals 31 include the first input terminal 31a and the second input terminal 31b. The first input terminal 31a and the second input terminal 31b have no functional distinction. Furthermore, the pair of output terminals 32 include a first output terminal 32a and a second output terminal 32b. Here, the first output terminal 32a outputs a positive voltage, while the second output terminal 32b is connected to a reference potential (e.g., GND potential). The specific configuration of the rectification circuit 30 will be described in detail later.

As shown in Fig. 2, the storage unit 40 has a storage element 55 that stores therein the DC power output from the rectification circuit 30, and supplies power from the storage element 55 to a circuit that serves as the load 90 provided on an output side of the storage unit 40. A capacitor or a battery is used as the storage element 55. Note that the specific configuration of the storage element 55 is not limited, and any element capable of storing power can be used as the storage element 55.

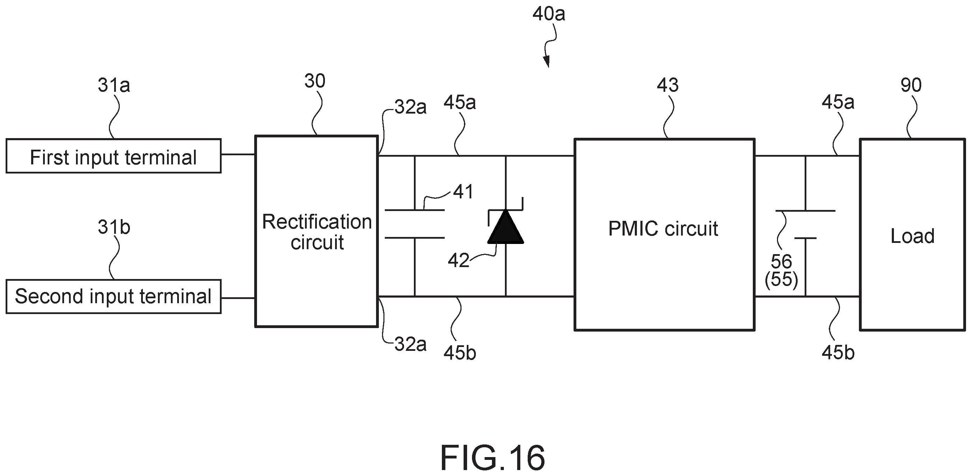

Furthermore, in the storage unit 40, charging of the storage element 55 is controlled depending on the state of charge of the storage element 55. As a result, appropriate charging of the storage element 55 is enabled. Alternatively, the storage unit 40 may be configured to control discharging of the storage element 55 depending on the state of charge of the storage element 55. As a result, appropriate power supply depending on the state of charge is enabled. The configuration of the storage unit 40 will be described later with reference to Figs. 16, 17, 18, and the like.

As described above, the heat dissipation plates 10 used in the power generation apparatus 100 are configured to have potentials different from the potential of the GND of the electrical equipment 1. Therefore, the heat dissipation plates 10 themselves function as antennas that receive the electromagnetic noise from the semiconductor elements 3. Accordingly, the power generation apparatus 100 has a structure in which the heat dissipation plates 10 included in antennas are connected to the rectification circuit 30 via the transmission unit 20.

The electromagnetic noise received by the heat dissipation plate 10 serving as an antenna has an AC component, but the energy of the electromagnetic noise is output as DC power when the noise passes through the rectification circuit 30. The DC power output from the rectification circuit 30 is stored in the storage element 55 of the storage unit 40. As described above, by causing the heat dissipation plates 10 to function as an antenna, it is possible to directly harvest the electromagnetic noise generated in the heat dissipation plate 10 and convert the noise into power.

Furthermore, in the example shown in Fig. 1, both the first heat dissipation plate 10a and the second heat dissipation plate 10b function as antennas, and the electromagnetic noise generated in both the heat dissipation plates 10 can be harvested as power. As a result, the power that can be harvested significantly increases compared, for example, to harvesting power between one heat dissipation plate 10 and the GND of the electrical equipment 1. As described above, in the present technology, the heat dissipation plates 10 functioning as antennas can be connected to both the pair of input terminals 31 of the rectification circuit 30, thereby enabling efficient power harvesting.

Here, the circuit configuration of the electrical equipment 1 will be described. The electrical equipment 1 has a primary-side circuit to which power is supplied from a specified power supply and a secondary-side circuit electrically isolated from the primary-side circuit. For example, the primary-side circuit is a circuit that is connected to a power supply line, such as a commercial power supply, and adjusts the power supplied from the power supply line to power for operating the electrical equipment 1. Furthermore, the secondary-side circuit is a circuit that operates the electrical equipment 1 using the power adjusted by the primary-side circuit.

Such a primary-side circuit and a secondary-side circuit are configured to be electrically isolated from each other in accordance with safe standards. Therefore, power transfer or GND connection between the primary-side circuit and the secondary-side circuit is performed via a transformer.

In the present embodiment, the transmission unit 20 is configured to electrically connect the input terminals 31 of the rectification circuit 30 and the heat dissipation plates 10. That is, the heat dissipation plates 10 and the rectification circuit 30 are not electrically isolated from each other and are not connected to each other via a transformer. In order to achieve such a configuration, the heat dissipation plates 10 and the rectification circuit 30 are each provided on the same side of the primary-side circuit or the secondary-side circuit.

For example, when the heat dissipation plates 10 brought into close contact with the semiconductor elements 3 provided in the secondary-side circuit are used, the rectification circuit 30 and the storage unit 40 on an output side of the rectification circuit 30 are provided in the secondary-side circuit. Furthermore, when the heat dissipation plates 10 are present in the primary-side circuit, the rectification circuit 30 and the storage unit 40 are also provided in the primary-side circuit. As a result, efficient and safe energy harvesting can be realized.

[Measures against Typical Electromagnetic Noise]

Fig. 3 is a schematic diagram showing, as a comparative example, an example of measures against noise in a heat dissipation plate. In Fig. 3, a semiconductor element 3 and a heat dissipation plate 92 designed to take measures against noise are schematically shown. As described above, the semiconductor element 3 and the heat dissipation plate 92 are brought into close contact with each other by an adhesive or screwing. At this time, the semiconductor element 3 and the heat dissipation plate 92 are electrically isolated (insulated) from each other so that a wiring line or the like of the semiconductor element 3 is not short-circuited to the heat dissipation plate 92. Therefore, both the semiconductor element 3 and the heat dissipation plate 92 are connected via capacitive coupling. In Fig. 3, an imaginary capacitor representing the capacitive coupling between the semiconductor element 3 and the heat dissipation plate 92 is schematically shown.

Here, as an example of the semiconductor element 3, a switching transistor 5 that converts a voltage will be described. Inside the electrical equipment 1, the switching transistor 5 (semiconductor element 3) converting a supplied voltage into a voltage used in equipment, generates heat through switching to create a desired voltage. The heat 15 (indicated by broken-line arrows in the figure) generated by the switching transistor 5 is dissipated through close contact with the heat dissipation plate 92.

Furthermore, electromagnetic noise 16 at various frequencies is generated from the switching transistor 5 through switching. For example, it is known that noise components such as switching-cycle-related noise, ripple noise, or spike noise are generated, and electromagnetic waves (wavy lines of different cycles in the figure) are emitted from the switching transistor 5 as the electromagnetic noise 16. The electromagnetic noise 16 is received by the heat dissipation plate 92 brought into close contact with the switching transistor 5. Therefore, the electromagnetic noise 16 containing various frequency components is generated in the heat dissipation plate 92.

As measures against such electromagnetic noise 16, it is typically assumed to connect the heat dissipation plate 92 to the GND (ground pattern 4) of the electrical equipment 1 to release the electromagnetic noise 16. In the example shown in Fig. 3, the heat dissipation plate 92 and the ground pattern are electrically connected by a short-circuit line 93. As a result, the AC electromagnetic noise 16 generated in the heat dissipation plate 92 directly flows into the ground pattern 4 via the short-circuit line 93, and the energy of the electromagnetic noise 16 is absorbed by the GND of the electrical equipment 1.

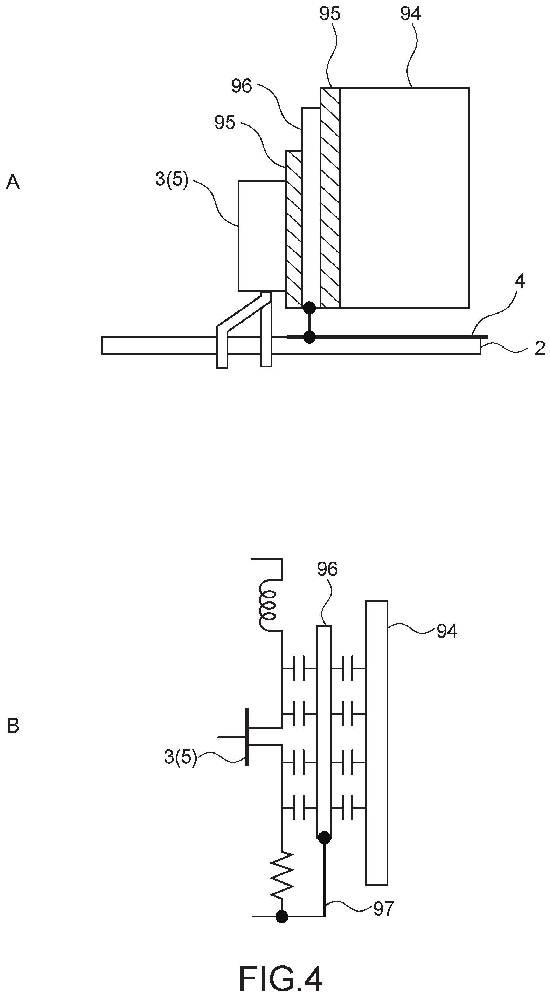

Fig. 4 is a schematic diagram showing, as a comparative example, another example of measures against noise in a heat dissipation plate. Here, a method for releasing the electromagnetic noise 16 to the GND by utilizing a shield plate 96 will be described. A of Fig. 4 is a schematic diagram showing a connection example of the semiconductor element 3 (switching transistor 5) and a heat dissipation plate 94 designed to take measures against noise, and B of Fig. 4 is a circuit diagram of the configuration shown in A of Fig. 4.

The shield plate 96 is a conductive plate (typically a metal plate) that shields the electromagnetic noise 16. As shown in A of Fig. 4, the shield plate 96 sandwiched between insulating members 95 is provided between the semiconductor element 3 and the heat dissipation plate 94. Accordingly, as shown in B of Fig. 4, both the connection between the semiconductor element 3 and the shield plate 96 and the connection between the shield plate 96 and the heat dissipation plate 94 are capacitive couplings. Furthermore, the shield plate 96 is connected to the GND (ground pattern 4) of the electrical equipment 1, thereby forming a noise return circuit 97 as shown in B of Fig. 4.

As a result, the shield plate 96 has the same potential as that of the ground pattern 4 and functions as an electromagnetic shield. This suppresses the generation of the electromagnetic noise 16 in the heat dissipation plate 94. Note that in Figs. 4A and 4B, the heat dissipation plate 94 may be connected to the ground pattern 4 to release the electromagnetic noise 16. As a result, in addition to the effect of the shield plate 96, the electromagnetic noise 16 generated in the heat dissipation plate 94 is sufficiently suppressed.

Typically, by taking measures against noise as shown in Figs. 3 and 4 as described above, the electromagnetic noise 16 generated in the semiconductor element 3 such as a switching transistor is returned to the GND (ground pattern 4) of the electrical equipment 1. In this case, the energy of the electromagnetic noise 16 is released to the GND and is not harvested from the heat dissipation plate 92 or the heat dissipation plate 94.

[Harvesting Electromagnetic Noise]

In contrast, the power generation apparatus 100 according to the present disclosure does not return the energy of the electromagnetic noise 16 generated in the semiconductor element 3 to the GND (ground pattern 4) of the electrical equipment but converts it into power to be utilized again.

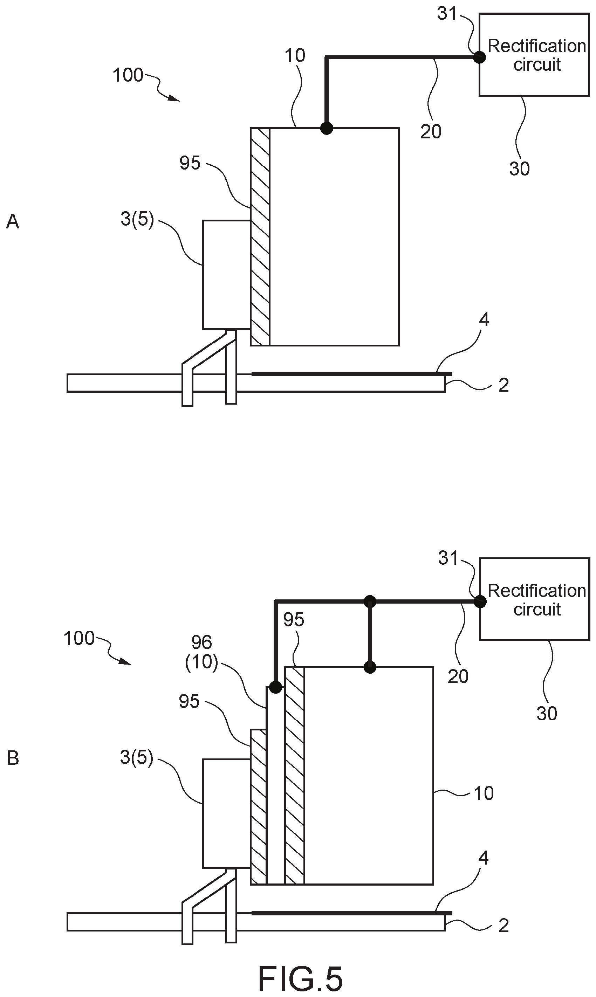

Fig. 5 is a schematic diagram showing connection examples of the heat dissipation plate 10 used in the power generation apparatus 100. A of Fig. 5 illustrates a connection example in which the heat dissipation plate 10 is brought into close contact with the semiconductor element 3 without providing the shield plate 96, whereas B of Fig. 5 shows a connection example in which the heat dissipation plate 10 is brought into close contact with the semiconductor element 3 with the shield plate 96 interposed therebetween. Both the heat dissipation plates 10 shown in Figs. 5A and 5B are configured to have potentials different from the potential of the GND of the electrical equipment 1 so as to function as antennas and are used in a floating state with respect to the ground pattern 4.

As shown in A of Fig. 5, in a configuration in which the heat dissipation plate 10 is brought into close contact with the semiconductor element 3 via the insulating member 95, the heat dissipation plate 10 is connected to the input terminal 31 of the rectification circuit 30 via the transmission unit 20. In this case, because the heat dissipation plate 10 receives the electromagnetic waves emitted from the semiconductor element 3, the electromagnetic noise 16 is generated in the heat dissipation plate 10. The electromagnetic noise 16 is transmitted to the rectification circuit 30 and converted into DC power. Furthermore, because the heat dissipation plate 10 is not connected to the ground pattern 4, it is possible to convert the electromagnetic noise 16 into power without releasing its energy.

The shield plate 96 shown in B of Fig. 5 shields the electromagnetic noise from the semiconductor element 3 and simultaneously exhibits the function of releasing the heat generated in the semiconductor element 3 similarly to the heat dissipation plate 10 on an output side of the shield plate 96. Accordingly, the shield plate 96 can be regarded as a part of the heat dissipation plate 10. When the shield plate 96 is provided as described above, the shield plate 96 is connected to the input terminal 31 of the rectification circuit 30 via the transmission unit 20. In this case, because the shield plate 96 receives most of the electromagnetic waves emitted from the semiconductor element 3, the electromagnetic noise 16 is generated in the shield plate 96. The electromagnetic noise 16 is transmitted to the rectification circuit 30 and converted into DC power.

Furthermore, the heat dissipation plate 10 provided on the output side of the shield plate 96 may alternately be connected to the input terminal 31 of the rectification circuit 30. As a result, not only the shield plate 96 on the input side but also the heat dissipation plate 10 on the output side functions as antennas that receive the electromagnetic noise 16, making it possible to sufficiently harvest the energy of the electromagnetic noise 16. Note that when the shield plate 96 is provided, the heat dissipation plate 10 on the output side is not necessarily connected to the rectification circuit 30 and may be connected, for example, to the ground pattern 4.

As described above, in the power generation apparatus 100, the electromagnetic noise 16 is harvested and converted into power. Therefore, the electromagnetic noise 16 can be suppressed without being released to the ground pattern 4. In other words, the connection methods shown in Figs. 1 and 5 also function as means for suppressing the electromagnetic noise 16 emitted from the semiconductor element 3. Accordingly, for example, when the electromagnetic noise 16 is capable of being suppressed to a desired level, measures against noise can be realized using the connection methods shown in Figs. 1 and 5.

[High-Pass Filter]

In the above description, all frequency components of the electromagnetic noise 16 generated in the heat dissipation plate 10 are configured to be directly transmitted to the rectification circuit 30. On the other hand, depending on the characteristics and the like of the diode included in the rectification circuit 30, it may be difficult to rectify high-frequency components exceeding a certain frequency. Such high-frequency components may be controlled to be returned to the GND of the electrical equipment 1. In this case, a high-pass filter is provided in the power generation apparatus 100.

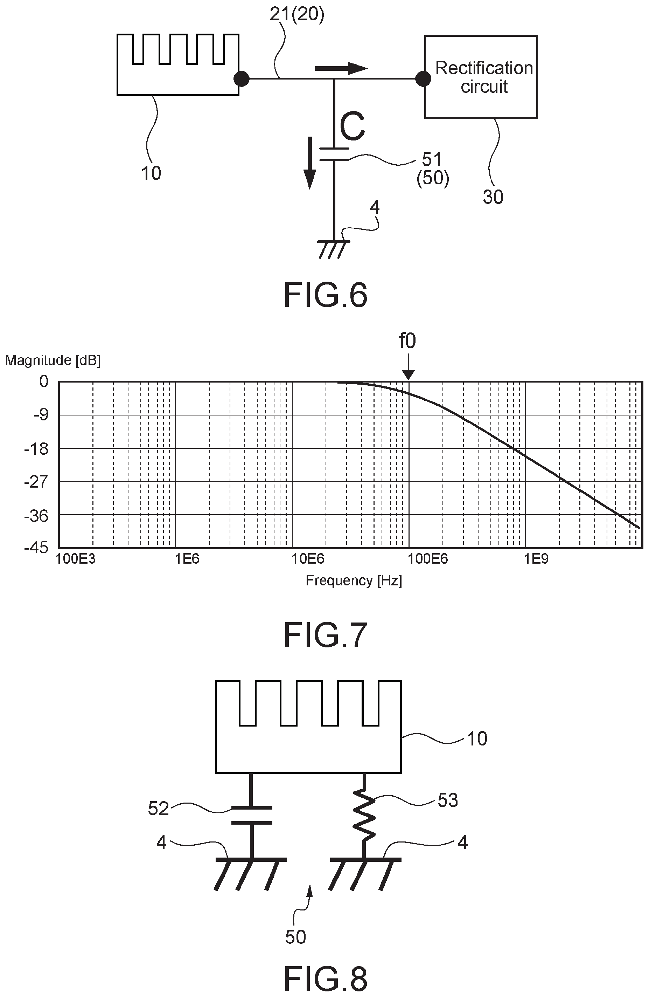

Fig. 6 is a schematic diagram showing an example of the high-pass filter. The high-pass filter 50 is, for example, a filter that allows frequency components higher than a threshold frequency to pass through the filter and that suppresses frequency components less than or equal to the threshold frequency. The high-pass filter 50 is provided between the heat dissipation plate 10 connected to the transmission unit 20 (transmission line 21) and the GND (ground pattern 4) of the electrical equipment 1.

The high-pass filter 50 shown in Fig. 6 is a filter composed of only a capacitor 51. One end of the capacitor 51 is connected to the transmission line 21 that connects the heat dissipation plate 10 and the rectification circuit 30, and the other end of the capacitor 51 is connected to the ground pattern 4. As a result, frequency components flowing through the transmission line 21 that are higher than a threshold frequency pass through the high-pass filter 50 (capacitor 51) and flow into the ground pattern 4. In contrast, frequency components flowing through the transmission line 21, that is, frequency components transmitted from the heat dissipation plate 10 to the rectification circuit 30 are frequency components less than or equal to the threshold frequency.

As described above, it may be difficult to rectify frequency components exceeding a certain frequency in the rectification circuit 30. Accordingly, components in the frequency band that can be rectified using the rectification circuit 30 are regarded as targets that are harvested by the power generation apparatus 100. However, components in the other high-frequency bands are regarded as noise components that are not harvested by the power generation apparatus 100.

In view of this, in the present embodiment, the high-pass filter 50 is configured to allow AC components in frequency bands to pass through the high-pass filter 50, the frequency bands being higher than the frequency band rectified by the rectification circuit 30. That is, the high-pass filter 50 is configured to allow AC components (noise components) outside the frequency bands regarded as harvested targets to pass through the high-pass filter 50. For example, the threshold frequency of the high-pass filter 50 is set to the upper limit of the frequency band rectified by the rectification circuit 30.

The provision of the high-pass filter 50 as described above increases the impedance to the ground pattern 4 in the frequency band that is regarded as a harvested target and decreases the impedance to the ground pattern 4 in the other frequency bands. As a result, all noise components that are not regarded as harvested targets can be released to the ground pattern 4. Furthermore, the components in the frequency band that are regarded as harvested targets can be supplied to the rectification circuit 30 and harvested as power. As a result, power can be efficiently harvested while sufficiently suppressing extra noise components.

Fig. 7 is a graph showing the frequency characteristics of the transmission line 21 with the high-pass filter 50 shown in Fig. 6. In the graph, the horizontal axis represents the frequency (Hz), and the vertical axis represents the magnitude (dB) of the frequency component flowing from the heat dissipation plate 10 into the rectification circuit 30 via the transmission line 21. Here, the frequency at which the magnitude of the frequency component passing through the transmission line 21 becomes -3 dB is referred to as the threshold frequency f0 of the high-pass filter 50.

As shown in Fig. 7, the transmission line 21 with the high-pass filter 50 allows components at frequencies less than or equal to the threshold frequency f0 to pass through the transmission line 21 without the components hardly being attenuated. On the other hand, components at frequencies higher than the threshold frequency f0 are increasingly suppressed as the frequencies increase. As a result, the transmission line 21 with the high-pass filter 50 exhibits characteristics as a low-pass filter that allows low-frequency components to pass through the filter and that suppresses high-frequency components.

Here, the upper limit of the frequency band rectified by the rectification circuit 30 (the frequency band regarded as a harvested target) is set to 100 MHz. Accordingly, the high-pass filter 50 is configured so that the threshold frequency f0 becomes 100 MHz. In the high-pass filter 50 illustrated in Fig. 6, the electrostatic capacitance of the capacitor 51 is set to 100 $\mu$F so that f0 = 100 MHz. Note that the threshold frequency f0 of the high-pass filter 50 is not limited to the above example but can be appropriately determined in terms of the harvested frequency band (the characteristics of rectification circuit 30) or EMC measures.

Fig. 8 is a schematic diagram showing another example of the high-pass filter. The high-pass filter 50 shown in Fig. 8 is a parallel circuit of a capacitor 52 and a resistive element 53. Specifically, one end of the capacitor 52 is connected to the heat dissipation plate 10, and the other end of the capacitor 52 is connected to the ground pattern 4. Similarly, one end of the resistive element 53 is connected to the heat dissipation plate 10, and the other end of the resistive element 53 is connected to the ground pattern 4.

Such a configuration enables extra high-frequency components (noise components) to be dissipated by the capacitor 52 and the resistive element 53, thereby providing both EMC measures and measures against high-voltage ringing. Note that the measures against high-voltage ringing refer, for example, to suppressing antenna radiation caused when ringing noise occurs in the heat dissipation plate 10 or the like. For example, the resistive element 53 dissipates the energy of relatively high-voltage ringing noise or the like as heat, making it possible to suppress antenna radiation.

In addition, the configuration of the high-pass filter 50 is not limited. For example, the high-pass filter 50 shown in Fig. 8 may only include the capacitor 52 or the resistive element 53. Furthermore, the high-pass filter 50 may include any element, such as an inductor, in addition to the capacitor 52 and the resistive element 53.

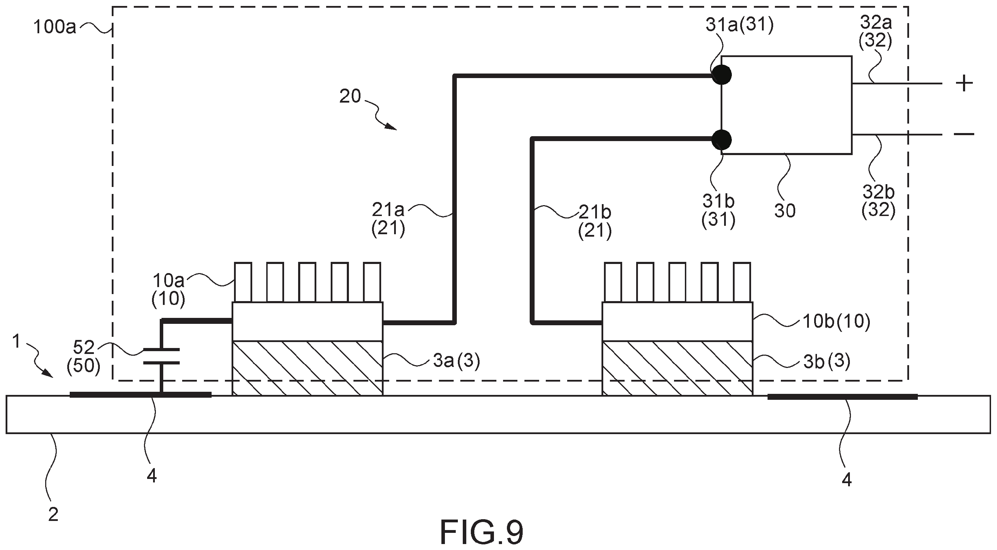

Fig. 9 is a schematic diagram showing another configuration example of the power generation apparatus according to the present embodiment. The power generation apparatus 100a shown in Fig. 9 includes the high-pass filter 50 as the above-described measures against noise. The transmission unit 20 (transmission line 21) of the power generation apparatus 100a connects different heat dissipation plates 10 to the respective input terminals 31 of the pair of input terminals 31 of the rectification circuit 30. Furthermore, the high-pass filter 50 is provided on at least one of the heat dissipation plates 10 connected to the input terminals 31 of the pair of input terminals 31.

In the example shown in Fig. 9, the high-pass filter 50 including the capacitor 52 is provided between the first heat dissipation plate 10a and the ground pattern 4 on the left side of the figure. Note that the type of the high-pass filter 50 is not limited to this, and the parallel circuit of the capacitor 52 and the resistive element 53 (see Fig. 8) or the like may be used.

Note that in a configuration in which the heat dissipation plates 10 are connected to the rectification circuit 30, the electromagnetic noise 16 is harvested and converted into power, thereby enabling noise reduction. For example, in Fig. 9, the second heat dissipation plate 10b on the right side of the figure can sufficiently reduce noise by harvesting the electromagnetic noise 16 and is thus in a floating state with respect to the ground pattern 4 without the high-pass filter 50. As described above, the high-pass filter 50 is not necessarily provided in the heat dissipation plate 10 connected to the rectification circuit 30. Note that in cases where a large amount of unharvestable noise or the like is generated, the high-pass filters 50 may be provided on both the heat dissipation plates 10.

Fig. 10 is a schematic diagram showing another configuration example of the power generation apparatus according to the present embodiment. The power generation apparatus 100b shown in Fig. 10 illustrates an example in which two or more heat dissipation plates 10 are connected to one input terminal 31 of the rectification circuit 30. The transmission unit 20 of the power generation apparatus 100b has a conductive member 12 that electrically connects the two or more heat dissipation plates 10 and connects the two or more heat dissipation plates 10 connected by the conductive member 12 to the input terminal 31.

The circuit substrate 2 shown in Fig. 10 has, in addition to the configuration shown in Fig. 1, a third semiconductor element 3c provided on the left side of the first semiconductor element 3a. Furthermore, a third heat dissipation plate 10c is provided in close contact with the third semiconductor element 3c. Note that the third heat dissipation plate 10c is not short-circuited to the ground pattern 4 and is thus in a floating state.

In this case, the first heat dissipation plate 10a and the third heat dissipation plate 10c are electrically coupled by the conductive member 12. The conductive member 12 is, for example, a metal sheet, a metal cable, or the like. As a result, the first heat dissipation plate 10a and the third heat dissipation plate 10c can be regarded as a single large heat dissipation plate 10. The first heat dissipation plate 10a and the third heat dissipation plate 10c coupled by the conductive member 12 are connected to the first input terminal 31a of the rectification circuit 30 via the first transmission line 21a connected to the first heat dissipation plate 10a.

The first input terminal 31a receives the electromagnetic noise 16 generated in the third heat dissipation plate 10c, in addition to the electromagnetic noise 16 generated in the first heat dissipation plate 10a. As a result, the amount of harvested power can be significantly increased. As described above, the power generation apparatus 100b illustrates an example in which the plurality of heat dissipation plates 10 generating the electromagnetic noise 16 is connected by the conductive member 12 so as to form a single heat dissipation plate, thereby increasing the amount of harvested power.

The number of the heat dissipation plates 10 connected via the conductive member 12 is not limited. For example, three heat dissipation plates 10 or three or more heat dissipation plates 10 may be coupled and connected to the input terminal 31. Furthermore, in the example shown in Fig. 10, the heat dissipation plates 10 coupled to the side of the first input terminal 31a are connected. However, the heat dissipation plates 10 coupled to the side of the second input terminal 31b may be connected. It should be understood that the coupled heat dissipation plates 10 may be connected to both the first input terminal 31a and the second input terminal 31b. Note that the heat dissipation plates 10 connected to one input terminal 31 are not coupled to the heat dissipation plates 10 connected to the other input terminal 31.

Figs. 11 and 12 are schematic diagrams each showing another configuration example of the power generation apparatus according to the present embodiment. Each of the power generation apparatus 100c shown in Fig. 11 and the power generation apparatus 100d shown in Fig. 12 illustrates an example in which the heat dissipation plate 10 is connected to only one input terminal 31 of the rectification circuit 30.

The transmission unit 20 of the power generation apparatus 100 shown in Fig. 11 connects the heat dissipation plate 10 to one of the pair of input terminals 31 and connects the GND (ground pattern 4) of the electrical equipment 1 to another of the pair of input terminals 31. In the example shown in Fig. 11, the first input terminal 31a is connected to the heat dissipation plate 10, and the second input terminal 31b is directly connected to the ground pattern 4.

The transmission unit 20 of the power generation apparatus 100d shown in Fig. 12 connects the heat dissipation plate 10 to one of the pair of input terminals 31 and connects the GND (ground pattern 4) of the electrical equipment 1 to another of the pair of input terminals 31 via a capacitor 22. In the example shown in Fig. 12, the first input terminal 31a is connected to the heat dissipation plate 10, and the second input terminal 31b is connected to the ground pattern 4 via the capacitor 22.

As described above, when only one input terminal 31 of the rectification circuit 30 is connected to the heat dissipation plate 10, the other input terminal 31 is connected to the GND of the electrical equipment 1 directly or via capacitive coupling. By such a configuration, AC power of the electromagnetic noise 16 can be harvested from the heat dissipation plate 10 connected to one input terminal 31. For example, when only one heat dissipation plate 10 is available in energy harvesting, such a configuration may be employed.

[Rectification Circuit]

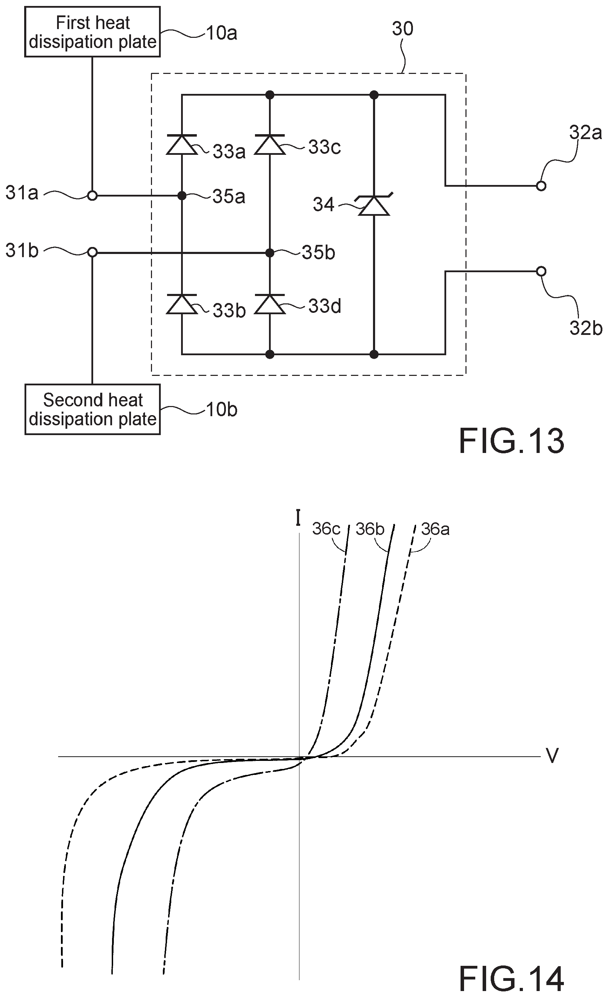

Fig. 13 is a circuit diagram showing a configuration example of the rectification circuit 30. The rectification circuit 30 rectifies the AC power input from the pair of input terminals 31. In the rectification circuit 30 shown in Fig. 13, the first heat dissipation plate 10a is connected to the first input terminal 31a, and the second heat dissipation plate 10b is connected to the second input terminal 31b. Note that even when the heat dissipation plate 10 is connected to one of the first input terminal 31a or the second input terminal 31b, the configuration shown in Fig. 13 may be used.

In terms of the efficiency of the rectification circuit 30, for example, a full-wave rectification circuit has high efficiency even with the loss of a diode used in rectification because it can increase the voltage of an AC signal and capture the entire signal. Furthermore, it is important for the rectification circuit 30 to have a very small leak current of a diode during reverse biasing. However, when a leak current occurs, a full-wave rectification circuit is suitably used. In consideration of these points, a full-wave rectification circuit is desirably used as the rectification circuit 30. Note that the configuration of the rectification circuit 30 is not limited, and a half-wave rectification circuit, a voltage doubler circuit, a Cockcroft-Walton circuit, or the like may be used.

The rectification circuit 30 shown in Fig. 13 is a full-wave rectification circuit. The rectification circuit 30 has the first input terminal 31a, the second input terminal 31b, four diodes 33a, 33b, 33c, and 33d, a Zener diode 34, the first output terminal 32a, and the second output terminal 32b. The diodes 33a and 33b are connected in series, and the diodes 33c and 33d are connected in series. The connection point between the anode of the diode 33a and the cathode of the diode 33b serves as a feeding point 35a to which the first input terminal 31a is connected. Furthermore, the connection point between the anode of the diode 33c and the cathode of the diode 33d serves as a feeding point 35b to which the second input terminal 31b is connected.

The connection point between the cathode of the diode 33a and the cathode of the diode 33c is connected to the first output terminal 32a, and the connection point between the anode of the diode 33b and the anode of the diode 33d is connected to the second output terminal 32b. The rectification diodes 33a, 33b, 33c, and 33d are configured using discrete diodes but may be configured using dedicated ICs.

Furthermore, the Zener diode 34 is connected in parallel between the output terminals 32a and 32b. The Zener diode 34 functions as an electrostatic protection component that releases static electricity, for example, when a high voltage such as static electricity occurs. An antistatic varistor may be provided instead of the Zener diode 34. Note that an electrostatic protection component such as the Zener diode 34 does not necessarily have to be provided depending on the configuration of the power generation apparatus 100, or the like.

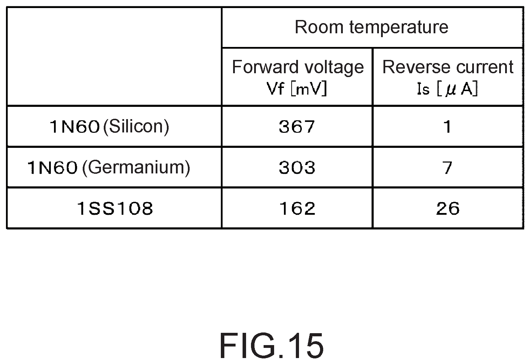

Fig. 14 is a graph illustrating the characteristics of the diodes in the rectification circuit 30. Fig. 15 is a table illustrating the characteristics of the diodes in the rectification circuit 30. Results obtained by measuring the forward voltage Vf and the reverse current Is of the rectification diodes used in the rectification circuit 30 are shown in Figs. 14 and 15. Diodes with the product number 1N60, one made of silicon and the other made of germanium, were measured, and a diode with the product number 1SS108 made of germanium and manufactured by a different manufacturer was evaluated. In Fig. 14, the curved line 36a represents the characteristics of 1N60 (silicon), the curved line 36b represents the characteristics of 1N60 (germanium), and the curved line 36c represents the characteristics of 1SS108 (germanium).

The reverse current Is refers to the current that flows when a voltage is applied to a diode in the reverse direction. The measurement data in Fig. 15 represents the data obtained when a voltage of 10 V was applied to the diodes in the reverse direction. The forward voltage Vf refers to the voltage at which a forward current (1 mA) begins to flow through a diode.

When the AC power from the heat dissipation plate 10 was rectified, it was found that the 1N60 (silicon) diode, in which no current flows in the reverse direction, can harvest more power than a diode having a low voltage at which a current begins to flow in the forward direction. Furthermore, the reverse current Is generated when the forward voltage Vf of the diode is applied in the reverse direction was evaluated. The rectified signal is AC, and the data at 10 V is shown in Fig. 15. Therefore, when the reverse current Is during application of the same voltage as Vf in the reverse direction is calculated, 1N60 (silicon) is 0.036 $\mu$A, 1N60 (germanium) is 0.21 $\mu$A, and 1SS108 (germanium) is 0.5 $\mu$A.

Accordingly, the ratio of the forward current (1 mA) to the reverse current Is at the forward voltage Vf is 1/27778 for the 1N60 (silicon) diode, 1/4762 for the 1N60 (germanium) diode, and 1/2000 for the 1SS108 (germanium) diode. That is, it is desirable that, with respect to the diode included in the rectification circuit 30, the ratio of the forward current at the forward voltage to the reverse current when the same voltage is applied in the reverse direction be 4700 or more. More desirably, the above-described ratio is 10000 or more. As a result, among the three diodes illustrated as an example, the 1N60 (silicon) diode exhibits the most suitable characteristics.

In addition, in terms of diode characteristics, the reverse current Is when the voltage is applied in the reverse direction is desirably small. The reverse resistance value calculated using the data at 10 V is 100 M$\Omega$ for the 1N60 (silicon) diode, 1.43 M$\Omega$ for the 1N60 (germanium) diode, and 0.38 M$\Omega$ for the 1SS108 (germanium) diode. That is, the resistance value for preventing a current from flowing in the reverse direction is desirably large. It is desirable that a resistance value of each of the diodes included in the rectification circuit 30 that is calculated from the reverse current when the reverse voltage is 10 V be 1.4 M$\Omega$ or more. More desirably, the above-described resistance value is 10 M$\Omega$ or more. As a result, among the three diodes illustrated as an example, the 1N60 (silicon) diode exhibits the most suitable characteristics.

As described above, the diodes included in the rectification circuit 30 are desirably silicon diodes. By utilizing silicon diodes, the rectification circuit 30 having high efficiency can be realized. Note that the rectification circuit 30 is not limited to the above-described example, diodes that cause less loss, diodes having high frequencies capable of being rectified, or the like can be appropriately selected according to the application, usage environment, or the like of the rectification circuit 30. Furthermore, the rectification circuit 30 may be configured using a switching element such as an FET (Field Effect Transistor).

[Storage Unit]

Hereinafter, the configuration of the storage unit 40 storing the DC power output from the rectification circuit 30 in the storage element 55 will be specifically described. The configuration of the storage unit 40 described here is applicable to any of the above-described power generation apparatuses.

Fig. 16 is a schematic circuit diagram showing a configuration example of the storage unit. The storage unit 40a shown in Fig. 16 has a smoothing capacitor 41, a protection diode 42, a PMIC circuit 43, and a battery 56. Hereinafter, the line connected to the first output terminal 32a of the rectification circuit 30 may be referred to as a first output line 45a, and the line connected to the second output terminal 32b may be referred to as a second output line 45b. The second output line 45b is, for example, a ground line connected to the GND of the electrical equipment 1.

The smoothing capacitor 41 is a capacitive element that smooths the output of the rectification circuit 30, and is provided between the first output line 45a and the second output line 45b on the output side of the rectification circuit 30. The provision of the smoothing capacitor 41 reduces ripples or the like contained in the output of the rectification circuit 30, thereby enabling the supply of stable DC components. Note that the smoothing capacitor 41 also functions as a storage element that temporarily stores the DC power output from the rectification circuit 30.

The protection diode 42 is an element that protects an IC circuit (here, the PMIC circuit 43) provided on an output side of the protection diode 42 and connected to the first output line 45a and the second output line 45b. The protection diode 42 is provided between the smoothing capacitor 41 and the IC circuit on the output side. The cathode of the protection diode 42 is connected to the first output line 45a, and the anode of the protection diode 42 is connected to the second output line 45b. As the protection diode 42, a Zener diode that conducts when a certain voltage is applied is used. This can prevent situations such as damage to the circuit on the output side.

The PMIC circuit 43 is a circuit that is provided between the battery 56 and the rectification circuit 30 and charges the battery 56 depending on the state of charge of the battery 56. The PMIC circuit 43 is configured using a power management IC (PMIC). In the example shown in Fig. 16, the PMIC circuit 43 is provided between the protection diode 42 and the battery 56 and is connected to the first output line 45a and the second output line 45b.

For example, the PMIC circuit 43 adjusts the voltage, current, or the like supplied to charge the battery 56 according to the voltage or the like of the battery 56. Furthermore, depending on the power harvestable from the heat dissipation plate 10, a step-down-type charging circuit that steps down the output voltage of the rectification circuit 30 to perform charging, a step-up-type charging circuit that steps up the output voltage of the rectification circuit 30 to perform charging, or the like is appropriately selected. In addition, a protection function for the battery 56, such as overcharge prevention, may be implemented. In the present embodiment, the PMIC circuit 43 corresponds to a charging control unit. Furthermore, the PMIC circuit 43 illustrates an example of a control element for controlling charging of the storage element.

The battery 56 serves as the storage element 55 storing therein the DC power output from the rectification circuit 30. The positive electrode of the battery 56 is connected to the first output line 45a, and the negative electrode of the battery 56 is connected to the second output line 45b. Furthermore, the battery 56 supplies power to the load 90 on an output side of the battery 56 via the first output line 45a and the second output line 45b.

In the storage unit 40a, the DC power output from the rectification circuit 30 is supplied to the PMIC circuit 43. The PMIC circuit 43 appropriately detects the voltage of the battery 56 and adjusts the voltage or the like for charging the battery 56 on the basis of the detection result. As a result, the constant-voltage charging, constant-current charging, or the like of the battery 56 can be easily implemented.

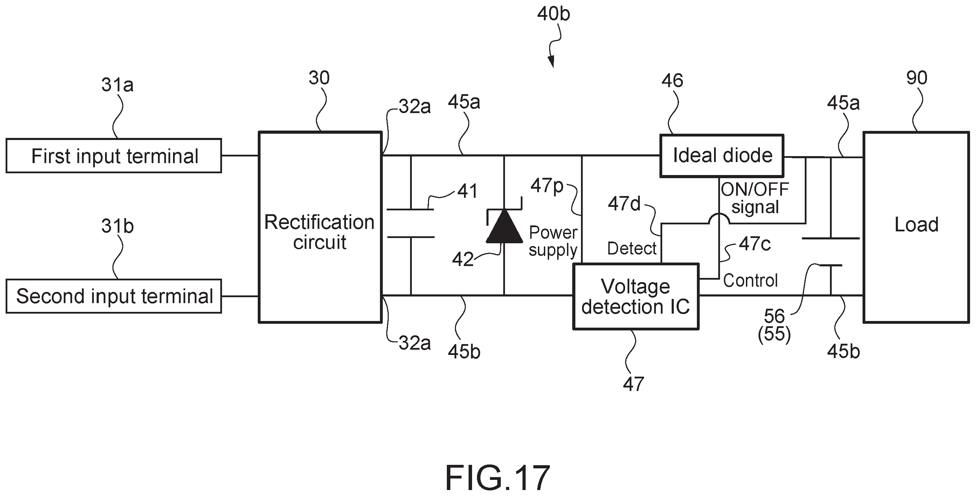

Fig. 17 is a schematic circuit diagram showing another configuration example of the storage unit. The storage unit 40b shown in Fig. 17 has the smoothing capacitor 41, the protection diode 42, an ideal diode 46, a voltage detection IC 47, and the battery 56. The smoothing capacitor 41 and the protection diode 42 are configured similarly to those of the storage unit 40a shown in Fig. 16.

The ideal diode 46 is a diode element that is turned on and off by switching being performed by a control signal, and the ideal diode 46 is provided between the battery 56 and the rectification circuit 30. Specifically, the ideal diode 46 is inserted on the first output line 45a between the battery 56 and the rectification circuit 30. Furthermore, the ideal diode 46 has an input end on the side of the rectification circuit 30 and an output end on the side of the battery 56.

The ideal diode 46 is, for example, an element obtained by a diode being connected to a switch element in series on an output side of the switch element. The switch element is turned on and off by switching being performed by a control signal input from the voltage detection IC 47. For example, a reverse current from the output end to the input end is prevented when the switch element is on, and the path connecting the input end and the output end is interrupted when the switch element is off. Accordingly, the ideal diode 46 can be regarded as an element having both a switch function and a reverse-current prevention function. In the present embodiment, the ideal diode 46 corresponds to a first switch element.

The voltage detection IC 47 is an IC circuit that has a detection terminal 47d, a control terminal 47c, and a power supply terminal 47p, that detects a voltage through the detection terminal 47d, and that outputs a control signal from the control terminal 47c according to the detection result. The detection terminal 47d is connected to a portion of the first output line 45a (the positive electrode of the battery 56) that is on an output side of the ideal diode 46. The control terminal 47c is connected to the ideal diode 46. The power supply terminal 47p is connected to a portion of the first output line 45a that is on an input side of the ideal diode 46. Furthermore, the voltage detection IC 47 is connected to the second output line 45b (GND) and detects the voltage at the detection terminal 47d as viewed from the second output line 45b. Accordingly, the voltage detected by the voltage detection IC corresponds to the voltage of the battery 56.

Furthermore, the voltage detection IC 47 turns off the ideal diode 46 when the voltage of the battery 56 reaches a first threshold voltage V1 or higher. Specifically, when the voltage at the detection terminal 47d is less than the first threshold voltage V1, the voltage detection IC 47 outputs a control signal used to turn on the ideal diode 46. Furthermore, when the voltage at the detection terminal 47d reaches the first threshold voltage V1 or higher, the voltage detection IC 47 outputs a control signal used to turn off the ideal diode 46. In the present embodiment, the voltage detection IC 47 corresponds to a first switching control unit. Furthermore, the ideal diode 46 and the voltage detection IC 47 illustrate an example of a control element for controlling the charging of the storage element.

The first threshold voltage V1 is set to, for example, the voltage at which the battery 56 has become fully charged. As a result, the ideal diode 46 is on and the charging of the battery 56 continues until the battery 56 is fully charged. However, when the battery 56 becomes fully charged, the ideal diode 46 is turned off, and no voltage is applied to the battery 56.

As described above, the storage unit 40b is configured such that the battery 56 is charged up to the certain voltage V1 and is prevented from exceeding the voltage by the combination of the ideal diode 46 and the voltage detection IC 47. As a result, the overcharging of the battery 56 can be prevented, thereby enabling proper charging of the battery 56 while extending its life.

Furthermore, the power leakage of the battery 56 can be suppressed by using the ideal diode 46. For example, in a single diode, some current may reversely flow when a voltage is applied in the reverse direction due to a change in the voltage between terminals. In contrast, the ideal diode 46 can prevent the occurrence of a reverse current using a switch element provided on an input side of the diode. This can prevent situations such as current leakage from the battery 56 provided on the output side of the ideal diode 46, thereby enabling efficient storage of the output from the rectification circuit 30.

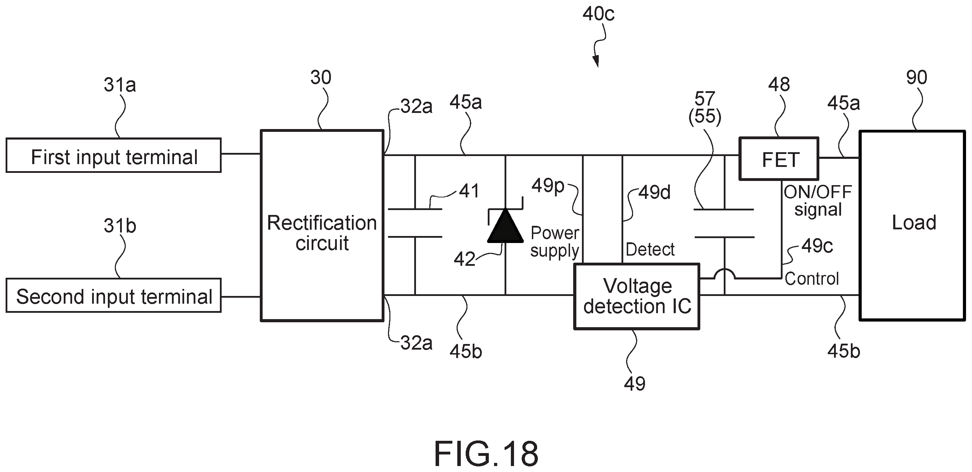

Fig. 18 is a schematic circuit diagram showing another configuration example of the storage unit. The storage unit 40c shown in Fig. 18 has the smoothing capacitor 41, the protection diode 42, a switch element 48, a voltage detection IC 49, and a storage capacitor 57. The smoothing capacitor 41 and the protection diode 42 are configured similarly to those of the storage unit 40a shown in Fig. 16.

The storage unit 40c uses the storage capacitor 57 as the storage element 55 storing therein the DC power output from the rectification circuit 30, unlike the above-described storage units 40a and 40b. The type and capacitance of the storage capacitor 57 are not limited, and any capacitor may be used depending on the output of the rectification circuit 30, the type of a load, or the like. The storage capacitor 57 is connected between the first output line 45a and the second output line 45b on the output side of the protection diode 42.

The switch element 48 is an element that performs switching to turn on and off a path using a control signal, and is configured using an FET (Field Effect Transistor) or the like. The switch element 48 is provided between the storage capacitor 57 and the load 90 to which power is supplied from the storage capacitor 57. Specifically, the switch element 48 is inserted on the first output line 45a between the storage capacitor 57 and the load 90. Furthermore, the switch element 48 receives a control signal from the voltage detection IC 49. In the present embodiment, the switch element 48 corresponds to a second switch element.

The voltage detection IC 49 is an IC circuit that has a detection terminal 49d, a control terminal 49c, and a power supply terminal 49p, that detects a voltage through the detection terminal 49d, and that outputs a control signal from the control terminal 49c according to the detection result. The detection terminal 49d and the power supply terminal 49p are connected to the first output line 45a between the protection diode 42 and the storage capacitor 57. The control terminal 49c is connected to the switch element 48. Furthermore, the voltage detection IC 49 is connected to the second output line 45b (GND) and detects the voltage at the detection terminal 49d as viewed from the second output line 45b. Accordingly, the voltage detected by the voltage detection IC corresponds to the voltage of the storage capacitor 57.

Furthermore, the voltage detection IC 49 turns on the switch element 48 when the voltage of the storage capacitor 57 reaches a second threshold voltage V2 or higher. Specifically, when the voltage at the detection terminal 49d is less than the second threshold voltage V2, the voltage detection IC 49 outputs a control signal used to turn off the switch element 48. Furthermore, when the voltage at the detection terminal 49d reaches the second threshold voltage V2 or higher, the voltage detection IC 49 outputs a control signal used to turn on the switch element 48. In the present embodiment, the voltage detection IC 49 corresponds to a second switching control unit. Furthermore, the switch element 48 and the voltage detection IC 49 illustrates an example of a control element for controlling the discharging of the storage element.

The second threshold voltage V2 is set to, for example, the voltage at which the storage capacitor 57 is sufficiently charged. As a result, when the storage capacitor 57 is not sufficiently charged, the switch element 48 is off, and the charging of the storage capacitor 57 continues without discharging. On the other hand, when the storage capacitor 57 is sufficiently charged, the switch element 48 is turned on, and power is supplied from the storage capacitor 57 to the load 90. Note that the voltage detection IC 49 may output a control signal used to turn on the switch element 48 for a certain period of time. This prevents situations such as instantaneous completion of the discharging of the storage capacitor 57, thereby enabling the supply of necessary power.

As described above, the switch element 48 provided on an output side of the storage capacitor 57 is controlled by the voltage detection IC 49 in the storage unit 40c using the storage capacitor 57. As a result, when the voltage of the storage capacitor 57 reaches the specified voltage V2, the switch element 48 is turned on, and power is intermittently supplied to the load 90 on the output side of the storage capacitor 57. That is, a configuration in which necessary power is supplied to the load 90 each time power is stored in the storage capacitor 57 can be achieved.

As described above, in the power generation apparatuses 100, 100a, 100b, 100c, and 100d according to the present embodiment, AC power of the electromagnetic noise 16 generated in the heat dissipation plate 10 having a potential different from the potential of the GND of the electrical equipment 1, is transmitted using the transmission unit 20 to the rectification circuit 30 and output as DC power. By utilizing the heat dissipation plate 10 in the manner described above, power can be efficiently harvested from the electrical equipment 1.

Generally, in ICs with high noise generation among those present in equipment, heat dissipation plates are provided in close contact with the ICs to dissipate heat and electromagnetic noise. On the other hand, such heat dissipation plates are generally connected to equipment GND in any manner to provide EMC measures. In this case, the electromagnetic noise generated in the heat dissipation plates is released to the GND. For this reason, it has been difficult to harvest power from heat dissipation plates with high noise generation.

In the present embodiment, the heat dissipation plate 10 is connected to the rectification circuit 30 via the transmission unit 20. Furthermore, the heat dissipation plate 10 connected to the rectification circuit 30 is in a floating state with respect to the GND of the electrical equipment 1 or is connected to the GND via a capacitor or resistive element included in the high-pass filter 50. Therefore, the electromagnetic noise 16 generated in the heat dissipation plate 10 is transmitted to the rectification circuit 30 without being released to the GND. This enables the energy of the relatively large electromagnetic noise 16 generated in the heat dissipation plate 10 to be rectified and harvested as power. As a result, power can be efficiently harvested from the electrical equipment 1 having large noise components.

Furthermore, various cables (such as TV coaxial cables, LAN cables, and USB cables) may be inserted into the electrical equipment 1, and it is conceivable that the connection of these cables makes the GND of the electrical equipment 1 unstable. Therefore, if power is harvested using an antenna or the like based on the GND of the electrical equipment 1, the connection of the cables may cause instability in power harvesting. On the other hand, in the present embodiment, power is harvested from the heat dissipation plate 10 substantially separated from the GND, reducing the influence caused by the insertion of the cables. As a result, power can be stably harvested.

<Second Embodiment>

The power generation apparatus according to a second embodiment of the present technology will be described. Hereinafter, descriptions of configurations and functions identical or similar to those of the power generation apparatus 100 described in the above embodiment will be omitted or simplified.

In the above embodiment, a configuration in which the heat dissipation plate 10 and the rectification circuit 30 are electrically connected via the transmission line 21 included in the transmission unit 20 has been described. In the present embodiment, a configuration in which a transformer is provided in the transmission unit 20 and the heat dissipation plate 10 and the rectification circuit 30 are connected via the transformer will be described. The provision of the transformer makes it possible to configure the power generation apparatus across the primary-side circuit and secondary-side circuit of the electrical equipment 1.

[Configuration of Power Generation Apparatus Having Transformer]

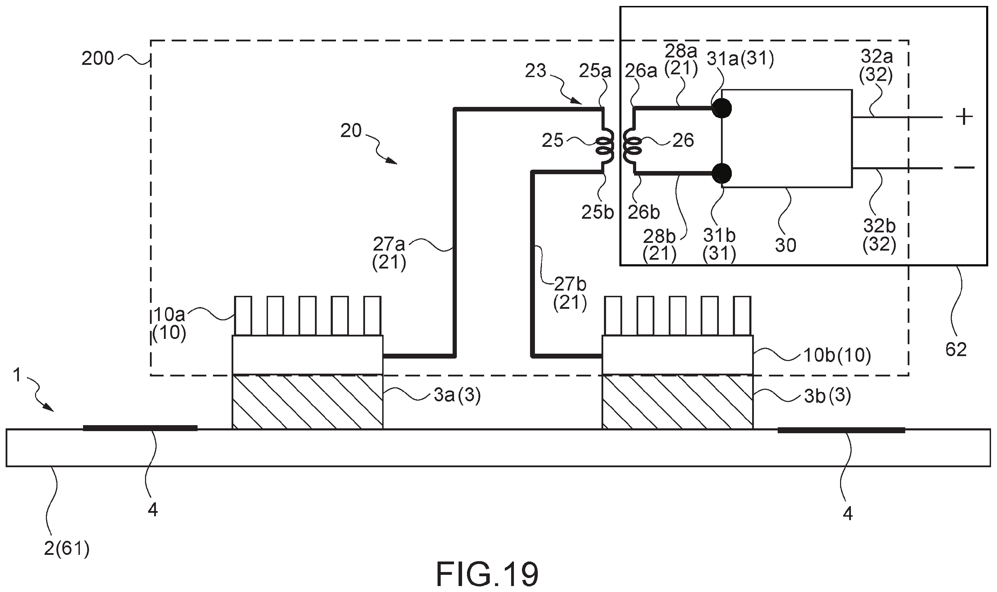

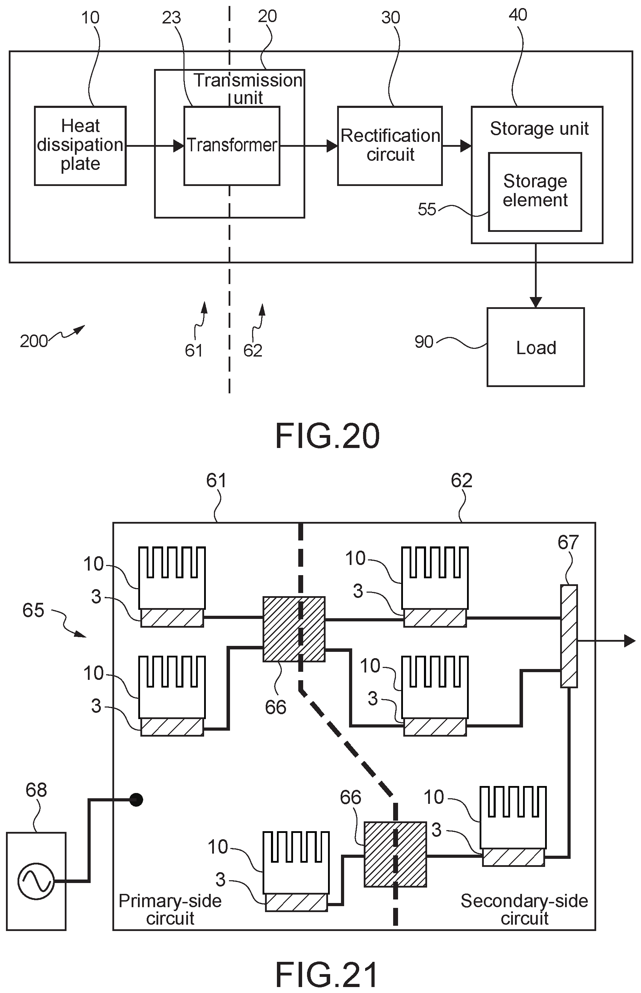

Fig. 19 is a schematic diagram showing a configuration example of the power generation apparatus according to the second embodiment. Fig. 20 is a block diagram showing a functional configuration example of the power generation apparatus 200 shown in Fig. 19. As shown in Figs. 19 and 20, the power generation apparatus 200 has the heat dissipation plate 10, the transmission unit 20, the rectification circuit 30, and the storage unit 40 and harvests power from the heat dissipation plate 10 provided in the electrical equipment 1. Compared to, for example, the power generation apparatus 100 described with reference to Fig. 1, the power generation apparatus 200 has a configuration in which the transformer 23 is added to the transmission unit 20.

In the present embodiment, the circuit substrate 2 on which the semiconductor element 3 is mounted is a primary-side power supply substrate included in the primary-side circuit 61 of the electrical equipment 1. Accordingly, the semiconductor element 3 and the heat dissipation plate 10 that dissipates heat from the semiconductor element 3 are both provided in the primary-side circuit 61. In contrast, the rectification circuit 30 and the storage unit 40 are provided in the secondary-side circuit 62 of the electrical equipment 1. Note that in Fig. 20, the left side across a rough dotted line is regarded as the primary-side circuit 61, while the right side across the rough dotted line is regarded as the secondary-side circuit 62.

The transmission unit 20 of the power generation apparatus 200 connects the input terminal 31 of the rectification circuit 30 and the heat dissipation plate 10 via the transformer 23. Although the use of the transformer 23 enables AC power to be transmitted from the heat dissipation plate 10 to the rectification circuit 30, both the heat dissipation plate 10 and the rectification circuit 30 are electrically isolated from each other.

As shown in Fig. 19, the transformer 23 is a transformer including a primary-side coil 25 and a secondary-side coil 26 that are magnetically connected to each other. The transformer 23 has primary-side terminals 25a and 25b at both ends of the primary-side coil 25, and secondary-side terminals 26a and 26b at both ends of the secondary-side coil 26. The transformer 23 can be, for example, a common-mode choke coil or the like mountable on a substrate. Note that the type and characteristics of the transformer 23 are not limited, and the transformer 23 is appropriately selected depending on, for example, the application, the amount of harvested power, and the like of the power generation apparatus 200.

Furthermore, the transmission unit 20 has, in addition to the above-described transformer 23, a pair of primary-side transmission lines 27a and 27b and a pair of secondary-side transmission lines 28a and 28b. On the primary side of the power generation apparatus 200, the first heat dissipation plate 10a is connected to the primary-side terminal 25a of the transformer 23 via the primary-side transmission line 27a. Furthermore, the second heat dissipation plate 10b is connected to the primary-side terminal 25b of the transformer 23 via the primary-side transmission line 27b. On the secondary side, the first input terminal 31a of the rectification circuit 30 is connected to the secondary-side terminal 26a of the transformer 23 via the secondary-side transmission line 28a. Furthermore, the second input terminal 31b of the rectification circuit 30 is connected to the secondary-side terminal 26b of the transformer 23 via the secondary-side transmission line 28b.

As described above, the first heat dissipation plate 10a and the second heat dissipation plate 10b are electrically connected via the primary-side coil 25. Furthermore, the first input terminal 31a and the second input terminal 31b of the rectification circuit 30 are electrically connected via the secondary-side coil 26. Note that the first heat dissipation plate 10a and the second heat dissipation plate 10b are not short-circuited to the ground pattern 4 of the circuit substrate 2 (primary-side circuit 61), the ground pattern 4 of the circuit substrate 2 serving as the GND of the electrical equipment 1. Thus, each of the first heat dissipation plate 10a and the second heat dissipation plate 10b functions as an antenna that receives the electromagnetic noise 16.

[Primary-Side Circuit And Secondary-Side Circuit]

Generally, in the primary-side circuit 61, AC power is directly supplied from an external power supply such as a commercial power supply. For example, in Japan, AC power of 100 V at 50 Hz or 60 Hz is used as a commercial power supply. Meanwhile, in Europe, AC power of 220 V to 230 V at 50 Hz is supplied, and in North America, AC power of 115 V to 120 V at 60 Hz is supplied.

In the primary-side circuit 61, such large power is converted to generate power at a voltage necessary for the electrical equipment 1. Accordingly, in the semiconductor element 3 such as a switching transistor provided in the primary-side circuit 61, the electromagnetic noise 16 having significantly large energy is generated. For this reason, in the electrical equipment 1, the primary-side circuit 61 is the area where a large amount of the electromagnetic noise 16 can be harvested.

However, because the power supplied from a commercial power supply or the like is significantly large, various safety regulations, such as UL standards, are established to ensure safety. For example, in the primary-side circuit 61 of the electrical equipment 1, power supplied from a commercial power supply or the like must be handled as is before being converted into power for use in the electrical equipment 1. Therefore, due to safety regulations, the GND is not allowed to be shared between the primary-side circuit 61 and the secondary-side circuit 62, and the primary-side circuit 61 and the secondary-side circuit 62 is not allowed to be electrically connected. That is, inside the electrical equipment 1, the primary-side circuit 61 and the secondary-side circuit 62 need to be electrically isolated. Therefore, the primary-side circuit 61 and the secondary-side circuit 62 are connected via a transformer or the like, including the GND.

Fig. 21 is a schematic diagram showing a configuration example of a power supply substrate including the primary-side circuit 61 and the secondary-side circuit 62. The power supply substrate 65 is a substrate that adjusts the power supplied from a specified power supply 68 to generate the power supplied to each unit of the electrical equipment 1. The power supply substrate 65 includes the primary-side circuit 61 and the secondary-side circuit 62. Here, the primary-side circuit 61 and the secondary-side circuit 62 are provided on a single substrate but are configured to be electrically isolated. The rough dotted line in the figure indicates the boundary between the primary-side circuit 61 and the secondary-side circuit 62 on the power supply substrate 65.

The primary-side circuit 61 is a circuit to which power is supplied from the specified power supply 68. In the primary-side circuit 61, semiconductor elements 3 (such as switching transistors) that adjust the power from the power supply 68 to be supplied to the secondary-side circuit 62 are, for example, provided. Furthermore, the power output from the semiconductor elements 3 of the primary-side circuit 61 is supplied to the secondary-side circuit 62 via a power supply transformer 66. The secondary-side circuit 62 is a circuit electrically isolated from the primary-side circuit 61. In the secondary-side circuit 62 included in the power supply substrate 65, semiconductor elements 3 (such as switching transistors) that further adjust the power supplied via the power supply transformer 66 are provided. The power output from each semiconductor element 3 of the secondary-side circuit 62 is appropriately output to a circuit on an output side of the secondary-side circuit 62 via a connector unit 67.

For example, as shown in Fig. 21, three semiconductor elements 3 are provided in the primary-side circuit 61 on the power supply substrate 65, each having the heat dissipation plate 10. Furthermore, three semiconductor elements 3 are also provided in the secondary-side circuit 62, each having the heat dissipation plate 10. At the boundary between the primary-side circuit 61 and the secondary-side circuit 62, two power supply transformers 66 are provided.

Here, two semiconductor elements 3 on the upper side of the primary-side circuit 61 and two semiconductor elements 3 on the upper side of the secondary-side circuit 62 are connected via an upper power supply transformer 66 in the figure. Furthermore, a semiconductor element 3 on the lower side of the primary-side circuit 61 and a semiconductor element 3 provided on the lower side of the secondary-side circuit 62 are connected via a lower power supply transformer 66 in the figure. Furthermore, the GND of the primary-side circuit 61 and the GND of the secondary-side circuit 62 are also appropriately connected via the power supply transformers 66 together with the respective semiconductor elements 3.

As described above, a multiplicity of the semiconductor elements 3, each in close contact with the heat dissipation plate 10, are provided on the power supply substrate 65. Each of these heat dissipation plates 10 can function as an antenna that receives the electromagnetic noise 16. However, by utilizing the heat dissipation plates 10 provided in the primary-side circuit 61, the amount of harvestable power can be significantly increased. However, due to the safety regulations described above, the heat dissipation plates 10 provided in the primary-side circuit 61 is not allowed to be electrically connected to the secondary-side circuit 62.

[Operation of Power Generation Apparatus Having Transformer]

In order to address this matter, in the power generation apparatus 200 shown in Figs. 19 and 20 according to the present embodiment, the heat dissipation plate 10 provided in the primary-side circuit 61 is connected to the rectification circuit 30 provided in the secondary-side circuit 62 via the transformer 23. That is, the heat dissipation plate 10 and the rectification circuit 30 are electrically isolated. As a result, it is possible to configure the power generation apparatus 200 across the primary-side circuit 61 and the secondary-side circuit 62 without departing from the safety regulations.

For example, any heat dissipation plate 10 provided in the primary-side circuit 61 is used as the first heat dissipation plate 10a shown in Fig. 19. Furthermore, another heat dissipation plate 10 provided in the primary-side circuit 61 is used as the second heat dissipation plate 10b shown in Fig. 19. In this case, AC power of the electromagnetic noise 16 generated in the first heat dissipation plate 10a and the second heat dissipation plate 10b is transmitted to the rectification circuit 30 provided in the secondary-side circuit 62 via the transformer 23 (the primary-side coil 25 and the secondary-side coil 26) of the power generation apparatus 200.

Using such a configuration, it is possible to safely store the power harvested in the primary-side circuit 61 in the storage element 55, such as a battery or a capacitor, provided in the secondary-side circuit 62. Further, because the first heat dissipation plate 10a and the second heat dissipation plate 10b are provided in the primary-side circuit 61, the power of the generated electromagnetic noise 16 is large. As a result, compared to, for example, harvesting power using the heat dissipation plate 10 provided in the secondary-side circuit 62, the amount of harvested power can be sufficiently increased.

Note that in the power generation apparatus 200 shown in Fig. 19, no additional filter or the like is provided because the noise components affecting the electrical equipment 1 can be sufficiently suppressed by harvesting the electromagnetic noise 16 from the heat dissipation plates 10. The configuration is not limited to this, and a configuration for suppressing the noise components may be provided as will be described below.

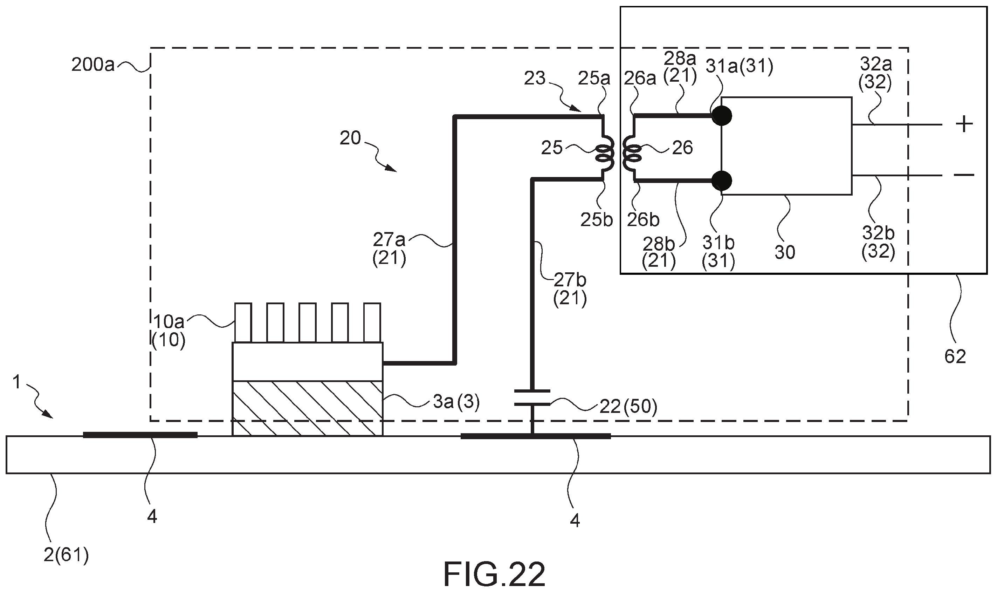

Fig. 22 is a schematic diagram showing another configuration example of the power generation apparatus according to the present embodiment. The power generation apparatus 200a shown in Fig. 22 illustrates an example in which the heat dissipation plate 10 is connected to only one input terminal 31 of the rectification circuit 30. The power generation apparatus 200a is applied, for example, when only one heat dissipation plate 10 is provided in the primary-side circuit 61.

The transmission unit 20 of the power generation apparatus 200a has the transformer 23, the pair of primary-side transmission lines 27a and 27b, the capacitor 22, and the pair of secondary-side transmission lines 28a and 28b. On the primary side of the power generation apparatus 200a, the first heat dissipation plate 10a is connected to the primary-side terminal 25a of the transformer 23 via the primary-side transmission line 27a. Furthermore, one end of the capacitor 22 is connected to the GND (ground pattern 4) of the primary-side circuit 61, and the other end of the capacitor 22 is connected to the primary-side terminal 25b of the transformer 23 via the primary-side transmission line 27b. On the secondary side, the first input terminal 31a of the rectification circuit 30 is connected to the secondary-side terminal 26a of the transformer 23 via the secondary-side transmission line 28a. Furthermore, the second input terminal 31b of the rectification circuit 30 is connected to the secondary-side terminal 26b of the transformer 23 via the secondary-side transmission line 28b. As described above, the transmission unit 20 of the power generation apparatus 200a connects the heat dissipation plate 10 to one of the pair of input terminals 31 and connects the GND of the electrical equipment 1 to another of the pair of input terminals 31 via the capacitor 22.

For example, as EMC measures for eliminating noise components in high-frequency bands that are not regarded as harvested targets, a method for releasing the noise components to the GND is employed. If the primary-side terminal 25b is electrically connected to the ground pattern 4 without the capacitor 22, the heat dissipation plate 10 connected to the primary-side terminal 25a is electrically connected to the ground pattern 4 via the primary-side coil 25 of the transformer 23. In this case, the DC components generated in the heat dissipation plate 10 may flow into the ground pattern 4, causing a leak current.

In order to avoid such a leak current, the capacitor 22 is inserted between the primary-side terminal 25b of the transformer 23 and the ground pattern 4 in the power generation apparatus 200a. Because the heat dissipation plate 10 is DC-isolated from the ground pattern 4 by the capacitor 22, a leak current is avoided. Meanwhile, the capacitor 22 functions as the high-pass filter 50 selectively allowing noise components in high frequency bands that are not regarded as harvested targets to pass through the high-pass filter 50. This enables the noise components that are not regarded as harvested targets to be released to the GND. As described above, by using the configuration shown in Fig. 22, it is possible to achieve both the above-described EMC measures and the measures against a leak current even when the transformer 23 is used.

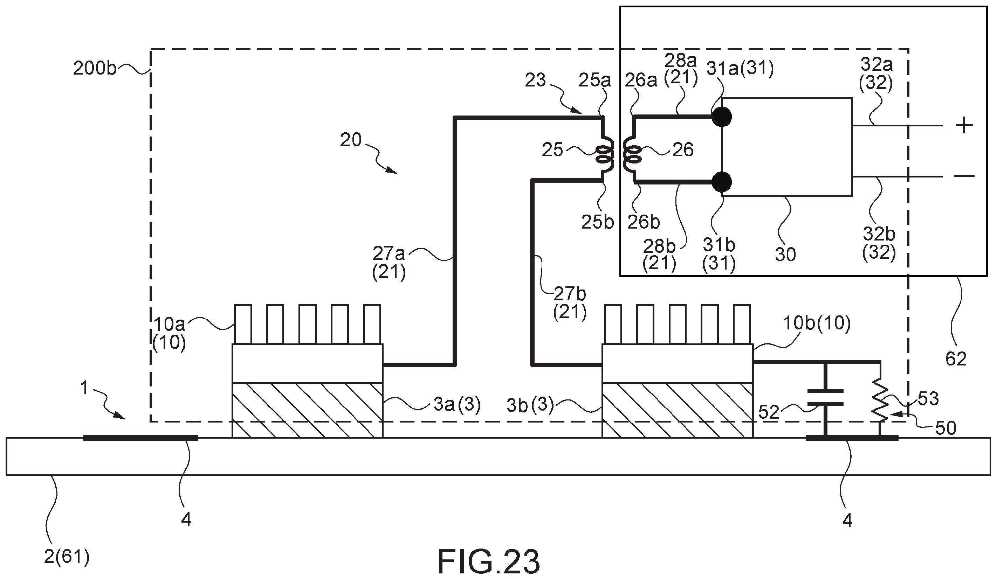

Fig. 23 is a schematic diagram showing another configuration example of the power generation apparatus according to the present embodiment. The power generation apparatus 200b shown in Fig. 23 illustrates an example in which the heat dissipation plates 10 are connected to both input terminals 31 of the rectification circuit 30 and includes the high-pass filter 50. The transmission unit 20 of the power generation apparatus 200b connects the different heat dissipation plates 10 to the respective input terminals 31 of the pair of input terminals 31 via the transformer 23. Furthermore, the high-pass filter 50 is provided for one of the heat dissipation plates 10 connected to the input terminals 31 of the pair of input terminals 31.

In the example shown in Fig. 23, the high-pass filter 50 is provided between the second heat dissipation plate 10b and the ground pattern 4 on the left side of the figure. Note that the first heat dissipation plate 10a and the second heat dissipation plate 10b are electrically connected via the primary-side coil 25 of the transformer 23. Accordingly, in the power generation apparatus 200b having the transformer 23, noise measures or the like can be implemented only by providing the high-pass filter 50 for one of the heat dissipation plates 10. Therefore, in Fig. 23, it is not necessary to provide the high-pass filter 50 for the first heat dissipation plate 10a.

Here, the high-pass filter 50 being the parallel circuit of the capacitor 52 and the resistive element 53 is used. In the high-pass filter 50, while noise components that are not regarded as harvested targets are released to the ground pattern 4, the noise components can be dissipated by the capacitor 52 and the resistive element 53 (see Fig. 8 and the like). As a result, both EMC measures and measures against high-voltage ringing can be provided. Note that the type of the high-pass filter 50 is not limited to this. For example, any filter matching the frequency or the like of the electromagnetic noise 16 that is regarded as a harvested target may be provided between one of the heat dissipation plates 10 and the ground pattern 4.

[Example]

Hereinafter, the operation of power generation using the power generation apparatus 200b shown in Fig. 23 will be specifically described as an example to which the present technology is applied. A TV was used as the electrical equipment 1 to which the power generation apparatus 200b is applied. For example, as in the power supply substrate 65 shown in Fig. 21, the power supply substrate 65 of the TV is separated into the primary-side circuit 61 and the secondary-side circuit 62. In the example, the power generation apparatus 200b was configured by utilizing two heat dissipation plates 10 provided in the primary-side circuit 61 of the power supply substrate 65 of the TV.

First, the TV was turned on, and in the configuration of the power generation apparatus 200, a load resistance of 10 kΩ was actually inserted between the output terminals (the first output terminal 32a and the second output terminal 32b) of the rectification circuit 30, and the voltage applied to the load resistance was measured. As a result, an output of appropriately 4 V was obtained.

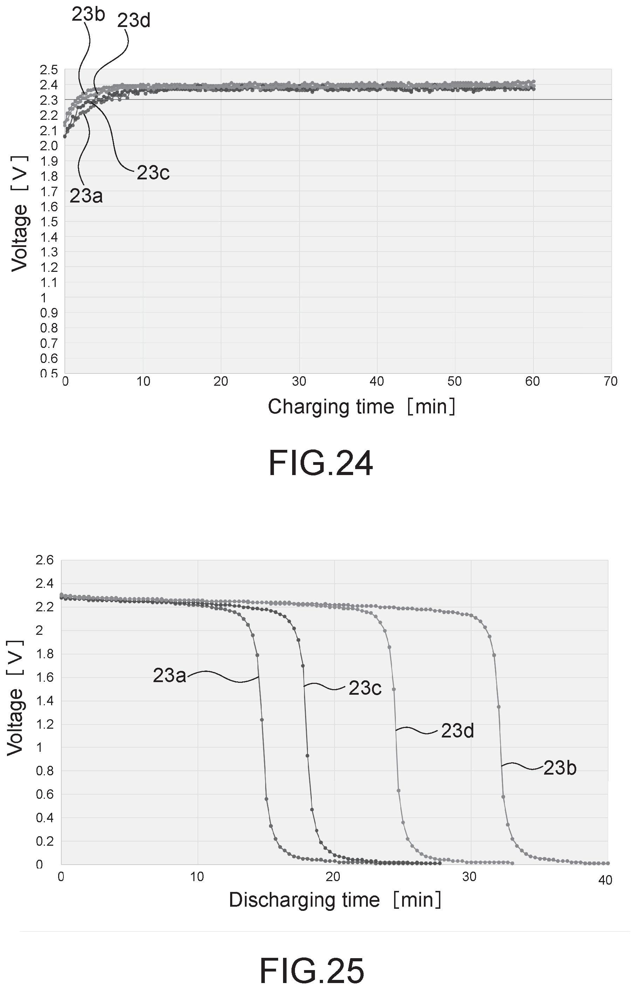

Fig. 24 is a graph showing the charging characteristics of the battery according to the power generation apparatus. Fig. 25 is a graph showing the discharging characteristics of the battery according to the power generation apparatus. Figs. 24 and 25 show the measurement results of the charging and discharging experiments of the battery (storage element 55) using the power generation apparatus 200b applied to the TV. In this measurement, a battery having a capacity of 4 mAh and an output voltage of 2.3 V was used. Furthermore, as the transformer 23 of the power generation apparatus 200b, four common-mode choke coils having different inductances were used. The inductances of transformers 23a, 23b, 23c, and 23d shown in Figs. 24 and 25 are 190 mH, 159 mH, 100 mH, and 68 mH, respectively.

The graph shown in Fig. 24 illustrates the charging characteristics obtained when the battery was charged during TV viewing using the power generation apparatus 200b with the respective transformers 23a to 23d. In the graph, the vertical axis represents the voltage [V] of the battery during charging, and the horizontal axis represents the charging time [min]. The graph in Fig. 24 shows that, regardless of which transformer 23 was used, the voltage of the battery increased to approximately 2.4 V within about 10 minutes after the start of charging, thereby charging the battery. Note that the battery was charged for 60 minutes.

The graph shown in Fig. 25 illustrates the discharging characteristics obtained when the battery charged using the method shown in Fig. 24 was connected to a load resistance of 1 k$\Omega$ to discharge power. In the graph, the vertical axis represents the voltage [V] of the battery during discharging, and the horizontal axis represents the discharging time [min]. Note that the battery was not charged during discharging. For example, an output voltage of 2.3 V was maintained immediately after the start of discharging, but the voltage rapidly decreased as the battery approached empty. The larger the amount of charged power (charged amount), the longer the time before the voltage decreased.

The graph in Fig. 25 shows that the battery charged using the transformer 23b had the largest charged amount. Furthermore, the charged amounts became smaller in the order of the transformers 23d, 23c, and 23a. As described, it was found that when the transformer 23b with the largest charged amount was used, a maximum charged amount of 1.2 mAh was achievable at an output voltage of 2.3 V. This corresponds to 2.76 mWh of power. Note that although the transformer 23b showed the largest charged amount in this configuration, the inductance or type of the transformers 23 can be appropriately selected according to the conditions of the heat dissipation plates 10, the amount of harvestable power, or the like.

In the above description, charging was performed during TV viewing. However, power can also be harvested during standby. The amount of power harvested during standby was about one-tenth of that during TV viewing. However, approximately 0.14 mAh of power was harvested at an output voltage of 2.3 V. This corresponds to 0.32 mWh of power.

On the basis of the above measurement results, the total power in this configuration is calculated. For example, assuming 12 hours of TV viewing and 12 hours of standby, 48 kW of power can be harvested and effectively utilized over one year. When such harvested power is utilized around the TV, application to, for example, charging the TV's remote controller, reducing the TV's standby power, or the like can be considered.

Here, the measurement results of the above example are compared with those of a solar panel assumed to be applied to a TV's remote controller. For example, the power harvested using a typical 3 cm $\times$ 2 cm solar panel is approximately 0.08 mWh when receiving indoor light of approximately 500 lux. In contrast, when the present technology is employed, the power harvested during the TV's standby is as high as 0.32 mWh, indicating that the power can be harvested at an efficiency about four times that of the solar panel.

Furthermore, in a remote controller that utilizes BLE (Bluetooth Low Energy (TM)), the power consumption is approximately 5 $\mu$Wh when an operation button is used about 100 times a day. In this respect as will, the power consumed by the remote controller can be sufficiently harvested using the present technology. As a result, energy harvesting systems or the like capable of properly charging various peripheral devices can be easily constructed.

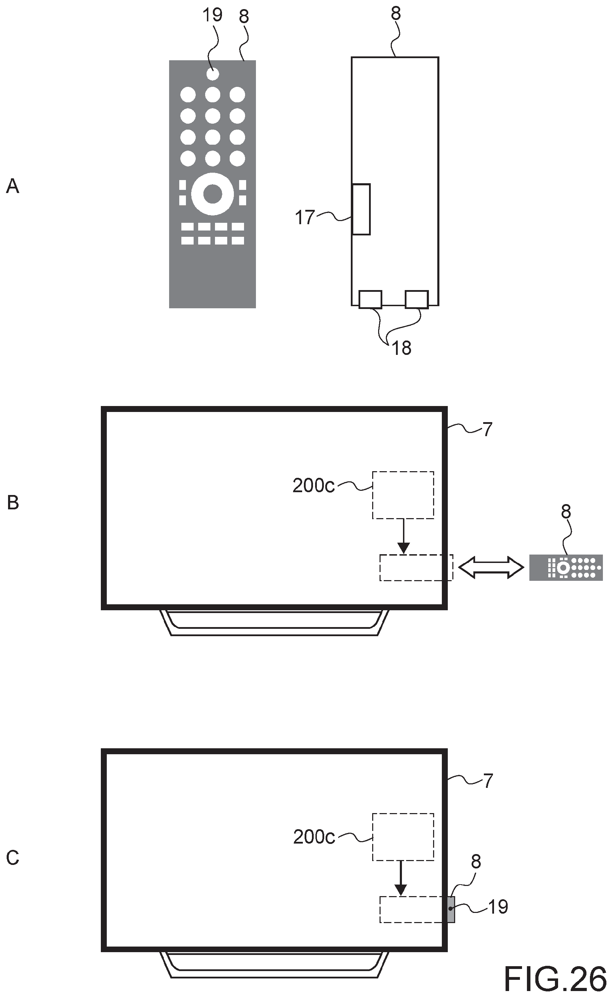

Fig. 26 is a schematic diagram showing an application example of the power generation apparatus. In Fig. 26, the power generation apparatus 200c is used to charge the secondary battery of a remote controller 8 of a TV 7. The power generation apparatus 200c can be configured, for example, by combining the power generation apparatus 200b shown in Fig. 23 with the storage unit 40b shown in Fig. 17. In this case, the secondary battery of the remote controller 8 is used instead of the battery 56 of the storage unit 40b. It should be understood that the configuration of the power generation apparatus 200 is not limited to this, and other configurations may also be employed.

The diagram on the left side of A of Fig. 26 is a schematic diagram showing an outline of the remote controller 8, and the diagram on the right side is a schematic diagram showing the positions of charging terminals provided in the remote controller 8. The remote controller 8 has two types of charging terminals that are a USB charging terminal 17 and a TV charging terminal 18 connected to the power generation apparatus 200c inside the TV 7. The USB charging terminal 17 is a terminal used to charge a secondary battery via a USB connector. In contrast, the TV charging terminal 18 is connected to a terminal provided inside the TV 7, to which power is supplied from the power generation apparatus 200c.

For example, an insertion groove that accommodates the remote controller 8 is formed on a lateral surface of the TV 7, and an output terminal of the power generation apparatus 200c that is used to connect to the TV charging terminal 18, is provided inside the insertion groove. As shown in B of Fig. 26, the remote controller 8 is appropriately inserted into and removed from the insertion groove for use. Furthermore, the insertion groove also functions as an accommodation place for the remote controller 8.

As shown in C of Fig. 26, when the remote controller 8 is accommodated in the insertion groove, the power generation apparatus 200c is connected to the TV charging terminal 18 to start charging the secondary battery of the remote controller 8. As a result, when the remote controller 8 is not in use, charging with power harvested from the TV 7 becomes possible. At this time, a light-emitting element 19, such as an LED, provided in the remote controller 8 may be lit to indicate that the secondary battery is being charged.

Because the amount of the electromagnetic noise 16 generated in the heat dissipation plate 10 of the primary-side circuit 61 of the power supply substrate 65 is large, it is expected that power can be efficiently harvested. On the other hand, electrically connecting the heat dissipation plate 10 of the primary-side circuit 61 to the rectification circuit 30 provided in the secondary-side circuit 62 does not satisfy safety regulations such as UL standards. As described above, due to this safety concern, it has been difficult to utilize the heat dissipation plate 10 of the power supply substrate 65 that generates a large amount of the electromagnetic noise 16.

In the power generation apparatuses 200, 200a, 200b, and 200c according to the present embodiment, the heat dissipation plate 10 provided in the primary-side circuit 61 of the electrical equipment 1 is connected via the transformer 23 to the rectification circuit 30 provided in the secondary-side circuit 62. As a result, because the heat dissipation plate 10 can be electrically isolated from the rectification circuit 30, it is possible to utilize the heat dissipation plate 10 that generates a large amount of the electromagnetic noise 16 while satisfying safety regulations. As a result, the power harvesting efficiency from the electrical equipment 1 can be significantly improved.

Furthermore, although the above example has mainly described the case in which the present technology is applied to the TV 7, the present technology can be applied to any electrical equipment 1 as long as the product has the power supply substrate 65 separated into the primary-side circuit 61 and the secondary-side circuit 62. For example, the present technology can be applied to electrical equipment 1 for domestic use, such as refrigerators, washing machines, air conditioners, personal computers, audio systems, or vending machines. In this case, power may also be applied for operations such as data updates (firmware updates) executed during the standby mode of the electrical equipment 1 or file download, in addition to, for example, charging the remote controller 8.

Furthermore, the present technology can be applied not only to electrical equipment for home use but also to industrial equipment, such as elevators, escalators, manufacturing robots, machine tools, or conveyance systems. Because industrial equipment generally has high power consumption, the application of the present technology makes it possible to supply a higher amount of power through energy harvesting.

<Third Embodiment>

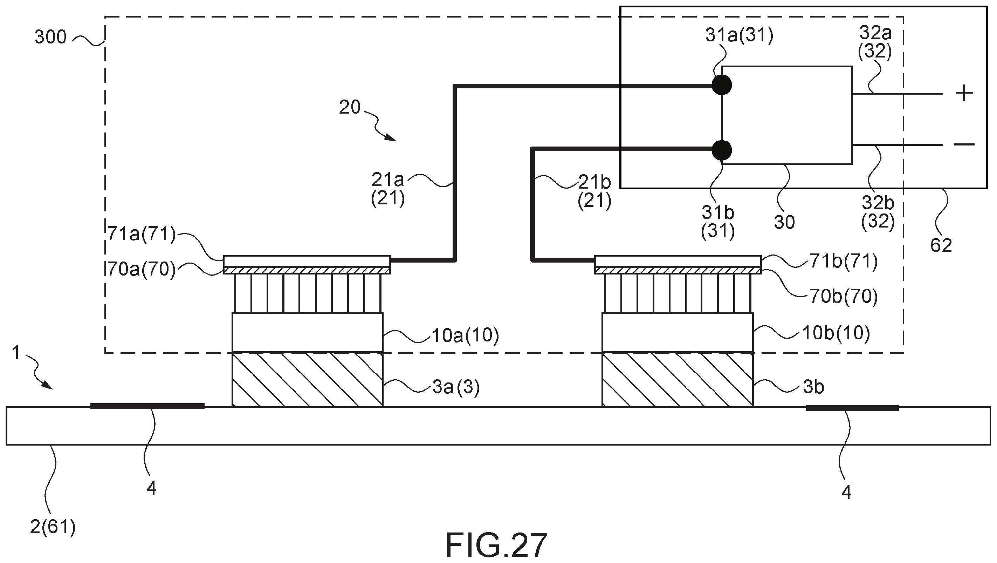

Fig. 27 is a schematic diagram showing a configuration example of the power generation apparatus according to a third embodiment. In the present embodiment, another method for harvesting power from the heat dissipation plate 10 of the primary-side circuit 61 of the electrical equipment 1 while satisfying safety regulations will be described. In the power generation apparatus 300 shown in Fig. 27, a method for connecting the transmission unit 20 to the heat dissipation plate 10 is different from that in the above embodiments.

In the present embodiment, the circuit substrate 2 on which the semiconductor element 3 is provided is a primary-side power supply substrate that is included in the primary-side circuit 61 of the electrical equipment 1. Accordingly, the semiconductor element 3 and the heat dissipation plate 10 that dissipates heat from the semiconductor element 3 are both provided in the primary-side circuit 61. In contrast, the rectification circuit 30 and the storage unit 40 are provided in the secondary-side circuit 62 of the electrical equipment 1.

The transmission unit 20 of the power generation apparatus 300 has an insulating sheet 70, a conductive sheet 71, and the transmission line 21. The insulating sheet 70 is an insulating sheet member arranged in contact with the heat dissipation plate 10. The insulating sheet 70 is, for example, an insulating resin film, a glass plate, or the like. The conductive sheet 71 is a conductive sheet member connected to the heat dissipation plate 10 via capacitive coupling through the insulating sheet 70. The conductive sheet 71 is a metal sheet, a metal braided material, or the like. The transmission line 21 is a wiring line that connects the conductive sheet 71 to the input terminal 31 of the rectification circuit 30. Accordingly, the input terminal 31 of the rectification circuit 30 is connected to the conductive sheet 71.

The electromagnetic noise 16 generated in the heat dissipation plate 10 is received by the conductive sheet 71 through the insulating sheet 70. As a result, the electromagnetic noise 16 is generated in the conductive sheet 71. Note that the heat dissipation plate 10 and the conductive sheet 71 are electrically isolated by the insulating sheet 70 provided therebetween. In other words, it can be said that the heat dissipation plate 10 and the conductive sheet 71 are connected via capacitive coupling.

Furthermore, AC power of the electromagnetic noise 16 generated in the conductive sheet 71 is transmitted to the input terminal of the rectification circuit 30 via the transmission line 21. As described above, the transmission unit 20 of the power generation apparatus 300 is connected to the heat dissipation plate 10 via capacitive coupling and used to transmit the AC power of the electromagnetic noise generated in the heat dissipation plate 10. As a result, power can be harvested from the heat dissipation plate 10 in the primary-side circuit 61 of the electrical equipment 1 while satisfying safety regulations.

In the example shown in Fig. 27, a first insulating sheet 70a and a first conductive sheet 71a are laminated in this order onto the first heat dissipation plate 10a on the left side of the figure. Furthermore, the first conductive sheet 71a is connected to the first input terminal 31a of the rectification circuit 30 via the first transmission line 21a. Similarly, a second insulating sheet 70b and a second conductive sheet 71b are laminated in this order onto the second heat dissipation plate 10b on the right side of the figure. Furthermore, the second conductive sheet 71b is connected to the second input terminal 31b of the rectification circuit 30 via the second transmission line 21b.

With this configuration, power can be harvested from both the first heat dissipation plate 10a and the second heat dissipation plate 10b provided in the primary-side circuit 61. As described above, by using the insulating sheet 70 and the conductive sheet 71, the power generation apparatus 300 that harvests power from the heat dissipation plate 10 in the primary-side circuit 61 can be easily configured without incorporating a transformer.

Furthermore, by using this method, it is possible to combine not only the heat dissipation plate 10 of the primary-side circuit 61 but also that of the secondary-side circuit 62. Accordingly, for example, even when the first heat dissipation plate 10a is provided in the primary-side circuit 61 and the second heat dissipation plate 10b is provided in the secondary-side circuit 62, power can be harvested from each heat dissipation plate 10.

[Harvesting Power from Heat Dissipation Plate]

Hereinafter, measurement results obtained when power was actually harvested from the heat dissipation plates 10 will be described. In this measurement, power was harvested from the heat dissipation plates 10 being provided in a TV and serving as an example of the electrical equipment 1. Furthermore, five heat dissipation plates 10 provided in the primary-side circuit 61 in the power supply substrate of the TV were targeted as the heat dissipation plates 10. Here, the heat dissipation plates 10 (HS: Heat Sink) used as measurement targets will be referred to as HS1, HS2, HS3, HS4, and HS5.

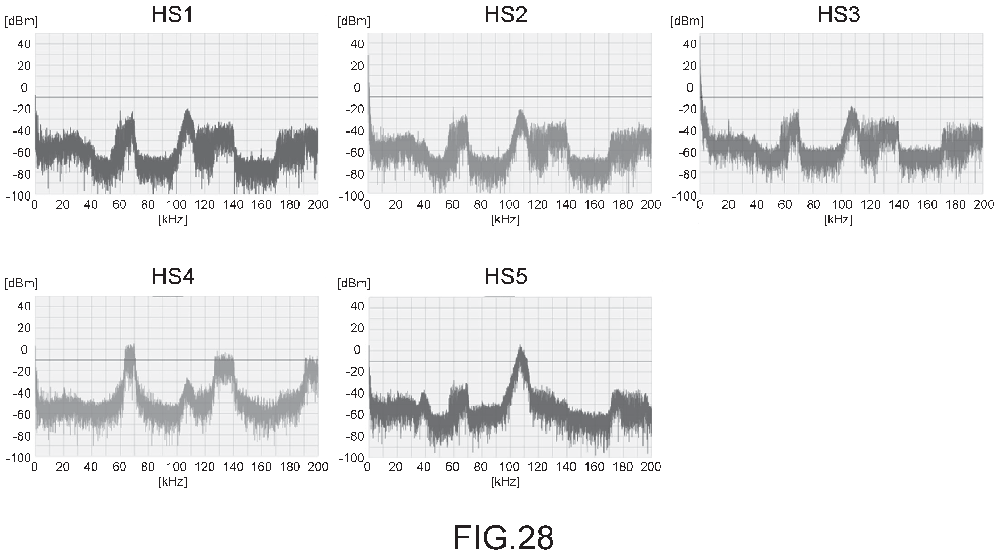

Fig. 28 is a set of graphs showing the noise characteristics of the heat dissipation plates 10 provided in the primary-side circuit 61. In Fig. 28, the frequency distributions of the electromagnetic noise generated in HS1 to HS5 are shown. In each graph, the horizontal axis represents the frequency [kHz], and the vertical axis represents the noise power level [dBm] at each frequency. Furthermore, in each graph, a thick horizontal line represents the -10 dBm line.

For example, in HS1, HS2, and HS3, the power level was -10 dBm or less at frequencies of 10 kHz or higher. In contrast, in HS4 and HS5, peaks exceeding -10 dBm were observed at frequencies of 10 kHz or higher, indicting that relatively large noise was generated.

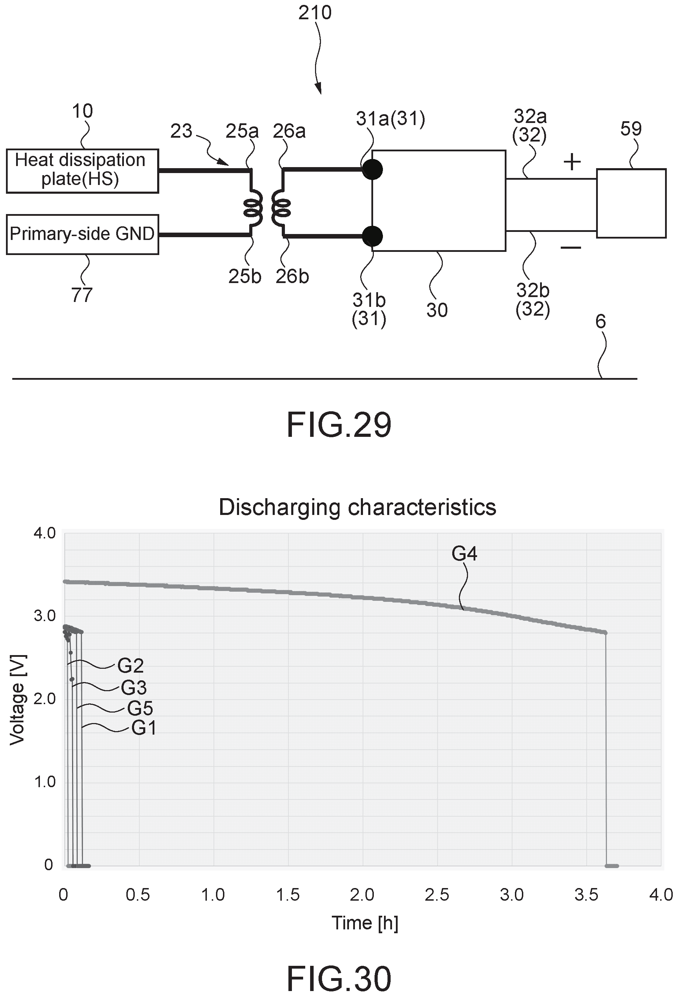

Fig. 29 is a schematic diagram showing the circuit configuration of a power generation apparatus 210 that uses the heat dissipation plate 10 in the primary-side circuit 61. The power generation apparatus 210 includes the transformer 23, the rectification circuit 30, and the heat dissipation plate 10 in the primary-side circuit 61. Furthermore, a battery 59 is connected on an output side of the power generation apparatus 210.

As shown in Fig. 29, one primary-side terminal 25a of the transformer 23 is connected to the heat dissipation plate 10 (any one of HS1 to HS5) in the primary-side circuit 61, and the other primary-side terminal 25b is connected to the primary-side GND 77 provided in the primary-side circuit 61. Furthermore, one secondary-side terminal 26a of the transformer 23 is connected to the first input terminal 31a of the rectification circuit 30, and the other secondary-side terminal 26b is connected to the second input terminal 31b of the rectification circuit 30. Furthermore, the first output terminal 32a of the rectification circuit 30 is connected to the positive electrode of the battery 59, and the second output terminal 32b of the rectification circuit 30 is connected to the negative electrode of the battery 59.

The above-described primary-side GND 77 is also referred to as a power supply GND or Primary GND (PG) on a power supply substrate and includes, for example, a conductor such as a ground pattern provided in the primary-side circuit 61 of the electrical equipment 1. The primary-side GND 77 is used in a floating state with respect to the earth ground 6 and supplies a reference potential to the electrical equipment 1 (here, a TV). The heat dissipation plate 10 provided in the primary-side circuit 61 is mounted on a switching element or the like in a floating state with respect to the primary-side GND 77. Accordingly, the heat dissipation plate 10 also becomes a conductor that is in an electrically floating state with respect to the earth GND 6.

Note that although the transformer 23 is directly connected to the primary-side GND 77 in the power generation apparatus 210, a capacitor may, for example, be provided between the transformer 23 and the primary-side GND 77 to prevent a leakage current (see Fig. 22 and the like).

As a measurement of power harvesting from the heat dissipation plates 10 (HS1 to HS5) in the primary-side circuit 61, the battery 59 was first charged for a certain period of time using the circuit configuration shown in Fig. 29, and the discharging characteristics were then examined. Specifically, the discharged battery 59 was connected to the power generation apparatus 210 and charged for one hour. Then, the charged battery 59 was connected to a 1 kΩ resistive element to be discharged, and the voltage change of the battery was measured.

Fig. 30 is a graph showing the discharging characteristics of the battery 59 charged using the power generation apparatus 210 shown in Fig. 29. The traces G1 to G5 shown in Fig. 30 correspond to the discharging characteristics of HS1 to HS5, respectively. In the graph, the horizontal axis represents the time [h], and the vertical axis represents the voltage [V] applied to the resistive element. In this graph of the discharging characteristics, the longer the time until the voltage reaches 0 V, the larger the amount of power charged to the battery 59, that is, the larger the amount of power harvested from the heat dissipation plates 10.

In this measurement, it was confirmed that the time until the voltage reached 0 V was longest when the battery 59 was charged using HS4, and a relatively large amount of power (37.3 [mWh]) was harvested from HS4. Note that for the other heat dissipation plates 10, the voltage reached 0 V at a relatively earlier stage compared to HS4. For example, the amounts of power harvested from H1, H2, H3, and H5 were 0.95, 0.17, 0.39, and 0.67 [mWh], respectively.

As described with reference to Fig. 28, among the heat dissipation plates 10 other than HS4, H5 generated noise with relatively large energy, similarly to HS4. However, in the configuration shown in Fig. 29, the amount of power harvested from HS5 was substantially the same as the amount of power harvested from each of HS1, HS2, and HS3, which exhibit smaller noise levels. In this respect, the present inventor considered inadequate impedance matching as a possible reason for the small amount of power harvested from HS5 and therefore improved the circuit configuration.

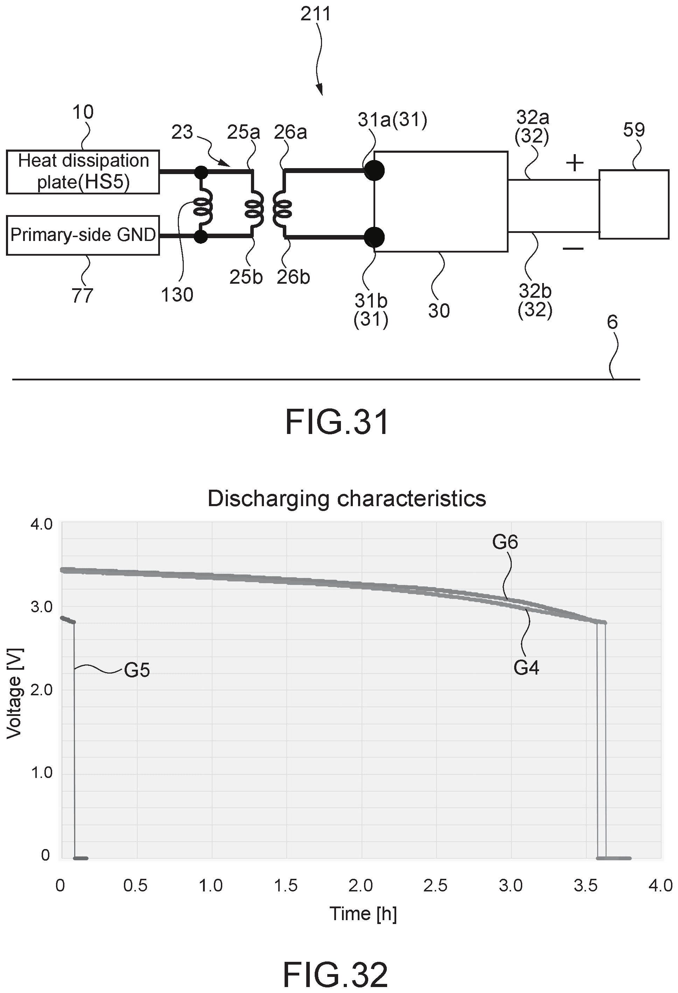

Fig. 31 is a schematic diagram showing the circuit configuration of a power generation apparatus 211 in which the impedance matching is adjusted. The power generation apparatus 211 is obtained by adding an inductor element 130 to the power generation apparatus 210 shown in Fig. 29. Specifically, the inductor element 130 is connected between the primary-side terminals 25a and 25b of the transformer 23 (between the heat dissipation plate 10 and the primary-side GND 77). The inductance of the inductor element 130 is set to adjust the impedance matching between the heat dissipation plate 10 serving as a harvesting target and an output-side circuit including the transformer 23. Here, the inductor element 130 having an inductance of 4 [mH] was used for HS5.

Fig. 32 is a graph showing the discharging characteristics of the battery 59 charged using the power generation apparatus 211 shown in Fig. 31. In Fig. 32, the trace (G6) of the discharging characteristics of the battery 59 charged using the power generation apparatus 211 that harvests power from HS5 is shown. Furthermore, for comparison, the trace G5 of the discharging characteristics obtained when power from HS5 was charged using the power generation apparatus 210 shown in Fig. 29, and the trace G4 of the discharging characteristics obtained when power from HS4 was charged using the power generation apparatus 210 are shown.

For example, compared to the discharging characteristics (G5) obtained when charging was performed without the inductor element 130, the trace G6 shows that the time until the voltage reached 0 was significantly increased, and the discharging characteristics became substantially the same as the discharging characteristics (G4) of HS4. In this case, it was confirmed that the amount of power harvested from HS5 was 37.8 [mWh], and a large amount of power at the same level as HS4 was harvested. As described above, the amount of harvestable power can be increased by adjusting impedance matching using the inductor element 130 or the like.

From the above results, it was found that a large amount of power was harvested using HS4 and HS5. On the basis of this, considering that the harvested amount could be increased by using the two heat dissipation plates 10 (HS4 and HS5), the present inventor further improved the circuit configuration.

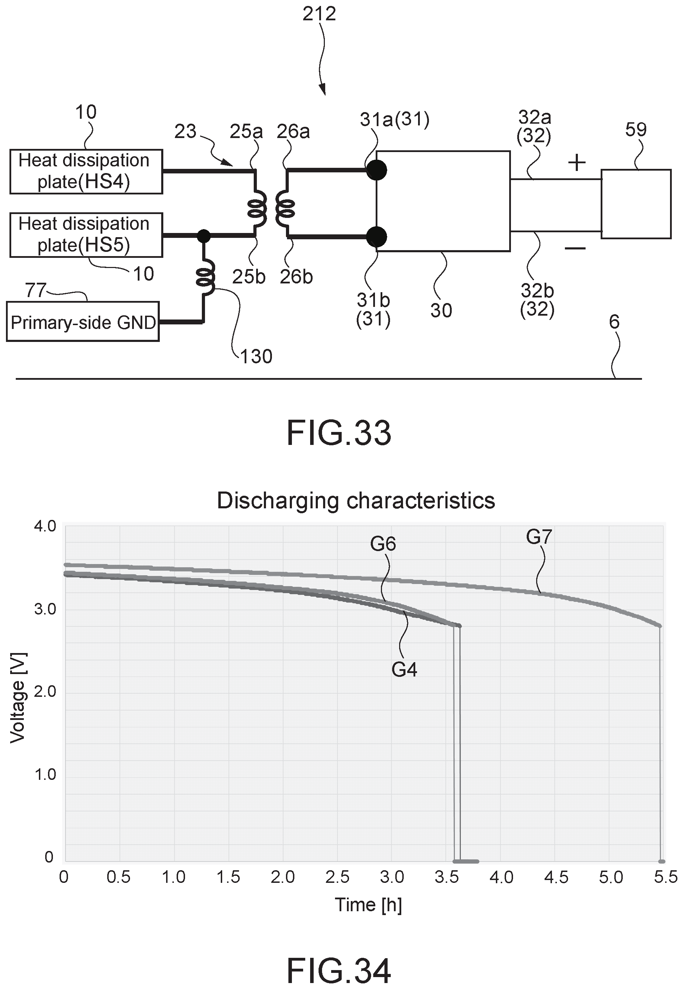

Fig. 33 is a schematic diagram showing the circuit configuration of a power generation apparatus 212 that harvests power from two heat dissipation plates 10. The power generation apparatus 212 is an apparatus that harvests power from both heat dissipation plates 10 while adjusting necessary impedance matching for the two heat dissipation plates 10 (HS4 and HS5).

As shown in Fig. 33, in the power generation apparatus 212, one heat dissipation plate 10 (here, HS4) is connected to one primary-side terminal 25a of the transformer 23, and the other heat dissipation plate 10 (here, HS5) is connected to the other primary-side terminal 25b of the transformer 23. In addition, in the power generation apparatus 212, the primary-side terminal 25b to which HS5 is connected is connected to the primary-side GND 77 via the inductor element 130. With such a configuration, impedance matching can be adjusted for HS5.

Fig. 34 is a graph showing the discharging characteristics of the battery 59 charged using the power generation apparatus 212 shown in Fig. 33. In Fig. 34, the trace (G7) of the discharging characteristics of the battery 59 charged using the power generation apparatus 212 connected to HS4 and HS5 is shown. Furthermore, for comparison, the trace G4 of the discharging characteristics obtained when power from HS4 was charged using the power generation apparatus 210 shown in Fig. 29, and the trace G6 of the discharging characteristics obtained when power from HS5 was charged using the power generation apparatus 211 are shown.

For example, from the trace G7, it is found that the amount of harvested power was further increased compared to G4 and G6, from which large amounts of power were harvested. This is considered to be because power was efficiently harvested from the two heat dissipation plates 10 (HS4 and HS5), and the amount of power harvested from HS4 and HS5 was 60.7 mWh.

As described above, by adjusting impedance matching with the heat dissipation plates 10 serving as power harvesting targets, the amount of harvestable power can be significantly increased. Furthermore, even when two heat dissipation plates 10 are used, power can be efficiently harvested from both heat dissipation plates 10 through impedance matching. As a result, for example, power can be harvested by arbitrarily combining heat dissipation plates 10 having large noise levels, thereby enabling a significant increase in harvesting efficiency.

<Other Embodiments>

The present technology is not limited to the embodiments described above, and various other embodiments can be implemented.

In the above embodiments, a configuration in which the power generation apparatus includes at least one heat dissipation plate has been described. However, the power generation apparatus does not necessarily include a heat dissipation plate. For example, the power generation apparatus may be an attachment type that is connected to a heat dissipation plate provided in existing electrical equipment. Note that the heat dissipation plate may be configured to have a potential different from the potential of the GND of electrical equipment.

Such an attachment-type power generation apparatus is configured to include, for example, a cable (transmission unit) and a rectification circuit for connection to a heat dissipation plate. It should be understood that, for example, a storage unit connected on an output side of the rectification circuit, may also be appropriately provided. As a result, power can be efficiently harvested from various electrical equipment. Furthermore, by combining the power generation apparatus with sensors or the like, it is easy to configure a monitoring apparatus or the like that detects the state of electrical equipment.

As described above, the present technology realizes energy harvesting by connecting a heat dissipation plate to a rectification circuit via a transmission unit in electrical equipment. This connection method includes connecting, to at least one heat dissipation plate having a potential different from the potential of the GND of the electrical equipment, the transmission unit used to transmit AC power of electromagnetic noise generated in the heat dissipation plate directly or via capacitive coupling, and connecting the transmission unit to the rectification circuit rectifying the AC power and outputting DC power. With this connection method, power can be efficiently harvested from the electrical equipment.

The present technology can be applied to various metal bodies that are connected to electrical equipment and receive electromagnetic noise. Specifically, even metal bodies other than the above heat dissipation plate can efficiently harvest power of electromagnetic noise, as long as they are provided in electrical equipment, receive electromagnetic noise from a noise source, and float from an earth GND.

Here, the metal bodies provided in the electrical equipment refer to members made of metal materials and included in the electrical equipment, and refer to metal product parts included in the electrical equipment. The heat dissipation plate described in the above embodiments is an example of a metal body provided in electrical equipment. For example, the description of the heat dissipation plate in the above embodiment may be appropriately read as a description of a metal body. Hereinafter, a power generation apparatus that utilizes a metal body provided in electrical equipment will be described.

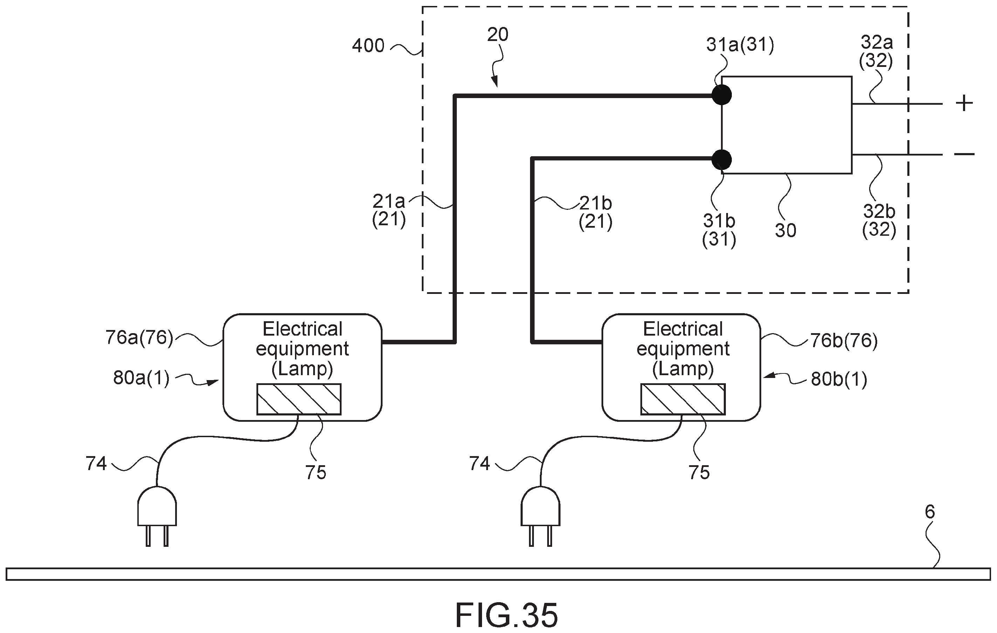

Fig. 35 is a schematic diagram showing a configuration example of a power generation apparatus that utilizes metal bodies provided in electrical equipment. The power generation apparatus 400 is an apparatus that harvests, as power, electromagnetic noise received by the respective metal bodies 76 provided in two pieces of electrical equipment 1. For example, it is possible to harvest power from the metal bodies 76 provided in the two pieces of ungrounded electrical equipment 1. This represents a configuration in which power is harvested from two different noise sources.

First, the electrical equipment 1 to which the power generation apparatus 400 is connected will be described. The electrical equipment 1 has a power supply cable 74, an internal circuit 75, and the metal body 76. The power supply cable 74 is connected to an external power supply line (AC power supply). The power supply cable 74 used here is a two-terminal type cable without a ground wire connected to the earth GND 6.

The internal circuit 75 refers to various circuits used to operate the electrical equipment 1 and has the power supply cable 74 connected thereto. The internal circuit 75 includes semiconductor elements such as switching transistors or control ICs and therefore serves, for example, as a noise source in the electrical equipment 1. It should be understood that the noise source in the electrical equipment is not limited to the internal circuit 75, and other components (such as power wiring lines) may serve as noise sources because all of these generate electromagnetic noise.

The metal body 76 is a metal member provided in the electrical equipment 1. In the present embodiment, a lamp is used as the electrical equipment 1. In this case, a metal member, such as a shade, an arm, a housing, or the like, that is included in the lamp corresponds to the metal body 76 provided in the lamp. Furthermore, the internal circuit 75 includes a ground pattern or the like that serves as the GND of the electrical equipment 1. Such a ground pattern also corresponds to the metal body 76 provided in the electrical equipment 1. Note that structural components such as a housing and metal films on circuits such as ground patterns may be connected to each other inside the electrical equipment or may be used in an electrically isolated state.

With reference to Fig. 35, an example will be described in which the respective metal bodies 76 provided in the two pieces of electrical equipment 1 are connected to the rectification circuit 30 via the transmission unit 20. Hereinafter, the lamp (electrical equipment 1) shown on the left side of the figure will be referred to as a first lamp 80a, and the lamp (electrical equipment 1) shown on the right side of the figure will be referred to as a second lamp 80b. Furthermore, the metal body 76 provided in the first lamp 80a will be referred to as a first metal body 76a, and the metal body 76 provided in the second lamp 80b will be referred to as a second metal body 76b. In Fig. 35, the first lamp 80a corresponds to first electrical equipment, and the second lamp 80b corresponds to second electrical equipment.

Note that the number of the electrical equipment 1 (metal bodies 76) used in the power generation apparatus 400 is not limited. For example, the power generation apparatus 400 may be configured for single electrical equipment 1. Furthermore, at least one metal body 76 in a floating state with respect to the earth GND 6 needs only to be connected to the rectification circuit 30. For example, it is also possible to employ a configuration in which, among the two metal bodies 76 connected to the rectification circuit 30, one metal body 76 is in a floating state with respect to the earth GND 6 while the other metal body 76 is connected to the earth GND 6.

Next, the power generation apparatus 400 will be described. The power generation apparatus 400 is configured, for example, as an externally connected apparatus that is connected to the existing electrical equipment 1 (the first lamp 80a and the second lamp 80b) in use. As shown in Fig. 35, the power generation apparatus 400 has the transmission unit 20 and the rectification circuit 30.

The transmission unit 20 is directly connected to the metal body 76 being provided in the electrical equipment 1 and having a potential different from a potential of the earth GND 6, and is used to transmit AC power of electromagnetic noise generated in the metal body 76. Here, the metal body 76 having a potential different from the potential of the earth GND 6 refers, for example, to the metal body 76 in a floating state with respect to the earth GND 6. In the example shown in Fig. 35, both the first metal body 76a and the second metal body 76b have potentials different from the potential of the earth GND 6. For example, when the electrical equipment 1 is not grounded, the ground pattern serves as the metal body 76 in a floating state with respect to the earth GND 6. Furthermore, when the metal housing of the electrical equipment 1 is not connected to the earth GND 6, the metal housing also serves as the metal body 76 in a floating state with respect to the earth GND 6.

Note that when the ground pattern and the metal housing are connected to each other, the metal housing is also connected to the earth GND 6, provided that the electrical equipment 1 is grounded and the ground pattern is grounded. On the other hand, when the ground pattern and the metal housing are not connected to each other, the metal housing maintains a floating state with respect to the earth GND 6 even if the electrical equipment 1 is grounded. As described above, in the present disclosure, the metal body 76 being provided in the electrical equipment 1 and having a potential different from the potential of the earth GND 6 needs only to be any metal body that is not electrically connected to the earth GND 6.

These metal bodies 76 are connected to the input terminals 31 of the pair of input terminals 31 provided in the rectification circuit 30 via the transmission unit 20. Specifically, the transmission unit 20 connects the first metal body 76a to one (first input terminal 31a) of the pair of input terminals 31, and connects the second metal body 76b to another (second input terminal 31b) of the pair of input terminals 31.

As shown in Fig. 35, the transmission unit 20 has the two transmission lines 21 (fist transmission line 21a and second transmission line 21b). The first transmission line 21a is a connection cable that connects the first metal body 76a to the first input terminal 31a. The second transmission line 21b is a connection cable that connects the second metal body 76b to the second input terminal 31b. Respective ends of the first transmission line 21a and the second transmission line 21b are electrically directly connected to the first metal body 76a and the second metal body 76b, which are connection targets.

A method for directly connecting the transmission line 21 and the metal body 76 is not limited. For example, one end of the transmission line 21 (connection cable) is provided with, for example, a screwing terminal, crimp terminal, metal clip, or magnet that is used to electrically connect the transmission line 21 to an exposed portion or the like of the metal body 76. Furthermore, a pin, a socket, or the like may be used for the connection, or soldering, welding, or the like may be used for the connection.

Note that the configuration is not limited to directly connecting the transmission line 21 to the metal body 76, and the transmission line 21 may, for example, be connected to the metal body 76 via capacitive coupling. For example, one end of the transmission line 21 is provided with a metal pad, and the metal pad is affixed to the metal body 76. In this case, the metal pad and the metal body 76 do not need to be electrically connected. As a method for performing capacitive coupling, the technology using the insulating sheet 70 and the conductive sheet 71 described with reference to Fig. 27 can also be applied.

The rectification circuit 30 rectifies the AC power transmitted using the transmission unit 20 and outputs DC power. The rectification circuit 30 has the pair of input terminals 31 (first input terminal 31a and second input terminal 31b) to which the metal bodies 76 are connected via the transmission unit 20, and the pair of output terminals 32 (first output terminal 32a and second output terminal 32b) that output DC power. The rectification circuit 30 can be, for example, the rectification circuit described with reference to Figs. 13, 14, and the like.

As described above, the first lamp 80a and the second lamp 80b, to which the power generation apparatus 400 is connected, are connected to the AC power supply to receive power, but they are not connected to the earth GND 6 serving as the ground. Accordingly, each of the first metal body 76a and the second metal body 76b that are respectively included in the first lamp 80a and the second lamp 80b is in a floating state with respect to the earth GND 6. In this state, the first metal body 76a and the second metal body 76b function as antennas that receive electromagnetic noise.

Furthermore, the first lamp 80a and the second lamp 80b each include a noise source (for example, the internal circuit 75 or the like) that generates electromagnetic noise. Accordingly, each of the first metal body 76a and the second metal body 76b receives the electromagnetic noise emitted from its own electrical equipment 1 (the first lamp 80a, the second lamp 80b). Therefore, when the first metal body 76a and the second metal body 76b are connected to the respective input terminals 31 of the rectification circuit 30, the energy of the electromagnetic noise received by the first metal body 76a and the second metal body 76b is converted into DC power by the rectification circuit 30. As described above, the electromagnetic noise generated in each electrical equipment 1 can be efficiently harvested by causing the metal body 76 provided in each electrical equipment 1 to function as an antenna.

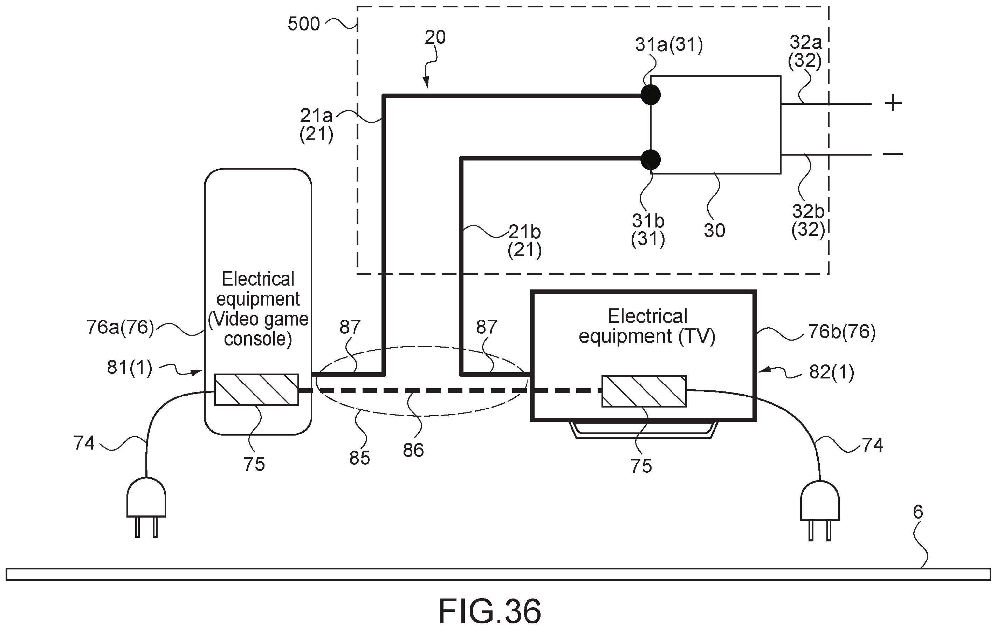

Fig. 36 is a schematic diagram showing a configuration example of a power generation apparatus that utilizes a signal cable. The power generation apparatus 500 shown in Fig. 36 connects the metal bodies 76 to the rectification circuit 30 using a signal cable 85 that connects the two pieces of electrical equipment 1 to each other. Here, the signal cable 85 refers to a cable for transmitting data signals such as analog signals or digital signals.

In the example shown in Fig. 36, a video game console 81 and a TV 82 are used as the electrical equipment 1 serving as power harvesting targets. Furthermore, a video transmission cable (for example, an HDMI (TM) cable, a DisplayPort (TM) cable, a DVI cable, an RGB cable, or the like) used to transmit video signals from the video game console 81 to the TV 82 is used as the signal cable 85. In Fig. 36, the video game console 81 and the TV 82 respectively correspond to first electrical equipment and second electrical equipment.

The video game console 81 and the TV 82 are connected to the AC power supply but are not grounded to the earth GND 6. In this case, the metal bodies 76 (such as housings or ground patterns) provided in the video game console 81 and the TV 82 are basically in a floating state with respect to the earth GND 6. Hereinafter, the metal body 76 (such as a housing) provided in the video game console 81 will be referred to as the first metal body 76a, and the metal body 76 (such as a housing) provided in the TV 82 will be referred to as the second metal body 76b.

As shown in Fig. 36, in the power generation apparatus 500, the first metal body 76a provided in the video game console 81 is connected to the first input terminal 31a of the rectification circuit 30 via the first transmission line 21a. Furthermore, the second metal body 76b provided in the TV 82 is connected to the second input terminal 31b of the rectification circuit 30 via the second transmission line 21b.

Here, the first transmission line 21a and the second transmission line 21b are wiring lines that function as the transmission unit 20 of the power generation apparatus 500, but these wiring lines are configured using the signal cable 85. As described above, the transmission unit 20 connects the first metal body 76a provided in the video game console 81 and the second metal body 76b provided in the TV 82 to the input terminals 31 of the pair of input terminals 31 of the rectification circuit 30 via the signal cable 85 (video transmission cable) that connects the video game console 81 to the TV 82.

In the power generation apparatus 500 that utilizes the signal cable 85, two connection terminals to which the signal cable 85 is connected and internal wiring lines that connect the respective connection terminals to the input terminals 31 of the pair of input terminals 31 of the rectification circuit 30 are provided. In this case, the connection terminals and the internal wiring lines function as the transmission unit 20 provided in the power generation apparatus 500. Note that the signal cable 85 connected to the power generation apparatus 500 can also be regarded as a part of the transmission unit 20.

The signal cable 85 includes, in addition to a signal line 86 (indicated by a dotted line in the figure) generally used to transmit signals, GND lines 87 used to connect to the GNDs (ground patterns) of the electrical equipment 1. The power generation apparatus 500 utilizes the GND lines 87 as the transmission lines 21 (the transmission line 20) used to connect the metal bodies 76 to the rectification circuit 30.

That is, in the power generation apparatus 500, the first metal body 76a and the second metal body 76b are connected to the input terminals 31 of the pair of input terminals 31 via the GND lines 87 included in the video transmission cable serving as the signal cable 85. Accordingly, the ground patterns provided in the video game console 81 and the TV 82 respectively function as the first metal body 76a and the second metal body 76b. This configuration can be regarded as one in which, with respect to, for example, the two pieces of electrical equipment 1 (the video game console 81 and the TV 82) each of which has a ground pattern not connected to the earth GND 6, the power generation apparatus 500 is inserted between the GNDs of the respective electrical equipment 1.

For example, in a signal cable such as an HDMI (TM) cable, differential transmission of video signals or the like is performed in a signal line. Therefore, even if the GND lines 87 are interrupted, that is, even if the power generation apparatus 500 is connected in the middle of the GND lines 87, signal transmission can still be properly performed. As described above, a power harvesting function can be introduced in the middle of the GND lines 87 of the signal cable 85. As a result, power can be easily harvested using various signal cables 85.

Note that in the video game console 81 and the TV 82, the power supply cable 74 of three terminals including a ground terminal may be used. When one electrical equipment 1 is grounded to the earth GND 6, the amount of power harvested from the grounded electrical equipment 1 is likely to reduce, but it is possible to harvest power from the ungrounded other electrical equipment 1 without problems. As described above, power can be harvested even if one electrical equipment 1 is grounded.

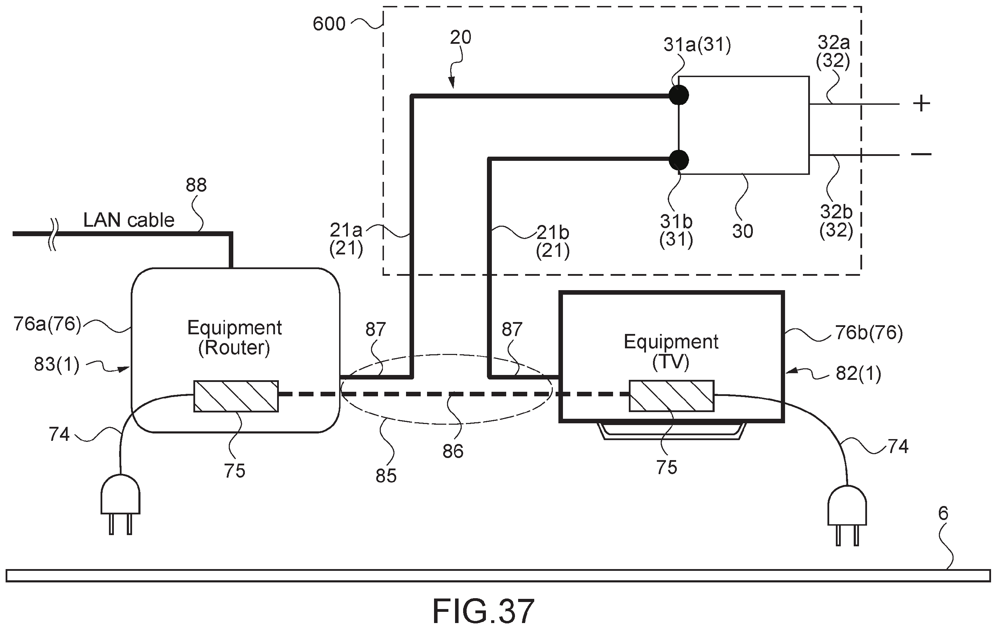

Fig. 37 is a schematic diagram showing another configuration example of a power generation apparatus that utilizes a signal cable. The power generation apparatus 600 shown in Fig. 37 connects the metal bodies 76 of the respective electrical equipment 1 to the rectification circuit 30 using a communication cable (LAN cable) as the signal cable 85. Here, a router 83 and the TV 82 are used as the electrical equipment 1 serving as power harvesting targets. The router 83 and the TV 82 respectively correspond to the first electrical equipment and the second electrical equipment.

The power generation apparatus 600 has a configuration in which the video transmission cable shown in Fig. 36 is replaced with a communication cable. Hereinafter, the metal body 76 (such as a housing) provided in the router 83 will be referred to as the first metal body 76a, and the metal body 76 (such as a housing) provided in the TV will be referred to as the second metal body 76b. Because the router 83 and the TV 82 are not grounded to the earth GND 6, the first metal body 76a and the second metal body 76b function as metal bodies 76 in a floating state with respect to the earth GND 6.

Even when a LAN cable is used, the GND lines 87 can be utilized. That is, in the power generation apparatus 600, the first metal body 76a and the second metal body 76b are connected to the input terminals 31 of the pair of input terminals 31 via the GND lines 87 of the LAN cable serving as the signal cable. Accordingly, the ground patterns provided in the router 83 and the TV 82 respectively function as the first metal body 76a and the second metal body 76b. As described above, a power harvesting function can also be introduced in the middle of the GND lines 87 of the LAN cable.

Note that the GND line 87 of a base LAN cable 88 connected to the router 83 is assumed to be connected to the earth GND 6 on the upstream side. For this reason, the GND line 87 of the LAN cable (signal cable 85) connected to the TV may be configured not to connect to the GND line 87 of the LAN cable 88. As a result, power can be efficiently harvested also from the first metal body 76a of the router 83.

The power generation apparatuses 500 and 600 shown in Figs. 36 and 37 are apparatuses that are inserted into the GND lines 87 of the signal cable 85 connecting the two pieces of electrical equipment 1 for use. Such a power generation apparatus may also be a cable unit that includes the signal cable 85. The cable unit is, for example, a unit in which the power generation apparatus and the signal cable 85 are integrated, and a circuit, such as the rectification circuit 30, that is included in the power generation apparatus is incorporated in the middle of the signal cable 85. As a result, a signal cable 85 having a power harvesting function can be realized.

Furthermore, the power generation apparatus may also be a relay unit that relays the signal cable 85. The relay unit is provided with, for example, two connection terminals for the signal cable 85, and the GND lines of the respective connection terminals are connected to the rectification circuit 30. Accordingly, the two pieces of electrical equipment 1 are each connected to the power generation apparatus serving as the relay unit via the signal cable 85. As a result, power can be harvested from any electrical equipment 1 using a commonly used signal cable 85.

Furthermore, the power generation apparatus may also be a connector unit to which the signal cable 85 is connected in the electrical equipment 1. The connector unit is a unit pre-installed in one electrical equipment 1, to which an end of the signal cable 85 is connected. In this case, the electrical equipment 1 in which the power generation apparatus is installed can harvest and use, in addition to the power generated by the electrical equipment 1 itself, power generated by another electrical equipment 1 externally connected. In addition, the configuration of the power generation apparatus utilizing the signal cable 85 is not limited.

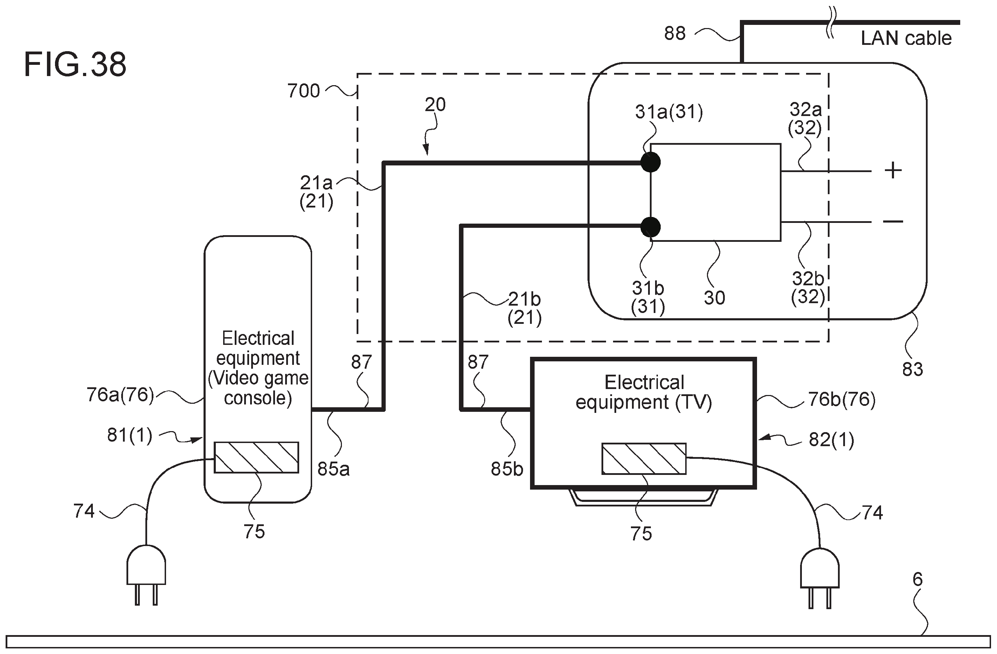

Fig. 38 is a schematic diagram showing another configuration example of a power generation apparatus that utilizes a signal cable. The power generation apparatus 700 shown in Fig. 38 is an internal unit of electrical equipment 1 that is connected to a plurality of electrical equipment 1 via the signal cable 85. Here, an example will be descried in which the power generation apparatus 700 is provided in the router 83 to which the plurality of electrical equipment 1 is connected via LAN cables.

As shown in Fig. 38, the video game console 81 is connected to the router 83 via a first signal cable 85a (first LAN cable), and the TV 82 is connected to the router 83 via a second signal cable 85b (second LAN cable). In this example, the video game console 81 and the TV 82 respectively correspond to the first electrical equipment and the second electrical equipment. Furthermore, the router 83 corresponds to third electrical equipment.

The first signal cable 85a and the second signal cable 85b function as the transmission unit 20 of the power generation apparatus 700. That is, in the power generation apparatus 700, the first metal body 76a provided in the video game console 81 is connected to one (first input terminal 31a) of the pair of input terminals 31 via the first signal cable 85a, and the second metal body 76b provided in the TV 82 is connected to another (second input terminal 31b) of the pair of input terminals 31 via the second signal cable 85b.

This configuration can be regarded as one in which, for example, the power generation apparatus 500 shown in Fig. 36 is an internal connector unit of the router 83. As a result, in the router 83, the power generation apparatus 700 can utilize power harvested from the video game console 81 and the TV 82.

Note that the GND line 87 of the base LAN cable 88 connected to the router 83 is assumed to be connected to the earth GND 6. For this reason, the GND lines 87 of the LAN cables (the first signal cable 85a and the second signal cable 85b) connected to the video game console 81 and the TV 82 are configured not to connect to the GND line 87 of the LAN cable 88. As a result, power can be efficiently harvested from the video game console 81 and the TV 82.

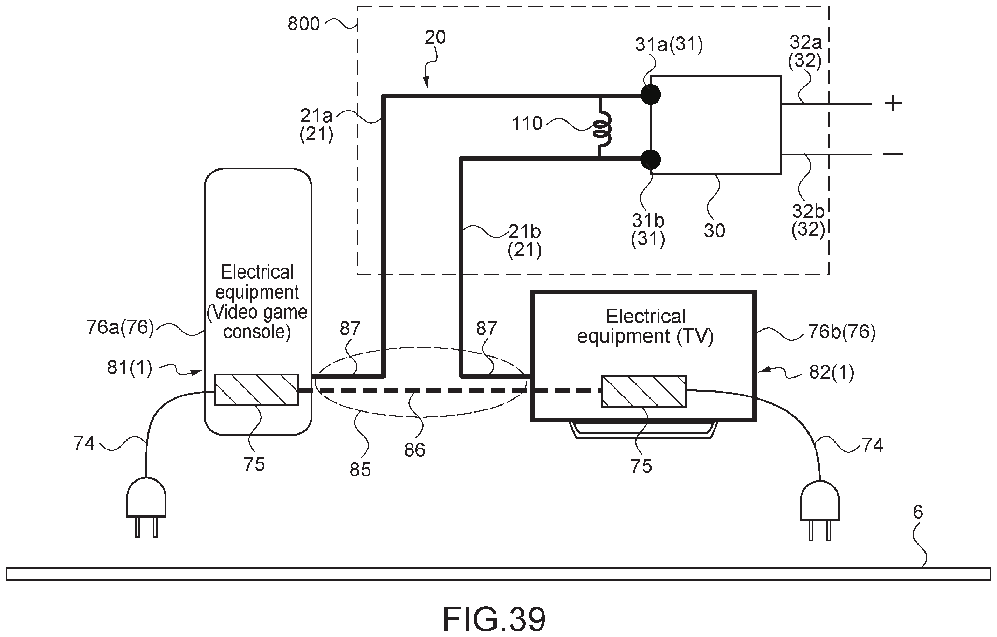

Fig. 39 is a schematic diagram showing a configuration example of a power generation apparatus in which an inductor element is provided between transmission lines. The power generation apparatus 800 shown in Fig. 39 has a configuration in which an inductor element 110 is added to the power generation apparatus 500 shown in Fig. 36. Here, the video game console 81 and the TV 82 respectively correspond to the first electrical equipment and the second electrical equipment. The power generation apparatus 800 is inserted in the middle of the signal cable 85 (video transmission cable) that connects the video game console 81 and the TV 82.

The transmission unit 20 of the power generation apparatus 800 has the first transmission line 21a, the second transmission line 21b, and the inductor element 110. The first transmission line 21a is connected to the first metal body 76a provided in the video game console 81. Furthermore, the second transmission line 21b is connected to the second metal body 76 provided in the TV 82. Here, the first transmission line 21a and the second transmission line 21b include the GND lines 87 of the signal cable 85.

The inductor element 110 is provided between the first transmission line 21a and the second transmission line 21b. The inductor element 110 is, for example, an element such as a coil. In the example shown in Fig. 39, a single coil is used as the inductor element 110. As described above, the inductor element 110 may be inserted between the respective transmission lines 21 that connect the two pieces of electrical equipment 1 to the rectification circuit 30.

As a result, the GNDs (ground patterns) of the respective electrical equipment 1 can be electrically connected to each other, thereby enabling stable signal transmission. Furthermore, by appropriately setting the inductance of the inductor element 110, impedance matching with the rectification circuit 30 can be realized. As a result, AC power (electromagnetic noise power) transmitted via the first transmission line 21a and the second transmission line 21b can be efficiently input to the rectification circuit 30, thereby enabling an improvement in power harvesting efficiency.

Note that, as described with reference to Fig. 19 and the like, a configuration in which the electrical equipment 1 and the rectification circuit 30 are connected using a transformer can also be employed. In this case, the transformer functions as an inductor element. Furthermore, the following description also applies to the case in which the transformer is used.

Examples of parameters that indicate the characteristics of the inductance of the inductor element 110 include a parameter referred to as a Q-value. The Q-value is calculated according to the following equation.

$$Q = 2\pi fL/R \ldots (1)$$

In equation (1), f represents the frequency of a signal passing through the inductor element 110. L represents the inductance. R represents the resistance component of the inductor element 110 corresponding to the frequency f.

For example, when the Q-value is low in a desired frequency band, it indicates that the resistance component R is large in that frequency band. Here, the desired frequency band refers, for example, to the frequency band in which electromagnetic noise targeted for harvesting by the power generation apparatus 800 is generated. Accordingly, when the Q-value is low in the desired frequency band, it is assumed that the power of the electromagnetic noise is consumed by the resistance component R, that is, the power of the electromagnetic noise is converted into heat in the inductor element 110, resulting in a reduction in the amount of the power harvested via the rectification circuit 30.

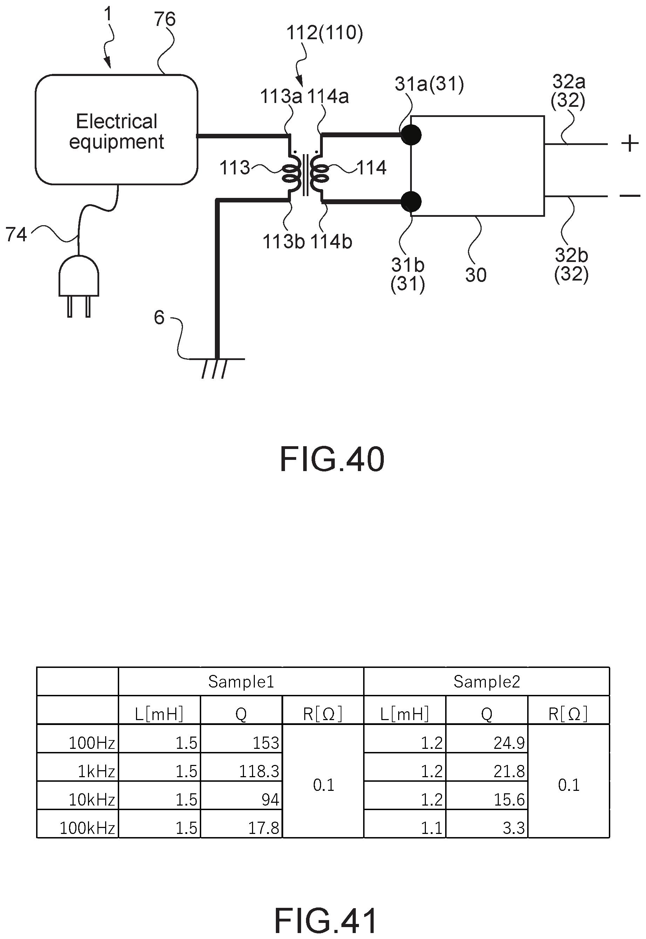

Therefore, the present inventor conducted an experiment to examine the relationship between the Q-value of the inductor element 110 and the output of the rectification circuit 30. Fig. 40 is a schematic diagram showing a measurement example of the amount of harvested power corresponding to the Q-value of the inductor element. Fig. 41 is a table showing an example of the frequency characteristics of the Q-value of the inductor. In this experiment, a common-mode choke coil was used as an example of the inductor element 110. The common-mode choke coil is used, for example, as a filter to reduce common-mode noise. Here, the common-mode choke coil will be referred to as CMF (Common Mode Filter) 112. Furthermore, although an example using a common-mode choke is provided, a transformer may also be used.

As shown in Fig. 40, the CMF 112 has a primary-side coil 113 and a secondary-side coil 114. Furthermore, the primary-side coil 113 has primary-side terminals 113a and 113b, and the secondary-side coil 114 has secondary-side terminals 114a and 114b. The primary-side terminal 113a is in phase with the secondary-side terminal 114a, and the primary-side terminal 113b is in phase with the secondary-side terminal 114b.

In the experiment, the metal body 76 included in the electrical equipment 1 and ungrounded to the earth GND 6 is connected to the primary-side terminal 113a, and the primary-side terminal 113b is grounded to the earth GND 6. Furthermore, the secondary-side terminals 114a and 114b are respectively connected to the first input terminal 31a and the second input terminal 31b of the rectification circuit 30.

In Fig. 41, for the two types of CMF 112 (Sample 1 and Sample 2) used in the experiment, the inductances [mH], Q-values, and resistance components R [Ω] at 100 Hz, 1 kHz, 10 kHz, and 100 kHz are shown. Here, the samples with similar inductance values are used. Sample 1 has a higher Q-value at each frequency than Sample 2. For example, at 100 kHz, Sample 1 has a Q-value of 17.8, while Sample 2 has a Q-value of 3.3.

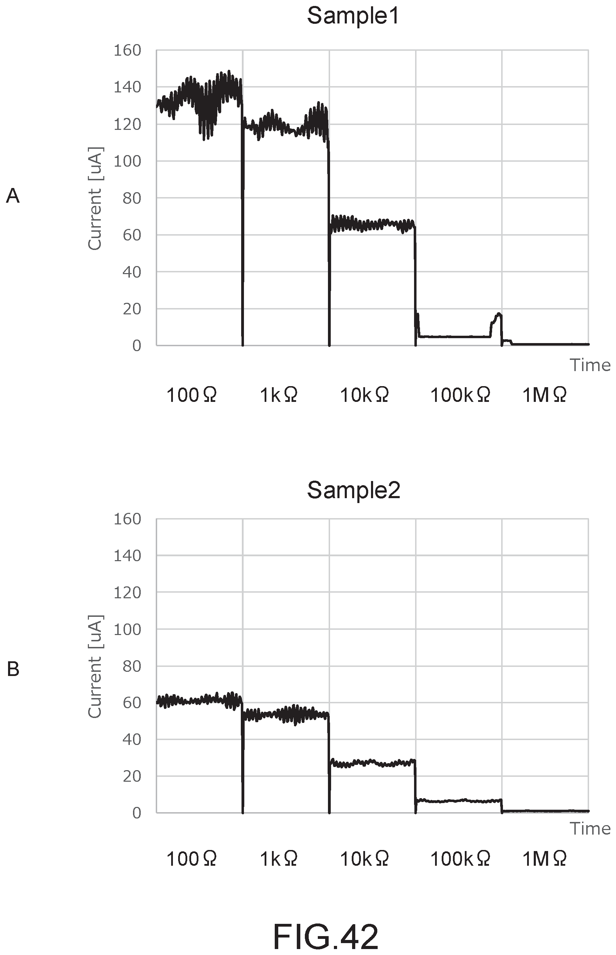

Fig. 42 shows the measurement results of the amount of harvested power corresponding to the Q-value of the inductor element. Figs. 42A and 42B are graphs plotting the current values output from the rectification circuit 30 when the two types of CMF 112 (Sample 1 and Sample 2) are used. In each graph, the vertical axis indicates the current value [μA], and the horizontal axis indicates the time.

Here, a resistive load was connected between the first output terminal 32a and the second output terminal 32b of the rectification circuit 30, and the current flowing through the resistive load was detected. Furthermore, the resistance value of the resistive load was switched in the order of 100 Ω, 1 kΩ, 10 kΩ, 100 kΩ, and 1 MΩ at fixed time intervals.

The currents obtained using Sample 1 were higher than those obtained using Sample 2 for all resistance values. For example, at resistance values of 100 Ω, 1 kΩ, and 10 kΩ, currents twice or more as large as those obtained using Sample 2 were obtained. This is because the Q-values of Sample 1 are higher than those of Sample 2 in the frequency bands in which electromagnetic noise is generated. As described above, it is found that the higher the Q-value of the inductor element 110, the higher the power harvesting efficiency.

For example, the Q-value of Sample 1 was 10 or more in frequency bands of 100 kHz or less, in which the intensity of electromagnetic noise received by the metal body 76 of the electrical equipment 1 was generally relatively high. On the basis of this, the Q-value of the inductor element 110 in a frequency band serving as a harvesting target is desirably set to 10 or more. As a result, in the power generation apparatus 800 including the inductor element 110, power can be harvested with a hardness rate.

Note that when the Q-value is excessively high, the peak width appearing in the frequency characteristics of the Q-value becomes narrow. That is, when the Q-value is locally high, the Q-value decreases in frequency bands deviating from the peak. Therefore, the frequency band of harvestable electromagnetic noise may be limited. Accordingly, it is desirable that the Q-value of the inductor element 110 be appropriately set to 10 or more, as long as the frequency of electromagnetic noise is not significantly limited. In addition, the lower and upper limits of the Q-value of the inductor element 110 are not limited and may be appropriately set in accordance with the target electromagnetic noise frequency band, the system to which the power generation apparatus 800 is applied, or the like.

In the above embodiments, the power generation apparatus that utilizes the signal cable 85 used for communication of information between the pieces of electrical equipment 1 has been mainly described. The configuration is not limited to this, and the power generation apparatus can also be configured by utilizing a power cable used to transmit power between the apparatuses.

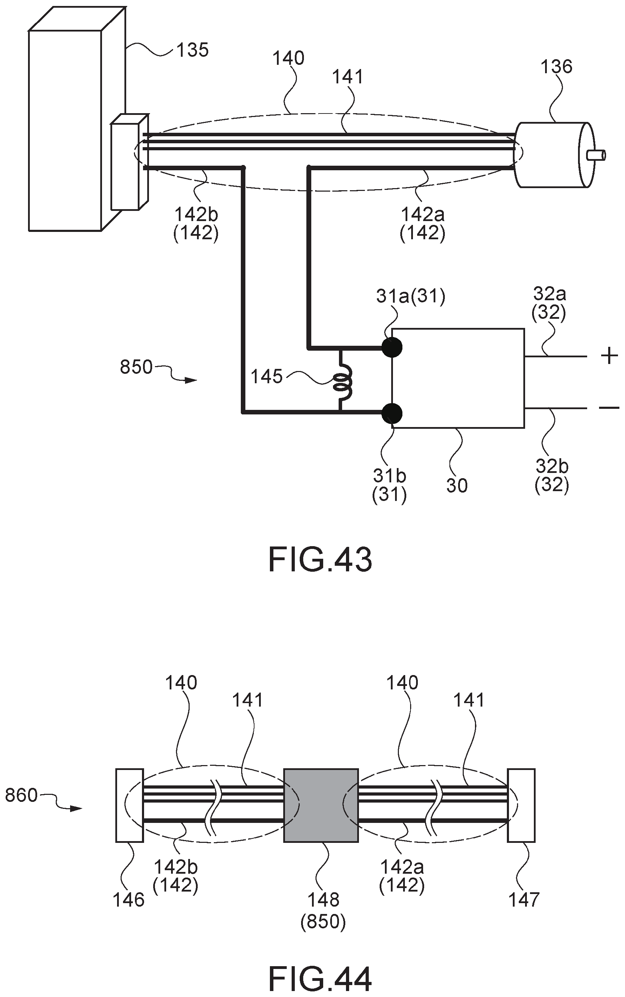

Fig. 43 is a schematic diagram showing a configuration example of a power generation apparatus that utilizes a power cable. The power generation apparatus 850 is connected to the power cable 140 that connects a servo amplifier 135 and a motor 136. The servo amplifier 135 generates a power signal for driving the motor 136 using an inverter or the like and supplies the generated power signal to the motor 136 via the power cable 140. The motor 136 is an electric motor driven by the power signal supplied through the power cable 140.

The power cable 140 has a power line 141 and a GND line 142. The power line 141 is a wiring line used to transmit a power signal and includes three lines that are supplied with three-phase AC signals respectively corresponding to the U, V, and W phases. The GND line 142 is a wiring line that connects the respective GND portions of the servo amplifier 135 and the motor 136.

The power generation apparatus 850 has the rectification circuit 30 and an inductor element 145 and is inserted in the middle of the GND line 142 of the power cable 140 for use. As shown in Fig. 43, the first input terminal 31a of the rectification circuit 30 is connected to a GND line 142a connected to the motor 136, and the second input terminal 31b is connected to a GND line 142b connected to the servo amplifier 135.

Furthermore, the inductor element 145 is connected between the GND lines 142a and 142b. That is, the inductor element 145 functions as a part of the GND line 142 of the power cable 140. As a result, the GND lines 142a and 142b function as a single wiring line through which direct-current components pass. Therefore, even when the power generation apparatus 850 is inserted into the GND line 142, the GND portions of the servo amplifier 135 and the motor 136 are not separated.

In the power generation apparatus 850 configured as described above, noise generated from the inverter included in the servo amplifier 135, noise generated when the motor 136 is driven, and the like are harvested as power. For example, because the servo amplifier 135 and the motor 136 use relatively large power, their noise level is also expected to be high. By converting such noise into power, the amount of harvested power can be significantly increased.

By providing the inductor element 145, the GND line 142 can be prevented from being separated in terms of DC. As a result, power can be harvested without affecting the operations of the servo amplifier 135 and the motor 136. Furthermore, the amount of harvested power can also be increased by adjusting matching with noise sources.

Furthermore, the power generation apparatus 850 exhibits the effect of reducing the noise level by converting the noise generated from the servo amplifier 135 and the motor 136 into power. As a result, a clean GND environment can be realized, for example, in an apparatus GND or the like to which the GND line 142 is connected. Furthermore, electromagnetic wave emissions or the like derived from noise can also be suppressed around the servo amplifier 135 and the motor 136.

Furthermore, although a storage element or the like is, for example, connected to the first output terminal 32a and the second output terminal 32b of the rectification circuit 30 to harvest power, other elements may also be connected. For example, for noise removal, a load resistance may be connected between the first output terminal 32a and the second output terminal 32b. In this case, the load resistance can be appropriately selected according to the desired noise reduction level. In addition, if only noise reduction is intended, connecting the load resistance is not necessary. In this configuration, because the generated noise is rectified and returns to the GND line 142 as a direct current, a greater noise reduction effect can be achieved. By appropriately setting a capacitor for removing ripples on the output side of the rectification circuit 30 to eliminate noise frequency components, the noise floor can also be reduced. Furthermore, by adjusting matching with noise sources using the inductor element 145, the noise reduction effect can also be enhanced.

The power harvested by the power generation apparatus 850 is supplied, for example, to sensors or the like that monitor the states (such as the rotation speed, temperature, vibration, and operating sound) of the motor 136. Furthermore, the power may also be supplied to sensors or the like that monitor the operating environment of the motor 136. It should be understood that the application of the power generation apparatus 850 is not limited, and the power generation apparatus 850 may be applied to other uses.

Fig. 44 is a schematic diagram showing a configuration example of a power cable unit 860 including the power generation apparatus 850. The power cable unit 860 refers to the power cable 140 having a servo amplifier connector 146 and a motor connector 147 provided at both ends of the power cable 140. Furthermore, the power generation apparatus 850 is inserted in the middle of the power cable 140. Specifically, a case unit 148 that accommodates the rectification circuit 30 and the like of the power generation apparatus 850 is provided so as to enclose the GND line 142 and the power line 141 of the power cable 140.

Inside the case unit 148, the rectification circuit 30 is connected to the GND line 142 by the circuit configuration shown in Fig. 43. Note that the power line 141 is not connected to any other elements or the like inside the case unit 148. Furthermore, various circuits, sensors, or the like that operate using power from the power generation apparatus 850 may also be provided in the case unit 148. By using the power cable unit 860, a system or the like that monitors the states and operating environment of the motor 136 can be easily constructed.

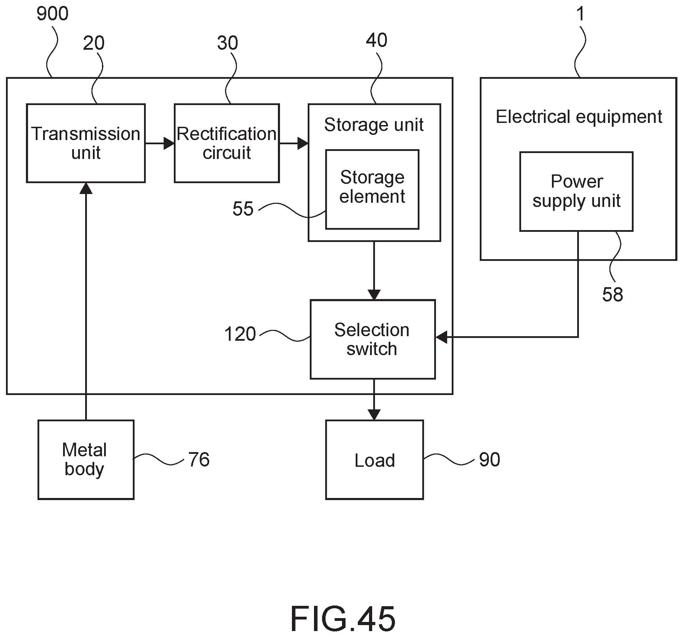

Fig. 45 is a block diagram showing another configuration example of a power generation apparatus. The power generation apparatus 900 shown in Fig. 45 is an apparatus that appropriately switches between the power charged to a capacitor, a battery, or the like serving as the storage element 55 and the power output from a power supply unit 58 provided in the electrical equipment 1, and supplies the selected power to the load 90.

The power generation apparatus 900 has a selection switch 120. The selection switch 120 is provided between the storage unit 40 that charges the storage element 55 and the load 90. Furthermore, the selection switch 120 is connected to the power supply unit 58 of the electrical equipment 1.

Note that the configuration of the power generation apparatus 900 excluding the selection switch 120 is the same as that of the respective power generation apparatuses described in the above embodiments. Here, a configuration in which the power generation apparatus 900 is connected to the metal body 76 of the electrical equipment 1 is illustrated. However, for example, when a heat dissipation plate or the like is used as the metal body 76, the power generation apparatus 900 may be configured to include such a metal body 76.

The selection switch 120 is a switch element that performs switching on the storage element 55 and the power supply unit 58 provided in the electrical equipment 1 to connect one of the storage element 55 and the power supply unit 58 to the load 90. Specifically, in response to a specified control signal (hereinafter referred to as a switching signal), the selection switch 120 performs switching to select the power supply unit 58 or the storage element 55 as a supply source that supplies power to the load 90.

For example, the load 90 refers to an electrical circuit (such as a sensor module or a communication module) that is provided in the electrical equipment 1 to perform a specified operation, or to peripheral devices (such as a remote controller or a controller) that are used with the electrical equipment 1. Typically, standby power or the like is supplied from the power supply unit 58 of the electrical equipment 1 to the load 90. However, with this configuration, power can be supplied from the storage element 55 of the power generation apparatus 900 to the load 90. As described above, the power generation apparatus 900 can reduce the standby power of the electrical equipment 1 using the power charged to the storage element 55.

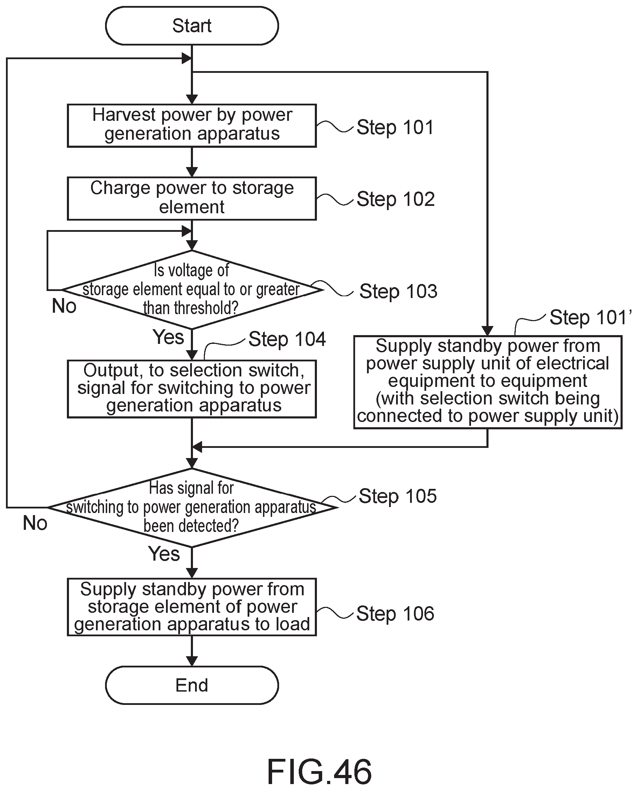

Fig. 46 is a flowchart showing an example of a power supply operation using the storage element 55 of the power generation apparatus 900. The process shown in Fig. 46 is a process in which, when the voltage of the storage element 55 reaches a specified voltage, the selection switch 120 is operated to stop power supply from the equipment side and start power supply from the storage element 55.

In step 101, power is harvested from the metal body 76 by the power generation apparatus 900. In step 102, the harvested power is charged to the storage element 55.

In step 103, it is determined whether the voltage of the storage element 55 has reached a specified voltage (threshold) or higher. This process is executed, for example, by the storage unit 40 that monitors the voltage of the storage element 55. Here, the specified voltage refers, for example, to a voltage obtained when the storage element 55 is fully charged. Note that, in addition to determining the voltage of the storage element 55, it may also be possible to determine, for example, the time after the voltage has reached a certain value.

When the voltage of the storage element 55 is less than the specified threshold (No in step 103), step 103 is executed again, for example, with certain time intervals to determine the voltage of the storage element 55. This process is repeatedly executed when the storage element 55 is being charged.

When the voltage of the storage element 55 is greater than or equal to the specified threshold (Yes in step 103), it is determined that the storage element 55 is fully charged (for example, a fully charged state), and the storage unit 40 outputs a signal for switching to the power generation apparatus 900 to the selection switch 120 in step 104. Note that, when outputting the signal, a signal or the like for stopping the supply of standby power may be output to the power supply unit 58.

In step 105, the selection switch 120 detects whether the signal for switching to the power generation apparatus 900 has been output during the supply of standby power from the power supply unit 58 to the load 90. For example, when the signal for switching to the power generation apparatus 900 is not detected (No in step 105), step 101' described later is executed to maintain the state in which the standby power is supplied from the power supply unit 58 to the load 90.

When the signal for switching to the power generation apparatus 900 is detected (Yes in step 105), the selection switch 120 switches, in step 106, the power source connected to the load 90 from the power supply unit 58 to the storage element 55. That is, the connection between the power supply unit 58 and the load 90 is turned off, while the connection between the storage element 55 and the load 90 is turned on. As a result, standby power is supplied from the storage element 55 of the power generation apparatus 900 to the load 90.

Furthermore, when the power supply from the storage element 55 to the load 90 is completed (for example, when the voltage of the storage element 55 falls to a certain value or lower, or when the operation of the load 90 becomes unnecessary), the selection switch 120 switches the power source connected to the load 90 from the storage element 55 to the power supply unit 58. Accordingly, after the processes from step 101 to step 106 are completed, power is supplied from the power supply unit 58 to the load 90, and charging of the storage element 55 starts again.

As described above, in the process shown in Fig. 46, the selection switch 120 connects the storage element 55 to the load 90 when the voltage of the storage element 55 reaches a specified voltage. Consequently, each time the storage element 55 is fully charged, the power supply from the power supply unit 58 to the load 90 can be replaced by the power from the power generation apparatus 900. As a result, the power consumption of the electrical equipment 1 can be suppressed.

Note that in the process shown in Fig. 46, steps 101 to 104 are executed in parallel with step 101'. In step 101', the selection switch 120 is controlled to connect the power supply unit 58 of the electrical equipment 1 to the load 90, so that standby power from the power supply unit 58 is supplied to the load 90. As a result, even when the storage element 55 is being charged, the necessary power can be appropriately supplied to the load 90.

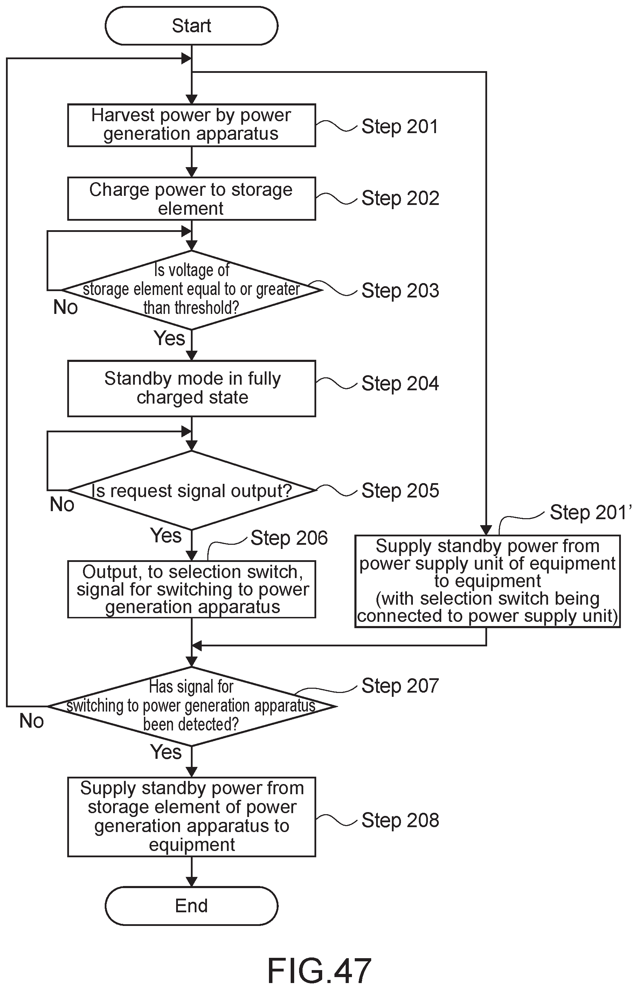

Fig. 47 is a flowchart showing another example of the power supply operation using the storage element 55 of the power generation apparatus 900. The process shown in Fig. 47 is a process in which, when the electrical equipment 1 needs to switch the power source for the load 90, a specified signal (request signal) is generated and the selection switch 120 is switched according to the signal.

When standby power from the power supply unit 58 is being supplied, the power generation apparatus 900 executes steps 201 to 203. This process is the same as that of steps 101 to 103 shown in Fig. 46. In step 204, when the voltage of the storage element 55 reaches a specified voltage or higher (Yes in step 203), the storage unit 40 enters a standby mode. The standby mode refers, for example, to a mode in which the voltage of the storage element 55 is maintained in a fully charged state, and control such as interrupting charging to the storage element 55 is performed to prevent, for example, overcharging of the storage element 55.

In step 205, the presence or absence of a request signal is determined. Here, the request signal refers to a signal generated in the electrical equipment 1, for example, when power supply from the storage element 55 of the power generation apparatus 900 to the load 90 is needed, or in other similar cases.

For example, when it is known that the storage element 55 is charged at certain time intervals, the request signal may be generated after the charging of the storage element 55 is confirmed. Furthermore, when an operation (for example, downloading a program update file, sensing at certain intervals with various sensors, or the like) is performed during the standby of the electrical equipment 1, the request signal is generated to supply the power from the storage element 55. In addition, the timing for generating the request signal is not limited, and the request signal can be generated at any timing depending on the type or application of the electrical equipment 1.

When the request signal is not output (No in step 205), step 205 is executed again, for example, at certain intervals. On the other hand, when the request signal is output (Yes in step 205), a signal for switching to the power generation apparatus 900 is output to the selection switch 120 in step 206. The switching signal may be generated by the electrical equipment 1 or by the storage unit 40 having received the request signal from the electrical equipment 1.

In step 207, the selection switch 120 detects whether the signal for switching to the power generation apparatus 900 has been output during the supply of standby power from the power supply unit 58 to the load 90. For example, when the signal for switching to the power generation apparatus 900 is not detected (No in step 207), step 201' is executed to maintain the state in which the standby power is supplied from the power supply unit 58 to the load 90. Note that step 201' is the same process as that of step 101' shown in Fig. 46.

When the signal for switching to the power generation apparatus 900 is detected (Yes in step 207), the selection switch 120 switches, in step 208, the power source connected to the load 90 from the power supply unit 58 to the storage element 55. As a result, standby power is supplied from the storage element 55 of the power generation apparatus 900 to the load 90.

As described above, in the process shown in Fig. 47, the selection switch 120 connects the storage element 55 to the load 90 when a specified signal (request signal) is output from the electrical equipment 1. Consequently, when needed by the electrical equipment 1, the power of the storage element 55 charged in the power generation apparatus 900 can be supplied to the load. As a result, the power for various processes and operations performed during the standby of the electrical equipment 1 can be replaced by the power from the power generation apparatus 900.

The power generation apparatus of the present technology can supply power to electronic equipment and their peripheral devices by converting electromagnetic noise generated from the electronic equipment into the power, thereby enabling efficient energy use. Accordingly, the power generation apparatus of the present technology can be associated with Goal 7, "Affordable and Clean Energy", of the SDGs (Sustainable Development Goals) adopted at the UN summit in 2015.

Among the features of the present technology described above, at least two features may be combined. That is, the various features described in the respective embodiments may be arbitrarily combined without distinction among the embodiments. Furthermore, the various effects described above are merely illustrative and not limiting, and other effects may also be produced.

In the present disclosure, "same", "equal", "orthogonal", and the like are concepts that include "substantially same", "substantially equal", "substantially orthogonal", and the like. For example, conditions within a specified range (for example, +/-10%) based on "completely same", "completely equal", "completely orthogonal", and the like are also included.

Note that the present technology can also employ the following configurations.

(1) A power generation apparatus including:

a transmission unit that is connected to at least one heat dissipation plate directly or via capacitive coupling, the at least one heat dissipation plate being provided in electrical equipment and having a potential different from a potential of a GND of the electrical equipment, the transmission unit being used to transmit AC power of electromagnetic noise generated in the at least one heat dissipation plate; and
a rectification circuit that rectifies the AC power transmitted using the transmission unit and that outputs DC power.

(2) The power generation apparatus according to (1), further including
a high-pass filter provided between the heat dissipation plate connected to the transmission unit and the GND of the electrical equipment.
(3) The power generation apparatus according to (2), in which
the high-pass filter allows an AC component in a frequency band to pass through the high-pass filter, the frequency band being higher than a frequency band rectified by the rectification circuit.
(4) The power generation apparatus according to (2) or (3), in which
the high-pass filter only includes a capacitor, or is a parallel circuit of the capacitor and a resistive element.
(5) The power generation apparatus according to at least one of (1) to (4), in which

the rectification circuit has a pair of input terminals, and
the transmission unit connects the heat dissipation plates different from each other to respective input terminals of the pair of input terminals, or connects the heat dissipation plate to one of the pair of input terminals.

(6) The power generation apparatus according to (5), in which

the electrical equipment has

a primary-side circuit to which power is supplied from a specified power supply, and
a secondary-side circuit electrically isolated from the primary-side circuit,

the at least one heat dissipation plate is provided in one of the primary-side circuit or the secondary-side circuit, and

the rectification circuit is provided on the same side as the at least one heat dissipation plate in the primary-side circuit or the secondary-side circuit.

(7) The power generation apparatus according to (5) or (6), in which
the transmission unit electrically connects the input terminal and the heat dissipation plate.

(8) The power generation apparatus according to (7), further including

a high-pass filter provided between the heat dissipation plate connected to the transmission unit and the GND of the electrical equipment, in which
the transmission unit connects the heat dissipation plates different from each other to the respective input terminals of the pair of input terminals, and
the high-pass filter is provided on at least one of the heat dissipation plates connected to the input terminals of the pair of input terminals.

(9) The power generation apparatus according to (7), in which
the transmission unit connects the heat dissipation plate to the one of the pair of input terminals, and connects the GND of the electrical equipment to another of the pair of input terminals directly or via a capacitor.

(10) The power generation apparatus according to at least one of (1) to (5), in which

the electrical equipment has

a primary-side circuit to which power is supplied from a specified power supply and
a secondary-side circuit electrically isolated from the primary-side circuit,

the at least one heat dissipation plate is provided in the primary-side circuit, and
the rectification circuit is provided in the secondary-side circuit.

(11) The power generation apparatus according to (5), in which
the transmission unit has a transformer and connects the input terminal and the heat dissipation plate via the transformer.

(12) The power generation apparatus according to (11), further including

a high-pass filter provided between the heat dissipation plates connected to the transmission unit and the GND of the electrical equipment, in which

the transmission unit connects the heat dissipation plates different from each other to the respective input terminals of the pair of input terminals, and
the high-pass filter is provided on one of the heat dissipation plates connected to the input terminals of the pair of input terminals.

(13) The power generation apparatus according to (11), in which
the transmission unit connects the heat dissipation plate to the one of the pair of input terminals, and connects the GND of the electrical equipment to another of the pair of input terminals via a capacitor.

(14) The power generation apparatus according to (5), in which

the transmission unit has

an insulating sheet arranged in contact with the heat dissipation plate and
a conductive sheet connected to the heat dissipation plate via capacitive coupling through the insulating sheet, and

the input terminal is connected to the conductive sheet.

(15) The power generation apparatus according to at least one of (5) to (14), in which

the at least one heat dissipation plate includes a plurality of the heat dissipation plates, and
the transmission unit

has a conductive member that electrically connects two or more of the plurality of the heat dissipation plates, and
connects, to the input terminals, the two or more of the plurality of the heat dissipation plates that are connected by the conductive member.

(16) The power generation apparatus according to at least one of (1) to (15), further including
a storage unit that has a storage element that stores therein the DC power output from the rectification circuit, the storage unit controlling charging or discharging of the storage element depending on a state of charging of the storage element.

(17) The power generation apparatus according to (16), in which

the storage element is a battery, and
the storage unit has a charging control unit that is provided between the battery and the rectification circuit, the charging control unit charging the battery depending on a state of charging of the battery.

(18) The power generation apparatus according to (16), in which

the storage element is a battery, and
the storage unit has

a first switch element provided between the battery and the rectification circuit, and
a first switching control unit that turns off the first switch element when a voltage of the battery reaches a first threshold voltage or higher.

(19) The power generation apparatus according to (16), in which

the storage element is a capacitor, and
the storage unit has

a second switch element provided between the capacitor and a load to which power is supplied from the capacitor, and
a second switching control unit that turns on the second switch element when a voltage of the capacitor reaches a second threshold voltage or higher.

(20) The power generation apparatus according to (16) to (19), in which
the storage unit includes a protection diode that protects a control element for controlling charging or discharging of the storage element.

(21) The power generation apparatus according to at least one of (1) to (20), in which
in a diode included in the rectification circuit, a ratio of a forward current at a forward voltage to a reverse current when the same voltage is applied in a reverse direction is 4700 or more.

(22) The power generation apparatus according to at least one of (1) to (21), in which
a resistance value of the diode included in the rectification circuit that is calculated from the reverse current when a reverse voltage is 10 V is 1.4 MΩ or more.

(23) The power generation apparatus according to at least one of (1) to (22), in which
the diode included in the rectification circuit is a silicon diode.

(24) The power generation apparatus according to at least one of (1) to (23), further including
the at least one heat dissipation plate.

(25) The power generation apparatus according to (24), in which
the heat dissipation plate is provided in close contact with a semiconductor element included in the electrical equipment.

(26) The power generation apparatus according to (24) or (25), in which
a material of the heat dissipation plate includes at least one of aluminum, copper, iron, or tin.

(27) The power generation apparatus according to at least one of (1) to (26), in which
the electrical equipment is industrial equipment.

(28) Electrical equipment including:

at least one heat dissipation plate having a potential different from a potential of a GND; and
a power generation apparatus including

a transmission unit that is connected to the at least one heat dissipation plate directly or via capacitive coupling, the transmission unit being used to AC power of electromagnetic noise generated in the at least one heat dissipation plate, and
a rectification circuit that rectifies the AC power transmitted using the transmission unit and that outputs DC power.

(29) A method of connection for energy harvesting, the method including:

connecting a transmission unit to at least one heat dissipation plate directly or via capacitive coupling, the transmission unit being used to transmit AC power of electromagnetic noise generated in the at least one heat dissipation plate, the at least one heat dissipation plate having a potential different from a potential of a GND of electrical equipment; and
connecting the transmission unit to a rectification circuit that rectifies the AC power and that outputs DC power.

(30) A power generation apparatus including:

a transmission unit that is connected to at least one metal body directly or via capacitive coupling, the at least one metal body being provided in electrical equipment and having a potential different from a potential of an earth GND, the transmission unit being used to transmit AC power of electromagnetic noise generated in the at least one metal body; and
a rectification circuit that rectifies the AC power transmitted using the transmission unit and that outputs DC power.

(31) The power generation apparatus according to (30), in which

the rectification circuit has a pair of input terminals,

the at least one metal body includes at least one of a first metal body provided in first electrical equipment, or a second metal body provided in second equipment different from the first equipment, and

the transmission unit connects the first metal body to one of the pair of input terminals, and connects the second metal body to another of the pair of input terminals.

(32) The power generation apparatus according to (31), in which

each of the first electrical equipment and the second electrical equipment includes a noise source that generates the electromagnetic noise.

(33) The power generation apparatus according to (31) or (32), in which

the transmission unit connects the first metal body and the second metal body to the respective input terminals of the pair of input terminals via a signal cable that connects the first electrical equipment and the second electrical equipment.

(34) The power generation apparatus according to (33), in which

the transmission unit connects the first metal body and the second metal body to the respective input terminals of the pair of input terminals via a GND line of the signal cable.

(35) The power generation apparatus according to (33) or (34), in which

the power generation apparatus is one of a cable unit including the signal cable, a relay unit that relays the signal cable, and a connector unit to which the signal cable is connected in the electrical equipment.

(36) The power generation apparatus according to (31), in which

the power generation apparatus is provided in third electrical equipment to which the first electrical equipment is connected via a first signal cable and to which the second electrical equipment is connected via a second signal cable, and

the transmission unit connects the first metal body to the one of the pair of input terminals via the first signal cable, and connects the second metal body to the other of the pair of input terminals via the second signal cable.

(37) The power generation apparatus according to at least one of (31) to (36), in which

the transmission unit has

a first transmission line connected to the first metal body,

a second transmission line connected to the second metal body, and

an inductor element provided between the first and second transmission lines.

(38) The power generation apparatus according to (37), in which

a Q-value of the inductor element in a frequency band serving as a harvesting target is set to 10 or more.

(39) The power generation apparatus according to at least one of (30) to (38), in which

the at least one metal body includes a heat dissipation plate being provided in the electrical equipment and having a potential different from a potential of a GND of the electrical equipment.

(40) The power generation apparatus according to at least one of (30) to (39), further including:

a storage element that stores therein the DC power output from the rectification circuit; and

a selection switch that performs switching on the storage element and a power supply unit provided in the electrical equipment to connect one of the storage element and the power supply unit to a load.

(41) The power generation apparatus according to (40), in which

the selection switch connects the storage element to the load when a voltage of the storage element reaches a specified voltage or when a specified signal is output from the electrical equipment.

Reference Signs List

1 electrical equipment
3 semiconductor element
4 ground pattern
10 heat dissipation plate
20 transmission unit
23 transformer
30 rectification circuit
40 storage unit
50 high-pass filter
55 storage element
61 primary-side circuit
62 secondary-side circuit
70 insulating sheet
71 conductive sheet
76 metal body
100, 100a to 100d, 200, 200a to 200c, 210, 211, 212, 300, 400, 500, 600, 700, 800, 850, 900 power generation apparatus

**Claims**

1.  A power generation apparatus comprising:

a transmission unit that is connected to at least one heat dissipation plate directly or via capacitive coupling, the at least one heat dissipation plate being provided in electrical equipment and having a potential different from a potential of a GND of the electrical equipment, the transmission unit being used to transmit AC power of electromagnetic noise generated in the at least one heat dissipation plate; and
a rectification circuit that rectifies the AC power transmitted using the transmission unit and that outputs DC power.

2. The power generation apparatus according to claim 1, further comprising
a high-pass filter provided between the heat dissipation plate connected to the transmission unit and the GND of the electrical equipment.

3. The power generation apparatus according to claim 2, wherein
the high-pass filter allows an AC component in a frequency band to pass through the high-pass filter, the frequency band being higher than a frequency band rectified by the rectification circuit.

4. The power generation apparatus according to claim 1, wherein

the rectification circuit has a pair of input terminals, and
the transmission unit connects the heat dissipation plates different from each other to respective input terminals of the pair of input terminals, or connects the heat dissipation plate to one of the pair of input terminals.

5. The power generation apparatus according to claim 4, wherein
the transmission unit electrically connects the input terminal and the heat dissipation plate.

6. The power generation apparatus according to claim 5, further comprising

a high-pass filter provided between the heat dissipation plate connected to the transmission unit and the GND of the electrical equipment, wherein
the transmission unit connects the heat dissipation plates different from each other to the respective input terminals of the pair of input terminals, and
the high-pass filter is provided on at least one of the heat dissipation plates connected to the input terminals of the pair of input terminals.

7. The power generation apparatus according to claim 5, wherein
the transmission unit connects the heat dissipation plate to the one of the pair of input terminals, and connects the GND of the electrical equipment to another of the pair of input terminals directly or via a capacitor.

8. The power generation apparatus according to claim 1, wherein

the electrical equipment has
a primary-side circuit to which power is supplied from a specified power supply and
a secondary-side circuit electrically isolated from the primary-side circuit,
the at least one heat dissipation plate is provided in the primary-side circuit, and
the rectification circuit is provided in the secondary-side circuit.

9. The power generation apparatus according to claim 4, wherein
the transmission unit has a transformer and connects the input terminal and the heat dissipation plate via the transformer.

10. The power generation apparatus according to claim 9, further comprising

a high-pass filter provided between the heat dissipation plates connected to the transmission unit and the GND of the electrical equipment, wherein
the transmission unit connects the heat dissipation plates different from each other to the respective input terminals of the pair of input terminals, and
the high-pass filter is provided on one of the heat dissipation plates connected to the input terminals of the pair of input terminals.

11. The power generation apparatus according to claim 9, wherein
the transmission unit connects the heat dissipation plate to the one of the pair of input terminals, and connects the GND of the electrical equipment to another of the pair of input terminals via a capacitor.

12. The power generation apparatus according to claim 4, wherein

the transmission unit has
an insulating sheet arranged in contact with the heat dissipation plate and
a conductive sheet connected to the heat dissipation plate via capacitive coupling through the insulating sheet, and
the input terminal is connected to the conductive sheet.

13. The power generation apparatus according to claim 4, wherein

the at least one heat dissipation plate includes a plurality of the heat dissipation plates, and
the transmission unit
has a conductive member that electrically connects two or more of the plurality of the heat dissipation plates, and
connects, to the input terminals, the two or more of the plurality of the heat dissipation plates that are connected by the conductive member.

14. The power generation apparatus according to claim 1, further comprising
a storage unit that has a storage element that stores therein the DC power output from the rectification circuit, the storage unit controlling charging or discharging of the storage element depending on a state of charging of the storage element.

15. The power generation apparatus according to claim 14, wherein

the storage element is a battery, and
the storage unit has a charging control unit that is provided between the battery and the rectification circuit, the charging control unit charging the battery depending on a state of charging of the battery.

16. The power generation apparatus according to claim 14, wherein

the storage element is a battery, and
the storage unit has
a first switch element provided between the battery and the rectification circuit, and
a first switching control unit that turns off the first switch element when a voltage of the battery reaches a first threshold voltage or higher.

17. The power generation apparatus according to claim 14, wherein

the storage element is a capacitor, and
the storage unit has
a second switch element provided between the capacitor and a load to which power is supplied from the capacitor, and
a second switching control unit that turns on the second switch element when a voltage of the capacitor reaches a second threshold voltage or higher.

18. The power generation apparatus according to claim 1, further comprising
the at least one heat dissipation plate.

19. The power generation apparatus according to claim 1, wherein
the electrical equipment is industrial equipment.

20. Electrical equipment comprising:

at least one heat dissipation plate having a potential different from a potential of a GND; and
a power generation apparatus including

a transmission unit that is connected to the at least one heat dissipation plate directly or via capacitive coupling, the transmission unit being used to transmit AC power of electromagnetic noise generated in the at least one heat dissipation plate, and
a rectification circuit that rectifies the AC power transmitted using the transmission unit and that outputs DC power.

21. A power generation apparatus comprising:

a transmission unit that is connected to at least one metal body directly or via capacitive coupling, the at least one metal body being provided in electrical equipment and having a potential different from a potential of an earth GND, the transmission unit being used to transmit AC power of electromagnetic noise generated in the at least one metal body; and
a rectification circuit that rectifies the AC power transmitted using the transmission unit and that outputs DC power.

22. The power generation apparatus according to claim 21, wherein

the rectification circuit has a pair of input terminals,
the at least one metal body includes at least one of a first metal body provided in first electrical equipment, or a second metal body provided in second equipment different from the first equipment, and
the transmission unit connects the first metal body to one of the pair of input terminals, and connects the second metal body to another of the pair of input terminals.

23. The power generation apparatus according to claim 22, wherein
each of the first electrical equipment and the second electrical equipment includes a noise source that generates the electromagnetic noise.

**24.** The power generation apparatus according to claim 22, wherein
the transmission unit connects the first metal body and the second metal body to the respective input terminals of the pair of input terminals via a signal cable that connects the first electrical equipment and the second electrical equipment.

**25.** The power generation apparatus according to claim 24, wherein
the transmission unit connects the first metal body and the second metal body to the respective input terminals of the pair of input terminals via a GND line of the signal cable.

**26.** The power generation apparatus according to claim 24, wherein
the power generation apparatus is one of a cable unit including the signal cable, a relay unit that relays the signal cable, and a connector unit to which the signal cable is connected in the electrical equipment.

**27.** The power generation apparatus according to claim 22, wherein

the power generation apparatus is provided in third electrical equipment to which the first electrical equipment is connected via a first signal cable and to which the second electrical equipment is connected via a second signal cable, and
the transmission unit connects the first metal body to the one of the pair of input terminals via the first signal cable, and connects the second metal body to the other of the pair of input terminals via the second signal cable.

**28.** The power generation apparatus according to claim 22, wherein

the transmission unit has

a first transmission line connected to the first metal body,
a second transmission line connected to the second metal body, and
an inductor element provided between the first and second transmission lines.

**29.** The power generation apparatus according to claim 28, wherein
a Q-value of the inductor element in a frequency band serving as a harvesting target is set to 10 or more.

**30.** The power generation apparatus according to claim 21, wherein
the at least one metal body includes a heat dissipation plate being provided in the electrical equipment and having a potential different from a potential of a GND of the electrical equipment.

**31.** The power generation apparatus according to claim 21, further comprising:

a storage element that stores therein the DC power output from the rectification circuit; and
a selection switch that performs switching on the storage element and a power supply unit provided in the electrical equipment to connect one of the storage element and the power supply unit to a load.

**32.** The power generation apparatus according to claim 31, wherein
the selection switch connects the storage element to the load when a voltage of the storage element reaches a specified voltage or when a specified signal is output from the electrical equipment.

FIG.1

**FIG.2**

**FIG.3**

FIG.4

FIG.5

21(20)

Rectification circuit

10

C

51
(50)

4

30

# FIG.6

Magnitude [dB]

f0

| | |
|---|---|
| 0 | |
| -9 | |
| -18 | |
| -27 | |
| -36 | |
| -45 | |

100E3    1E6    10E6    100E6    1E9

Frequency [Hz]

# FIG.7

10

52

53

4

4

50

# FIG.8

FIG.9

EP 4 783 415 A1

FIG.10

EP 4 783 415 A1

FIG.11

EP 4 783 415 A1

FIG.12

EP 4 783 415 A1

First heat
dissipation plate — 10a

30

31a — 35a

31b — 35b

33a  33c

34

33b  33d

32a

32b

Second heat
dissipation plate — 10b

FIG.13

I

36c  36b  36a

V

FIG.14

| | Room temperature | |
|---|---|---|
| | Forward voltage Vf [mV] | Reverse current Is [$\mu$A] |
| 1N60 (Silicon) | 367 | 1 |
| 1N60 (Germanium) | 303 | 7 |
| 1SS108 | 162 | 26 |

# FIG.15

FIG.16

FIG.17

EP 4 783 415 A1

FIG.18

EP 4 783 415 A1

FIG.19

EP 4 783 415 A1

FIG.20

FIG.21

FIG.22

FIG.23

FIG.24

FIG.25

A

B

C

FIG.26

FIG.27

FIG.28

210

10    23    25a  26a    31a(31)    32a
(32)    59

Heat dissipation
plate(HS)

Primary-side GND

77    25b  26b    31b
(31)    30    32b
(32)    6

+

−

FIG.29

## Discharging characteristics

FIG.30

211

10
23  25a  26a
Heat dissipation
plate(HS5)

Primary-side GND

77  130  25b  26b

31a(31)
32a
(32)
59
+
—
31b
(31)
30
32b
(32)
6

## FIG.31

## Discharging characteristics

G6

G5

G4

Voltage [V]

Time [h]

## FIG.32

212

FIG.33

## Discharging characteristics

FIG.34

**FIG.35**

EP 4 783 415 A1

FIG.36

FIG.37

FIG.38

FIG.39

EP 4 783 415 A1

FIG.40

| | Sample1 | | | Sample2 | | |
|---|---|---|---|---|---|---|
| | L[mH] | Q | R[Ω] | L[mH] | Q | R[Ω] |
| 100Hz | 1.5 | 153 | | 1.2 | 24.9 | |
| 1kHz | 1.5 | 118.3 | 0.1 | 1.2 | 21.8 | 0.1 |
| 10kHz | 1.5 | 94 | | 1.2 | 15.6 | |
| 100kHz | 1.5 | 17.8 | | 1.1 | 3.3 | |

FIG.41

FIG.42

## FIG.43

## FIG.44

FIG.45

Start

Harvest power by power generation apparatus — Step 101

Charge power to storage element — Step 102

Is voltage of storage element equal to or greater than threshold? — Step 103

No

Yes — Step 104

Output, to selection switch, signal for switching to power generation apparatus

Step 101'

Supply standby power from power supply unit of electrical equipment to equipment (with selection switch being connected to power supply unit)

Has signal for switching to power generation apparatus been detected? — Step 105

No

Yes

Supply standby power from storage element of power generation apparatus to load — Step 106

End

FIG.46

Start

Harvest power by power generation apparatus — Step 201

Charge power to storage element — Step 202

Is voltage of storage element equal to or greater than threshold? — Step 203

No

Yes

Standby mode in fully charged state — Step 204

Is request signal output? — Step 205

No

Yes — Step 206

Output, to selection switch, signal for switching to power generation apparatus

Step 201'

Supply standby power from power supply unit of equipment to equipment (with selection switch being connected to power supply unit)

Has signal for switching to power generation apparatus been detected? — Step 207

No

Yes

Supply standby power from storage element of power generation apparatus to equipment — Step 208

End

FIG.47

## INTERNATIONAL SEARCH REPORT

| International application No. |
| --- |
| **PCT/JP2024/030220** |

**A. CLASSIFICATION OF SUBJECT MATTER**

*H02J 50/20*(2016.01)i; *H02J 7/00*(2006.01)i; *H02M 7/06*(2006.01)i
FI: H02J50/20; H02M7/06 G; H02J7/00 301D; H02M7/06 Z

According to International Patent Classification (IPC) or to both national classification and IPC

**B. FIELDS SEARCHED**

Minimum documentation searched (classification system followed by classification symbols)

H02J50/20; H02J7/00; H02M7/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2021/261076 A1 (SONY SEMICONDUCTOR SOLUTIONS CORPORATION) 30 December 2021 (2021-12-30) <br> paragraphs [0002]-[0007], [0009]-[0087], fig. 1-40 | 1-32 |

☐ Further documents are listed in the continuation of Box C.　　☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **10 October 2024** | **22 October 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**
Information on patent family members

International application No.

**PCT/JP2024/030220**

| Patent document cited in search report | Publication date (day/month/year) | Patent family member(s) | Publication date (day/month/year) |
|---|---|---|---|
| WO 2021/261076 A1 | 30 December 2021 | US 2023/0238691 A1 paragraphs [0002]-[0006], [0010]-[0131], fig. 1-40B EP 4170861 A1 KR 10-2023-0026305 A CN 115885449 A | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021261076 A